# EUROPEAN PATENT APPLICATION

(11) **EP 4 836 366 A1**
(43) Date of publication of application: **04.11.2026**
(21) Application number: 25738332.3
(22) Date of filing: 03.01.2025
(51) Int. Cl.: H04L 27/26

(54) **COMMUNICATION METHOD AND APPARATUS**

(30) Priority: 12.01.2024 CN 202410056757; 23.02.2024 CN 202410206221; 04.09.2024 CN 202411244129
(71) Applicant: Huawei Technologies Co., Ltd., Shenzhen, Guangdong 518129 (CN)
(72) Inventor: GONG, Bo, Shenzhen, Guangdong 518129 (CN); YU, Jian, Shenzhen, Guangdong 518129 (CN); GAN, Ming, Shenzhen, Guangdong 518129 (CN)
(74) Representative: Goddar, Heinz J.
(86) International application number: PCT/CN2025/070474
(87) International publication number: WO 2025/148801

(57) **Abstract**

A communication method and apparatus are provided, and relate to the field of communication technologies, so that a 20 MHz distributed bandwidth obtained through splitting complies with a spectrum mask of a bandwidth greater than 20 MHz. This improves communication performance when distributed resource unit DRU scheduling and transmission are performed based on the 20 MHz distributed bandwidth in the bandwidth greater than 20 MHz. The method includes: transmitting an orthogonal frequency division multiplexing OFDM symbol via a DRU in a 20 MHz distributed bandwidth in a first bandwidth, where a subcarrier index of the DRU in the 20 MHz distributed bandwidth is a subcarrier index of a DRU in a 20 MHz bandwidth plus a-x, a is a number of guard subcarriers on a first side of the first bandwidth, and x is a number of guard subcarriers on a first side of the 20 MHz bandwidth; or a subcarrier index of the DRU in the 20 MHz distributed bandwidth is a subcarrier index of a DRU in a 20 MHz bandwidth minus b-y, b is a number of guard subcarriers on a second side of the first bandwidth, and y is a number of guard subcarriers on a second side of the 20 MHz bandwidth; and a, x, b, and y are all positive integers. This is applicable to a wireless local area network that supports related standards of the Institute of Electrical and Electronics Engineers.

## Description

This application claims priorities to Chinese Patent Application No. 202410056757.6, filed with the China National Intellectual Property Administration on January 12, 2024 and entitled "COMMUNICATION METHOD AND APPARATUS", to Chinese Patent Application No. 202410206221.8, filed with the China National Intellectual Property Administration on February 23, 2024 and entitled "COMMUNICATION METHOD AND APPARATUS", and to Chinese Patent Application No. 202411244129.7, filed with the China National Intellectual Property Administration on September 4, 2024 and entitled "COMMUNICATION METHOD AND APPARATUS", all of which are incorporated herein by reference in their entireties.

### TECHNICAL FIELD

This application relates to the field of communication technologies, and in particular, to a communication method and apparatus.

### BACKGROUND

In a communication system, communication may be performed between communication apparatuses via a distributed resource unit (distributed resource unit, DRU).

Usually, subcarriers of each DRU may be discretized to an entire bandwidth, to obtain a larger power amplification multiple. For bandwidths greater than 20 MHz (for example, 40 MHz/80 MHz/160 MHz/320 MHz), in uplink transmission in which puncturing exists and a station that supports only 20 MHz (20 MHz-only station) participates, a complete DRU cannot be found in DRUs of the bandwidths greater than 20 MHz for data transmission. In view of this, the bandwidth greater than 20 MHz may be split into a plurality of small bandwidths including at least one 20 MHz distributed bandwidth, and DRU scheduling and transmission are performed based on the 20 MHz distributed bandwidth obtained through splitting.

However, a tone plan of the 20 MHz bandwidth does not completely match a tone plan of the bandwidth greater than 20 MHz, that is, the 20 MHz distributed bandwidth obtained through splitting does not comply with a spectrum mask of the bandwidth greater than 20 MHz. Consequently, when the 20 MHz distributed bandwidth obtained through splitting is used for DRU scheduling and transmission, communication performance is affected.

### SUMMARY

This application provides a communication method and apparatus, so that a 20 MHz distributed bandwidth obtained through splitting complies with a spectrum mask of a bandwidth greater than 20 MHz. This improves communication performance when distributed resource unit DRU scheduling and transmission are performed based on the 20 MHz distributed bandwidth in the bandwidth greater than 20 MHz.

According to a first aspect, this application provides a communication method. The method may be performed by a first communication apparatus. Unless otherwise specified, the "first communication apparatus" in this application may refer to the first communication apparatus itself, or may refer to a component (for example, a processor, a chip, or a chip system) in the first communication apparatus, or may refer to a logic module or software that can implement all or some functions of the first communication apparatus. The method includes: transmitting an orthogonal frequency division multiplexing OFDM symbol via a DRU in a 20 MHz distributed bandwidth in a first bandwidth, where a subcarrier index of the DRU in the 20 MHz distributed bandwidth is a subcarrier index of a DRU in a 20 MHz bandwidth plus a-x, a is a number of guard subcarriers on a first side of the first bandwidth, x is a number of guard subcarriers on a first side of the 20 MHz bandwidth, and both a and x are positive integers; or a subcarrier index of the DRU in the 20 MHz distributed bandwidth is a subcarrier index of a DRU in a 20 MHz bandwidth minus b-y, b is a number of guard subcarriers on a second side of the first bandwidth, y is a number of guard subcarriers on a second side of the 20 MHz bandwidth, and both b and y are positive integers.

According to the first aspect, compared with a subcarrier of the DRU in the 20 MHz bandwidth, a subcarrier of the DRU in the 20 MHz distributed bandwidth provided in this application is shifted rightward by a-x subcarriers, so that a number of guard subcarriers on a first side of the 20 MHz distributed bandwidth is a, and is the same as the number of guard subcarriers on the first side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved.

Alternatively, compared with a subcarrier of the DRU in the 20 MHz bandwidth, a subcarrier of the DRU in the 20 MHz distributed bandwidth provided in this application is shifted leftward by b-y subcarriers, so that a number of guard subcarriers on a second side of the 20 MHz distributed bandwidth is b, and is the same as the number of guard subcarriers on the second side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved.

In a possible design, a is 12, b is 11, x is 8, and y is 7.

In a possible design, the transmitting the OFDM symbol via the DRU in the 20 MHz distributed bandwidth in the first bandwidth includes: transmitting the OFDM symbol via a DRU, in the 20 MHz distributed bandwidth, that does not include one or more of the following subcarriers: a subcarrier whose index is -1, a subcarrier whose index is 0, or a subcarrier whose index is 1.

Based on the possible design, in the foregoing method, when the subcarrier is shifted, locations of direct current subcarriers (for example, the subcarrier whose subcarrier index is -1, 0, or 1) are moved. This is not applicable to a 20 MHz-only station. Therefore, for the 20 MHz-only station, communication may be performed via the DRU that does not include the direct current subcarrier, to improve communication performance.

According to a second aspect, this application provides a communication method. The method may be performed by a first communication apparatus. Unless otherwise specified, the "first communication apparatus" in this application may refer to the first communication apparatus itself, or may refer to a component (for example, a processor, a chip, or a chip system) in the first communication apparatus, or may refer to a logic module or software that can implement all or some functions of the first communication apparatus. The method includes: transmitting an orthogonal frequency division multiplexing OFDM symbol via a distributed resource unit DRU in a 20 MHz distributed bandwidth in a first bandwidth, where a subcarrier index of the DRU in the 20 MHz distributed bandwidth in an n^{th} area is a subcarrier index of a DRU in a 20 MHz bandwidth in an (n')^{th} area plus an n^{th} numerical value, n=n'=1, 2, ..., N, and N is a positive integer.

According to the second aspect, when DRU scheduling and transmission are performed in the first bandwidth based on the 20 MHz distributed bandwidth, useful subcarriers in N areas of the 20 MHz bandwidth may be shifted on a spectrum of the 20 MHz bandwidth, to obtain useful subcarriers in the 20 MHz distributed bandwidth. The number of guard subcarriers can be increased through shifting, so that a tone plan of the 20 MHz distributed bandwidth complies with a spectrum mask of the first bandwidth, an adjacent channel interference requirement, and a transmit/receive filter design, which facilitates development and testing. In addition, locations of direct current subcarriers may not be changed. This is applicable to a 20 MHz-only station, and improves communication performance.

In a possible design, a subcarrier index of the DRU in the 20 MHz distributed bandwidth in a 1^{st} area is a subcarrier index of the DRU in the 20 MHz bandwidth in a (1')^{st} area plus a-x; a subcarrier index of the DRU in the 20 MHz distributed bandwidth in a 2^{nd} area is a subcarrier index of the DRU in the 20 MHz bandwidth in a (2')^{nd} area plus P; and a subcarrier index of the DRU in the 20 MHz distributed bandwidth in a 3^{rd} area is a subcarrier index of the DRU in the 20 MHz bandwidth in a (3')^{rd} area plus Q, where a is a number of guard subcarriers on a first side of the first bandwidth, x is a number of guard subcarriers on a first side of the 20 MHz bandwidth, and a, x, P, and Q are all positive integers.

In a possible design, a is 12, x is 8, P is 7, and Q is 5.

In a possible design, the 1^{st} area includes an (a+1)^{th} subcarrier to a (T+a-x)^{th} subcarrier that are arranged in a frequency domain sequence in the 20 MHz distributed bandwidth, and the (1')^{st} area includes an (x+1)^{th} subcarrier to a T^{th} subcarrier that are arranged in a frequency domain sequence in the 20 MHz bandwidth. The 2^{nd} area includes a (T+1+P)^{th} subcarrier to a (128-(K-1)/2+P)^{th} subcarrier that are arranged in a frequency domain sequence in the 20 MHz distributed bandwidth, and the (2')^{nd} area includes a (T+1)^{th} subcarrier to a (128-(K-1)/2)^{th} subcarrier that are arranged in a frequency domain sequence in the 20 MHz bandwidth. The 3^{rd} area includes a (130+(K-1)/2+Q)^{th} subcarrier to a (256-y+Q)^{th} subcarrier that are arranged in a frequency domain sequence in the 20 MHz distributed bandwidth, and the (3')^{rd} area includes a (130+(K-1)/2)^{th} subcarrier to a (256-y)^{th} subcarrier that are arranged in a frequency domain sequence in the 20 MHz bandwidth, where K is a number of direct current subcarriers in the 20 MHz bandwidth, y is a number of guard subcarriers on a second side of the 20 MHz bandwidth, and K, T, and y are all positive integers.

In a possible design, T is 123, K is 3, and y is 7.

Based on the four possible designs, compared with a subcarrier of the DRU in the 20 MHz bandwidth, a subcarrier, in the 1^{st} area, of the DRU in the 20 MHz distributed bandwidth is shifted rightward by a-x subcarriers, the a-x subcarriers on the left may be used as guard subcarriers, that is, a number of guard subcarriers on a first side of the 20 MHz distributed bandwidth is a (including x guard subcarriers and the a-x guard subcarriers), and is the same as the number of guard subcarriers on the first side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved. In addition, locations of direct current subcarriers are not changed, which is applicable to the 20 MHz-only station.

In a possible design, a subcarrier index of the DRU in the 20 MHz distributed bandwidth in a 1^{st} area is a subcarrier index of the DRU in the 20 MHz bandwidth in a (1')^{st} area plus -Q; a subcarrier index of the DRU in the 20 MHz distributed bandwidth in a 2^{nd} area is a subcarrier index of the DRU in the 20 MHz bandwidth in a (2')^{nd} area plus -P; and a subcarrier index of the DRU in the 20 MHz distributed bandwidth in a 3^{rd} area is a subcarrier index of the DRU in the 20 MHz bandwidth in a (3')^{rd} area plus -(b-y), where b is a number of guard subcarriers on a second side of the first bandwidth, y is a number of guard subcarriers on a second side of the 20 MHz bandwidth, and b, y, P, and Q are all positive integers.

In a possible design, b is 11, y is 7, P is 7, and Q is 5.

In a possible design, the 1^{st} area includes an (x+1-Q)^{th} subcarrier to a (128-(K-1)/2-Q)^{th} subcarrier that are arranged in a frequency domain sequence in the 20 MHz distributed bandwidth, and the (1')^{st} area includes an (x+1)^{th} subcarrier to a (128-(K-1)/2)^{th} subcarrier that are arranged in a frequency domain sequence in the 20 MHz bandwidth. The 2^{nd} area includes a (130+(K-1)/2-P)^{th} subcarrier to an (S-P)^{th} subcarrier that are arranged in a frequency domain sequence in the 20 MHz distributed bandwidth, and the (2')^{nd} area includes a (130+(K-1)/2)^{th} subcarrier to an S^{th} subcarrier that are arranged in a frequency domain sequence in the 20 MHz bandwidth. The 3^{rd} area includes an (S+1-b+y)^{th} subcarrier to a (256-b)^{th} subcarrier that are arranged in a frequency domain sequence in the 20 MHz distributed bandwidth, and the (3')^{rd} area includes an (S+1)^{th} subcarrier to a (256-y)^{th} subcarrier that are arranged in a frequency domain sequence in the 20 MHz bandwidth, where K is a number of direct current subcarriers in the 20 MHz bandwidth, x is a number of guard subcarriers on a first side of the 20 MHz bandwidth, and K, S, and x are all positive integers.

In a possible design, S is 134, K is 3, and x is 8.

Based on the four possible designs, compared with a subcarrier of the DRU in the 20 MHz bandwidth, a subcarrier, in the 3^{rd} area, of the DRU in the 20 MHz distributed bandwidth is shifted leftward by b-y subcarriers, the b-y subcarriers on the right may be used as guard subcarriers, that is, a number of guard subcarriers on a second side of the 20 MHz distributed bandwidth is b (including y guard subcarriers and the b-y guard subcarriers), and is the same as the number of guard subcarriers on the second side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved. In addition, locations of direct current subcarriers are not changed, which is applicable to the 20 MHz-only station.

In a possible design, a subcarrier index of the DRU in the 20 MHz distributed bandwidth in a 1^{st} area is a subcarrier index of the DRU in the 20 MHz bandwidth in a (1')^{st} area plus a-x; and a subcarrier index of the DRU in the 20 MHz distributed bandwidth in a 2^{nd} area is a subcarrier index of the DRU in the 20 MHz bandwidth in a (2')^{nd} area plus a-x-K, where a is a number of guard subcarriers on a first side of the first bandwidth, x is a number of guard subcarriers on a first side of the 20 MHz bandwidth, K is a number of direct current subcarriers in the 20 MHz bandwidth, and a, x, and K are all positive integers.

In a possible design, a is 12, x is 8, and K is 3.

In a possible design, the 1^{st} area includes an (a+1)^{th} subcarrier to a (128-(K-1)/2+ax)^{th} subcarrier that are arranged in a frequency domain sequence in the 20 MHz distributed bandwidth, and the (1')^{st} area includes an (x+1)^{th} subcarrier to a (128-(K-1)/2)^{th} subcarrier that are arranged in a frequency domain sequence in the 20 MHz bandwidth. The 2^{nd} area includes a (130+(K-1)/2+a-x-K)^{th} subcarrier to a (256-y+a-x-K)^{th} subcarrier that are arranged in a frequency domain sequence in the 20 MHz distributed bandwidth, and the (2')^{nd} area includes a (130+(K-1)/2)^{th} subcarrier to a (256-y)^{th} subcarrier that are arranged in a frequency domain sequence in the 20 MHz bandwidth, where y is a number of guard subcarriers on a second side of the 20 MHz bandwidth, and y is a positive integer.

In a possible design, y is 7.

Based on the four possible designs, compared with a subcarrier of the DRU in the 20 MHz bandwidth, a subcarrier, in the 1^{st} area, of the DRU in the 20 MHz distributed bandwidth is shifted rightward by a-x subcarriers, the a-x subcarriers on the left may be used as guard subcarriers, that is, a number of guard subcarriers on a first side of the 20 MHz distributed bandwidth is a (including x guard subcarriers and the a-x guard subcarriers), and is the same as the number of guard subcarriers on the first side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved. In addition, no direct current subcarrier needs to be sent.

In a possible design, a subcarrier index of the DRU in the 20 MHz distributed bandwidth in a 1^{st} area is a subcarrier index of the DRU in the 20 MHz bandwidth in a (1')^{st} area plus -(b-y-K); and a subcarrier index of the DRU in the 20 MHz distributed bandwidth in a 2^{nd} area is a subcarrier index of the DRU in the 20 MHz bandwidth in a (2')^{nd} area plus -(b-y), where b is a number of guard subcarriers on a second side of the first bandwidth, y is a number of guard subcarriers on a second side of the 20 MHz bandwidth, K is a number of direct current subcarriers in the 20 MHz bandwidth, and b, y, and K are all positive integers.

In a possible design, b is 11, y is 7, and K is 3.

In a possible design, the 1^{st} area includes an (x+1-b+y+K)^{th} subcarrier to a (128-(K-1)/2-b+y+K)^{th} subcarrier that are arranged in a frequency domain sequence in the 20 MHz distributed bandwidth, and the (1')^{st} area includes an (x+1)^{th} subcarrier to a (128-(K-1)/2)^{th} subcarrier that are arranged in a frequency domain sequence in the 20 MHz bandwidth. The 2^{nd} area includes a (130+(K-1)/2-b+y)^{th} subcarrier to a (256-b)^{th} subcarrier that are arranged in a frequency domain sequence in the 20 MHz distributed bandwidth, and the (2')^{nd} area includes a (130+(K-1)/2)^{th} subcarrier to a (256-y)^{th} subcarrier that are arranged in a frequency domain sequence in the 20 MHz bandwidth, where x is a number of guard subcarriers on a first side of the 20 MHz bandwidth, and x is a positive integer.

In a possible design, x is 8.

Based on the four possible designs, compared with a subcarrier of the DRU in the 20 MHz bandwidth, a subcarrier, in the 2^{nd} area, of the DRU in the 20 MHz distributed bandwidth is shifted leftward by b-y subcarriers, the b-y subcarriers on the right may be used as guard subcarriers, that is, a number of guard subcarriers on a second side of the 20 MHz distributed bandwidth is b (including y guard subcarriers and the b-y guard subcarriers), and is the same as the number of guard subcarriers on the second side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved. In addition, the direct current subcarriers may not need to be sent.

In a possible design, the DRU in the 20 MHz distributed bandwidth does not include a direct current subcarrier.

In a possible design, the transmitting the OFDM symbol via the DRU in the 20 MHz distributed bandwidth in the first bandwidth includes: transmitting the OFDM symbol via a DRU, in the 20 MHz distributed bandwidth, that does not include one or more of the following subcarriers: a subcarrier whose index is -1, a subcarrier whose index is 0, or a subcarrier whose index is 1.

Based on the possible design, in the foregoing method, when the subcarrier is shifted, locations of direct current subcarriers (for example, the subcarrier whose subcarrier index is -1, 0, or 1) are occupied. This is not applicable to a 20 MHz-only station. Therefore, for the 20 MHz-only station, communication may be performed via the DRU that does not include the direct current subcarrier, to improve communication performance.

According to a third aspect, this application provides a communication method. The method may be performed by a first communication apparatus. Unless otherwise specified, the "first communication apparatus" in this application may refer to the first communication apparatus itself, or may refer to a component (for example, a processor, a chip, or a chip system) in the first communication apparatus, or may refer to a logic module or software that can implement all or some functions of the first communication apparatus. The method includes: The first communication apparatus transmits an orthogonal frequency division multiplexing OFDM symbol via a distributed resource unit DRU in a 20 MHz sub-channel in a first bandwidth. A subcarrier index of a DRU in a t^{th} 20 MHz sub-channel in the first bandwidth is determined based on a subcarrier index of a DRU in a 20 MHz bandwidth and a t^{th} offset, t=1, 2, ..., T, and T is a number of 20 MHz sub-channels included in the first bandwidth. The t^{th} offset is determined based on a subcarrier index of a t^{th} 242-tone RU in the first bandwidth and a subcarrier index of the DRU in the 20 MHz bandwidth.

According to the third aspect, the subcarrier index of the DRU in the t^{th} 20 MHz sub-channel in the first bandwidth may be determined based on the t^{th} offset, so that a tone plan of the DRU in the t^{th} 20 MHz sub-channel complies with a spectrum mask of the first bandwidth, and an existing filter may be reused for implementation. This can improve communication performance.

In a possible design, the t^{th} offset is a difference between a minimum value of subcarrier indices of the t^{th} 242-tone RU in the first bandwidth and a minimum value of subcarrier indices of the DRU in the 20 MHz bandwidth; or the t^{th} offset is a difference between a maximum value of subcarrier indices of the t^{th} 242-tone RU in the first bandwidth and a maximum value of subcarrier indices of the DRU in the 20 MHz bandwidth.

Based on the possible design, a 1^{st} subcarrier of the DRU in the t^{th} 20 MHz sub-channel in the first bandwidth is aligned with a 1^{st} subcarrier of the t^{th} 242-tone RU in the first bandwidth, that is, a 1^{st} subcarrier index of the DRU in the t^{th} 20 MHz sub-channel in the first bandwidth is equal to a 1^{st} subcarrier index of the t^{th} 242-tone RU in the first bandwidth. Alternatively, a last subcarrier of the DRU in the t^{th} 20 MHz sub-channel in the first bandwidth is aligned with a last subcarrier of the t^{th} 242-tone RU in the first bandwidth, that is, a last subcarrier index of the DRU in the t^{th} 20 MHz sub-channel in the first bandwidth is equal to a last subcarrier index of the t^{th} 242-tone RU in the first bandwidth, to determine the t^{th} offset. This provides two feasible solutions for determining the t^{th} offset.

In a possible design, an absolute value of the t^{th} offset is equal to an absolute value of a (T+1-t)^{th} offset.

Based on the possible design, in any 20 MHz sub-channel in the first bandwidth (for example, 80 MHz/160 MHz/320 MHz/), for a 20 MHz-only station, a number of available DRUs is larger, and communication performance can be improved.

In a possible design, the first bandwidth is an 80 MHz bandwidth, the 2^{nd} offset is - 132, and the 4^{th} offset is 380.

Based on the possible design, the absolute value of the t^{th} offset in the 80 MHz bandwidth may be equal to the absolute value of the (T+1-t)^{th} offset, that is, the 1^{st} offset is -380, and the 4^{th} offset is 380; the 2^{nd} offset is -132, and the 3^{rd} offset is 132. In any 20 MHz sub-channel in the 80 MHz bandwidth, for the 20 MHz-only station, a number of available DRUs is larger, and communication performance can be improved.

In a possible design, the first bandwidth is a 160 MHz bandwidth, the 2^{nd} offset is - 644, the 4^{th} offset is -132, the 6^{th} offset is 380, and the 8^{th} offset is 892.

Based on the possible design, the absolute value of the t^{th} offset in the 160 MHz bandwidth may be equal to the absolute value of the (T+1-t)^{th} offset, and in any 20 MHz sub-channel in the 160 MHz bandwidth, for the 20 MHz-only station, a number of available DRUs is larger, and communication performance can be improved.

In a possible design, the first bandwidth is a 320 MHz bandwidth, the 2^{nd} offset is - 1668, the 4^{th} offset is -1156, the 6^{th} offset is -644, the 8^{th} offset is -132, the 10^{th} offset is 380, the 12^{th} offset is 892, the 14^{th} offset is 1404, and the 16^{th} offset is 1916.

Based on the possible design, the absolute value of the t^{th} offset in the 320 MHz bandwidth may be equal to the absolute value of the (T+1-t)^{th} offset, and in any 20 MHz sub-channel in the 320 MHz bandwidth, for the 20 MHz-only station, a number of available DRUs is larger, and communication performance can be improved.

In a possible design, the t^{th} offset in the first bandwidth being a 160 MHz bandwidth is a sum of the t^{th} offset in the first bandwidth being an 80 MHz bandwidth and -512, and t=1, 2, 3, 4.

In a possible design, a (t+4)^{th} offset in the first bandwidth being a 160 MHz bandwidth is a sum of the t^{th} offset in the first bandwidth being an 80 MHz bandwidth and 512, and t=1, 2, 3, 4.

Based on the two possible designs, a feasible solution is provided for determining the t^{th} offset in the 160 MHz bandwidth, so that the absolute value of the t^{th} offset in the 160 MHz bandwidth may be equal to the absolute value of the (T+1-t)^{th} offset, and in any 20 MHz sub-channel in the 160 MHz bandwidth, for the 20 MHz-only station, a number of available DRUs is larger, and communication performance can be improved.

In a possible design, the t^{th} offset in the first bandwidth being a 320 MHz bandwidth is a sum of the t^{th} offset in the first bandwidth being an 80 MHz bandwidth and -1536, and t=1, 2, 3, 4.

In a possible design, a (t+4)^{th} offset in the first bandwidth being a 320 MHz bandwidth is a sum of the t^{th} offset in the first bandwidth being an 80 MHz bandwidth and -512, and t=1, 2, 3, 4.

In a possible design, a (t+8)^{th} offset in the first bandwidth being a 320 MHz bandwidth is a sum of the t^{th} offset in the first bandwidth being an 80 MHz bandwidth and 512, and t=1, 2, 3, 4.

In a possible design, a (t+12)^{th} offset in the first bandwidth being a 320 MHz bandwidth is a sum of the t^{th} offset in the first bandwidth being an 80 MHz bandwidth and 1536, and t=1, 2, 3, 4.

Based on the four possible designs, a feasible solution is provided for determining the t^{th} offset in the 320 MHz bandwidth, so that the absolute value of the t^{th} offset in the 320 MHz bandwidth may be equal to the absolute value of the (T+1-t)^{th} offset, and in any 20 MHz sub-channel in the 320 MHz bandwidth, for the 20 MHz-only station, a number of available DRUs is larger, and communication performance can be improved.

According to a fourth aspect, this application provides a communication apparatus. The communication apparatus may be used in the first communication apparatus in the first aspect, the second aspect, or the third aspect, to implement a function performed by the first communication apparatus. The communication apparatus may be the first communication apparatus, or may be a chip, a chip system, a system-on-chip, or the like of the first communication apparatus. The communication apparatus may perform, through hardware, the function performed by the first communication apparatus, or implement the function by hardware executing corresponding software. The hardware or the software includes one or more modules corresponding to the foregoing functions, for example, a transmission module and a processing module. The transmission module may independently complete the following transmission operations, or may cooperate with the processing module to complete the following transmission operations. Correspondingly, the processing module may independently complete the following processing operations, or may cooperate with the transmission module to complete the following processing operations. This is not limited.

For example, a transceiver module is configured to transmit an orthogonal frequency division multiplexing OFDM symbol via a distributed resource unit DRU in a 20 MHz distributed bandwidth in a first bandwidth. A subcarrier index of the DRU in the 20 MHz distributed bandwidth is a subcarrier index of a DRU in a 20 MHz bandwidth plus a-x, a is a number of guard subcarriers on a first side of the first bandwidth, x is a number of guard subcarriers on a first side of the 20 MHz bandwidth, and both a and x are positive integers; or a subcarrier index of the DRU in the 20 MHz distributed bandwidth is a subcarrier index of a DRU in a 20 MHz bandwidth minus b-y, b is a number of guard subcarriers on a second side of the first bandwidth, y is a number of guard subcarriers on a second side of the 20 MHz bandwidth, and both b and y are positive integers.

For another example, a transceiver module is configured to transmit an orthogonal frequency division multiplexing OFDM symbol via a distributed resource unit DRU in a 20 MHz distributed bandwidth in a first bandwidth. A subcarrier index of the DRU in the 20 MHz distributed bandwidth in an n^{th} area is a subcarrier index of a DRU in a 20 MHz bandwidth in an (n')^{th} area plus an n^{th} numerical value, n=n'=1, 2, ..., N, and N is a positive integer.

For another example, a transceiver module is configured to transmit an orthogonal frequency division multiplexing OFDM symbol via a distributed resource unit DRU in a 20 MHz sub-channel in a first bandwidth. A subcarrier index of a DRU in a t^{th} 20 MHz sub-channel in the first bandwidth is determined based on a subcarrier index of a DRU in a 20 MHz bandwidth and a t^{th} offset, t=1, 2, ..., T, and T is a number of 20 MHz sub-channels included in the first bandwidth. The t^{th} offset is determined based on a subcarrier index of a t^{th} 242-tone RU in the first bandwidth and a subcarrier index of the DRU in the 20 MHz bandwidth.

Optionally, the transmission module and the processing module of the communication apparatus in the fourth aspect may further perform corresponding functions in any possible design of the first aspect, or perform corresponding functions in any possible design of the second aspect, or perform corresponding functions in any possible design of the third aspect. For details, refer to detailed descriptions in the method examples. For beneficial effect that can be achieved, refer to the foregoing related content.

According to a fifth aspect, an embodiment of this application provides a communication apparatus. The communication apparatus includes one or more transceivers. A processor controls the transceiver to perform the communication method in any one of the first aspect to the third aspect.

In a possible design, the communication apparatus further includes one or more memories, the one or more memories are coupled to one or more processors, and the one or more memories are configured to store a computer program or instructions. In a possible implementation, the memory is located outside the communication apparatus. In another possible implementation, the memory is located inside the communication apparatus. In embodiments of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the transceiver may alternatively be a communication interface, one or more communication interfaces are coupled to the one or more processors, and the one or more communication interfaces are configured to communicate with modules outside the communication apparatus.

According to a sixth aspect, an embodiment of this application provides a communication apparatus. The communication apparatus includes an interface circuit. A logic circuit controls the interface circuit to perform the communication method in any one of the first aspect to the third aspect.

According to a seventh aspect, an embodiment of this application provides a computer-readable storage medium. The computer-readable storage medium stores computer instructions or a program. When the computer instructions or the program is run on a computer, the communication method in any one of the first aspect to the third aspect is performed.

According to an eighth aspect, an embodiment of this application provides a computer program product including computer instructions. When the computer program product runs on a computer, the communication method in any one of the first aspect to the third aspect is performed.

According to a ninth aspect, an embodiment of this application provides a computer program. When the computer program is run on a computer, the communication method in any one of the first aspect to the third aspect is performed.

According to a tenth aspect, an embodiment of this application provides a chip, including a transceiver unit. A processing unit controls the transceiver unit to perform the communication method in any one of the first aspect to the third aspect.

For technical effect brought by any design of the fifth aspect to the tenth aspect, refer to the technical effect brought by any one of the first aspect to the third aspect. Details are not described again.

According to an eleventh aspect, an embodiment of this application provides a communication system. The communication system may include a communication apparatus configured to perform the communication method in the first aspect or any one of the possible designs of the first aspect, or include a communication apparatus configured to perform the communication method in the second aspect or any one of the possible designs of the second aspect, or include a communication apparatus configured to perform the communication method in the third aspect or any one of the possible designs of the third aspect.

### BRIEF DESCRIPTION OF DRAWINGS

FIG. 1 is a diagram of a tone plan of a 20 MHz bandwidth according to an embodiment of this application;
FIG. 2 is a diagram of a tone plan of a 40 MHz bandwidth according to an embodiment of this application;
FIG. 3 is a diagram of a tone plan of an 80 MHz bandwidth according to an embodiment of this application;
FIG. 4 is a diagram of puncturing a second 20 MHz bandwidth in an 80 MHz bandwidth according to an embodiment of this application;
FIG. 5 is a diagram in which a tone plan of an 80 MHz bandwidth does not match a tone plan of a 20 MHz bandwidth according to an embodiment of this application;
FIG. 6 is a diagram of a communication system according to an embodiment of this application;
FIG. 7 is a diagram of composition of a communication apparatus according to an embodiment of this application;
FIG. 8 is a flowchart of a communication method according to an embodiment of this application;
FIG. 9 is a flowchart of a communication method according to an embodiment of this application;
FIG. 10 is a flowchart of a communication method according to an embodiment of this application;
FIG. 11A, FIG. 11B, and FIG. 11C are a diagram of uplink multi-user transmission according to an embodiment of this application;
FIG. 12 is a diagram of a frame structure of a trigger frame according to an embodiment of this application;
FIG. 13 is a diagram of a communication apparatus according to an embodiment of this application;
FIG. 14 is a diagram of a communication apparatus according to an embodiment of this application;
FIG. 15 is a diagram of a tone plan according to an embodiment of this application;
FIG. 16 is a flowchart of a communication method according to an embodiment of this application; and
FIG. 17 is a flowchart of a communication method according to an embodiment of this application.

### DESCRIPTION OF EMBODIMENTS

Before embodiments of this application are described, technical terms used in embodiments of this application are described.

Technical solutions provided in embodiments of this application are applicable to a wireless local area network (wireless local area network, WLAN) that supports related standards defined by the Institute of Electrical and Electronics Engineers (Institute of Electrical and Electronics Engineers, IEEE). The related IEEE standards include the 802.11a/b/g standard, the 802.11n standard, the 802.11ac standard, the 802.11ax standard, the 802.11be standard, the 802.11bn standard/ultra-high reliability (ultra-high reliability, UHR) standard/Wi-Fi 8 standard, the 802.11ad standard, the 802.11ay standard, the 802.11bf standard/sensing (sensing) standard, ultra-wideband (ultra-wideband, UWB) standard/802.15 standard, and the like.

In terms of bandwidth configurations, the 802.11ax standard currently supports the following bandwidth configurations: 20 MHz, 40 MHz, 80 MHz, 160 MHz, and 80 MHz+80 MHz. In the 802.11be standard, a 320 MHz bandwidth configuration is further supported.

A difference between 160 MHz and 80 MHz+80 MHz lies in that the former is a contiguous frequency band, and the latter includes two 80 MHz bands that may be non-contiguous.

In a WLAN communication system, resource allocation may be performed via resource units (resource unit, RU), and communication apparatuses may communicate with each other via an RU. The following describes the RU in detail by using an RU-based tone plan (tone plan) shown in various examples as an example.

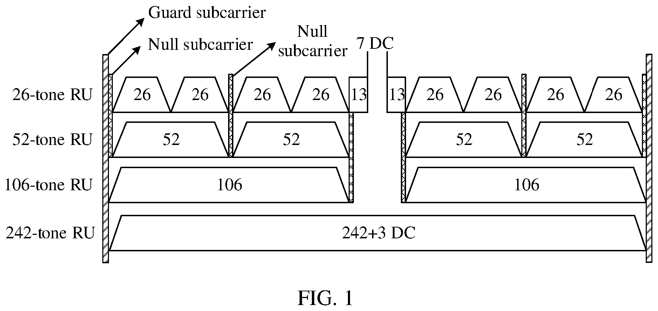

In a first example, as shown in FIG. 1, when a bandwidth is 20 MHz, the entire bandwidth may include an entire 242-tone RU or any combination of a 26-tone RU, a 52-tone RU, and a 106-tone RU. Each RU includes a data subcarrier and a pilot subcarrier, the data subcarrier is used to carry data information, and the pilot subcarrier is used to estimate a phase offset and a frequency offset. In addition to the RU, some guard (guard) subcarriers, null subcarriers, or direct current (direct current, DC) subcarriers may be further included.

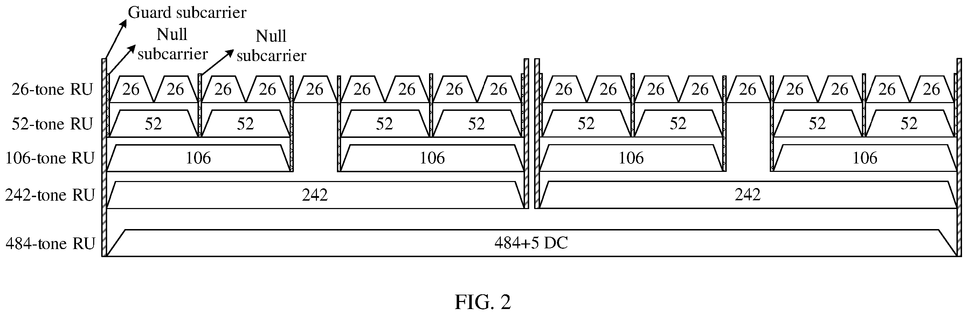

In a second example, as shown in FIG. 2, when a bandwidth is 40 MHz, the entire bandwidth is approximately equivalent to two replications of a tone plan of a 20 MHz bandwidth, and may include an entire 484-tone RU or any combination of a 26-tone RU, a 52-tone RU, a 106-tone RU, and a 242-tone RU.

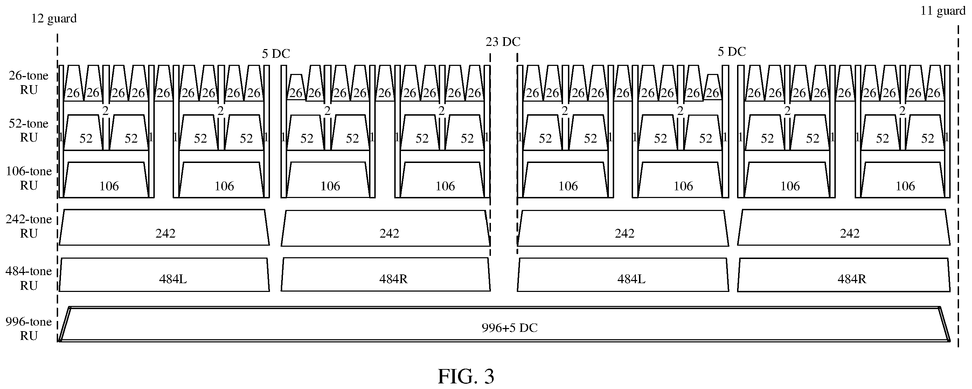

In a third example, as shown in FIG. 3, when a bandwidth is 80 MHz, the entire bandwidth may include four resource units each of which is a 242-tone RU. Alternatively, the entire bandwidth may include an entire 996-tone RU or any combination of a 26-tone RU, a 52-tone RU, a 106-tone RU, a 242-tone RU, and a 484-tone RU. In this case, 484L and 484R represent a left half part and a right half part of the 484-tone RU, each including 242 subcarriers and constituting another diagram of 484+5DC.

In a fourth example, when a bandwidth is 160 MHz, the entire bandwidth may be considered as two replications of a tone plan of an 80 MHz bandwidth, and may include an entire 2*996-tone RU or any combination of a 26-tone RU, a 52-tone RU, a 106-tone RU, a 242-tone RU, 484-tone RU, and a 996-tone RU.

In a fifth example, when a bandwidth is 320 MHz, the entire bandwidth may be considered as four replications of a tone plan of an 80 MHz bandwidth.

Based on all the foregoing tone plan in units of 242-tone RU, a left side of the figure may be considered as a lowest frequency, and a right side of the figure may be considered as a highest frequency. From left to right, the 242-tone RU can be numbered as 1^{st}, 2^{nd}, ..., and 16^{th}. It should be understood that in a data field, a maximum of 16 242-tone RUs one-to-one correspond to 16 20 MHz channels in ascending order of frequencies.

In addition to the several RUs mentioned above, the following combinations are further introduced in the 802.11be standard: a 52+26-tone RU including a 52-tone RU and a 26-tone RU, a 106+26-tone RU including a 106-tone RU and a 26-tone RU, a 484+242-tone RU including a 484-tone RU and a 242-tone RU, a 996+484-tone RU including a 996-tone RU and a 484-tone RU, a 2*996+484-tone RU including two 996-tone RUs and a 484-tone RU, a 3*996-tone RU including three 996-tone RUs, and a 3*996+484-tone RU including three 996-tone RUs and a 484-tone RU. In terms of bandwidth, a 26-tone RU corresponds to 2 MHz, a 52-tone RU corresponds to 4 MHz, a 106-tone RU corresponds to 8 MHz, and a 242-tone RU corresponds to 20 MHz. For an RU of another size, addition or multiplication may be correspondingly performed. Details are not described herein.

In addition, with continuous development of communication technologies, a maximum power and a maximum power spectral density are strictly limited, that is, a transmit power of a communication apparatus cannot exceed a maximum power value, and a transmit power spectral density cannot exceed the maximum power spectral density.

For example, as described in 6 GHz spectrum regulations, a low power indoor (low power indoor, LPI) communication mode is as follows: As shown in Table 1, for a client, for example, a station (station, STA), connected to a low-power access point, an example in which a transmit power is an effective isotropic radiated power (effective isotropic radiated power, EIRP) is used, a maximum power of the client is 24 dBm, and a maximum power spectral density is -1 dBm/MHz. Compared with the limit of the maximum power, the limit of the maximum power spectral density is stricter, and an allowed maximum transmit power is usually more limited by a power spectral density. For the station, when the bandwidth is the maximum of 320 MHz, the maximum power specified in the regulation is reached. Within the bandwidth, transmission can only be performed at a lower power due to the limit of the maximum power spectral density.

**Table 1**

| Device class | Operating bandwidth | Maximum power | Maximum power spectral density |
|---|---|---|---|
| Device Class | Operating Bands | Maximum EIRP | Maximum EIRP power spectral density |
| Standard-power access point | U-NII-5 (5.925 GHz to 6.425 GHz) | 36 dBm | 23 dBm/MHz |
| Standard-Power Access Point | | | |
| (AFC Controlled) | U-NII-7 (6.525 GHz to 6.875 GHz) | | |
| Client connected to the standard-power access point | | 30 dBm | 17 dBm/MHz |
| Client connected to Standard-Power Access Point | | | |
| Low-power access point | U-NII-5 (5.925 GHz to 6.425 GHz) | 30 dBm | 5 dBm/MHz |
| Low-Power Access Point (indoor only) | | | |
| | U-NII-6 (6.425 GHz to 6.525 GHz) | | |
| Client connected to the low-power access point | | 24 dBm | -1 dBm/MHz |
| | U-NII-7 (6.525 GHz to 6.875 GHz) | | |
| Client connected to Low-Power Access Point | U-NII-8 (6.875 GHz to 7.125 GHz) | | |

For another example, as described in 6 GHz spectrum regulations, an LPI communication mode is as follows: As shown in Table 2, for an access point (access point, AP) and/or a STA, an example in which a transmit power is an effective isotropic radiated power (effective isotropic radiated power, EIRP) is used, a maximum power of the AP and/or the STA is 23 dBm, and a maximum power spectral density is 10 dBm/MHz. When the bandwidth does not exceed 20 MHz, the transmit power of the AP/STA is mainly limited by the maximum power spectral density. When the bandwidth is greater than 20 MHz, the transmit power of the AP/STA is mainly limited by the maximum power.

**Table 2**

| Parameter (Parameter) | Technical conditions (Technical conditions) |
|---|---|
| Permissible operation (Permissible operation) | Restricted to indoor use, including in trains with metal-coated windows (note 1) and aircraft. Outdoor use, including in road vehicles, is not permitted. |
| Category of device (Category of device) | An LPI access point or bridge that is supplied with power from a wired connection has an integrated antenna and is not battery powered. |
| | An LPI client device that is connected to an LPI access point or another LPI client device may or may not be battery powered. |
| Frequency band (Frequency band) | 5945 MHz to 6425 MHz |
| Maximum mean EIRP for in-band emissions (note 2) | 23 dBm |
| Maximum mean EIRP for in-band emissions | |
| Maximum mean EIRP density for in-band emissions | 10 dBm/MHz |
| Maximum mean EIRP density for in-band emissions | |
| Maximum mean EIRP density for out-of-band emissions below 5935 MHz | -22 dBm/MHz |
| Maximum mean EIRP density for out-of-band emissions below 5935 MHz | |
| Note 1: Or similar structures made of material with comparable attenuation characteristics. | |
| Note 2: The mean EIRP refers to the EIRP during the transmission burst which corresponds to the highest power, if power control is implemented. | |

Based on the foregoing descriptions of the maximum power and the maximum power spectral density, the RU is designed to meet limitations of the maximum power and the maximum power spectral density, and further power amplification may also be implemented.

A finite number of subcarriers (for example, 26-tone RU) may be discretized to a wider bandwidth, that is, to more subcarriers (for example, odd-numbered subcarriers of two 26-tone RUs), to improve a transmit power. This is referred to as a distributed RU or distributed RU (distributed resource unit, DRU) technology. The technology is usually used in uplink multi-user transmission. A plurality of users send distributed RUs in an interleaved mode, to improve a transmit power of each user under a specific bandwidth. It should be noted that the maximum power spectral density is limited in a form in which the transmit power of 1 MHz does not exceed x mW. When a carrier spacing of 78.125 kHz is taken into consideration, 1 MHz includes 12.8 (about 13) subcarriers. In one transmission process, average powers of the subcarriers are the same. Any 13 contiguous subcarriers are observed. The average power of each subcarrier and even a transmit power of a signal are determined based on a maximum number of subcarriers carrying signals that are included in the 13 subcarriers. For example, in a 20 MHz bandwidth (242 subcarriers in total), a maximum of 5 subcarriers carrying signals are included in all the 13 contiguous subcarriers. In this case, the average power of each subcarrier is x (mW)/5. It is considered that there are 26 subcarriers in total that carry signals. In this case, a total transmit power is x (mW)/5×26.

Usually, in a tone plan (tone plan) of each bandwidth (20 MHz/40 MHz/80 MHz/160 MHz/320 MHz), subcarriers of each DRU may be discretized to the entire bandwidth, to obtain a larger power amplification multiple.

For bandwidths greater than 20 MHz (for example, 40 MHz/80 MHz/160 MHz/320 MHz), in uplink transmission in which puncturing exists and a station that supports only 20 MHz (20 MHz-only station) participates, a complete DRU cannot be found in DRUs of the bandwidths greater than 20 MHz for data transmission. In view of this, the bandwidth greater than 20 MHz may be split into a plurality of small bandwidths including at least one 20 MHz distributed bandwidth, and DRU scheduling and transmission are performed based on the 20 MHz distributed bandwidth obtained through splitting. However, a tone plan of the 20 MHz bandwidth does not completely match a tone plan of the bandwidth greater than 20 MHz, that is, the 20 MHz distributed bandwidth obtained through splitting does not comply with a spectrum mask of the bandwidth greater than 20 MHz. Consequently, when the 20 MHz distributed bandwidth obtained through splitting is used for DRU scheduling and transmission, communication performance is affected.

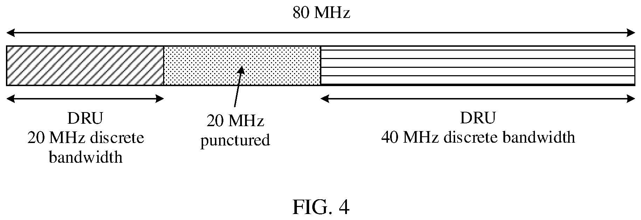

For example, the 80 MHz bandwidth is used as an example. In uplink transmission in which puncturing exists and a 20 MHz-only station participates, as shown in FIG. 4, a complete DRU cannot be found based on the tone plan of the DRU in the 80 MHz bandwidth for data transmission. In this case, the entire large bandwidth is usually split into small bandwidths for DRU scheduling. In the 80 MHz bandwidth shown in FIG. 4, a second 20 MHz bandwidth is punctured, and DRU scheduling is performed in the left 20 MHz distributed bandwidth based on a tone plan of the 20 MHz bandwidth and performed in the right 40 MHz distributed bandwidth based on a tone plan of the 40 MHz bandwidth, which is also referred to as DRU scheduling and transmission performed based on the 20 MHz distributed bandwidth and the 40 MHz distributed bandwidth. The distributed bandwidth herein means a distributed range of subcarriers included in each DRU.

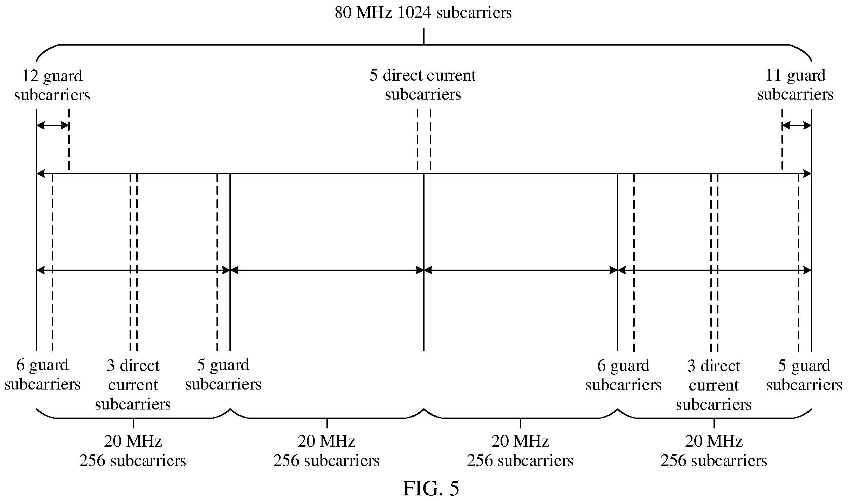

However, as shown in FIG. 5, subcarrier allocation of the tone plan of the 80 MHz bandwidth does not completely match subcarrier allocation of the tone plan of the 20 MHz bandwidth. In the 80 MHz bandwidth, there are 1024 subcarriers in total, where 12 leftmost subcarriers are guard subcarriers, 11 rightmost subcarriers are also guard subcarriers, and 5 middle subcarriers are direct current subcarriers. The 1024 subcarriers in the 80 MHz bandwidth may be grouped into four parts, and each part includes 256 subcarriers, and occupies a 20 MHz bandwidth. When puncturing exists and a 20 MHz-only station participates in transmission, DRU scheduling and signal transmission needs to be performed in the leftmost 20 MHz distributed bandwidth or the rightmost 20 MHz distributed bandwidth based on the tone plan of the 20 MHz bandwidth. Consequently, guard subcarriers are not aligned. For the leftmost 20 MHz distributed bandwidth, there are 6 guard subcarriers on the left. During the transmission, the actual bandwidth is 80 MHz, the 12 leftmost guard subcarriers are required to ensure that the actual bandwidth complies with the spectrum mask, control adjacent channel interference, and meet filtering requirements of a transmitter and a receiver. Obviously, there is a lack of 6 guard subcarriers on the leftmost side. Similarly, for the rightmost 20 MHz distributed bandwidth, there are 5 guard subcarriers on the right. During the transmission, the actual bandwidth is 80 MHz, and 11 rightmost guard subcarriers are required. Obviously, there is a lack of 6 rightmost guard subcarriers. The 80 MHz bandwidth is used as an example herein. Actually, when the 20 MHz distributed bandwidth is invoked to perform DRU scheduling and transmission in the 40 MHz/80 MHz/160 MHz/320 MHz bandwidth, guard subcarriers are not aligned.

To resolve the foregoing technical problem, embodiments of this application provide a communication method. In the method, a first communication apparatus may transmit an orthogonal frequency division multiplexing (orthogonal frequency division multiplexing, OFDM) symbol via a DRU in a 20 MHz distributed bandwidth in a first bandwidth. A subcarrier index of the DRU in the 20 MHz distributed bandwidth is a subcarrier index of a DRU in a 20 MHz bandwidth plus a-x, a is a number of guard subcarriers on a first side of the first bandwidth, x is a number of guard subcarriers on a first side of the 20 MHz bandwidth, and both a and x are positive integers; or a subcarrier index of the DRU in the 20 MHz distributed bandwidth is a subcarrier index of a DRU in a 20 MHz bandwidth minus b-y, b is a number of guard subcarriers on a second side of the first bandwidth, y is a number of guard subcarriers on a second side of the 20 MHz bandwidth, and both b and y are positive integers.

Compared with a subcarrier of the DRU in the 20 MHz bandwidth, a subcarrier of the DRU in the 20 MHz distributed bandwidth provided in embodiments of this application is shifted rightward by a-x subcarriers, so that a number of guard subcarriers on a first side of the 20 MHz distributed bandwidth is a, and is the same as the number of guard subcarriers on the first side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved.

Alternatively, compared with a subcarrier of the DRU in the 20 MHz bandwidth, a subcarrier of the DRU in the 20 MHz distributed bandwidth provided in embodiments of this application is shifted leftward by b-y subcarriers, so that a number of guard subcarriers on a second side of the 20 MHz distributed bandwidth is b, and is the same as the number of guard subcarriers on the second side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved.

The following describes implementations of embodiments of this application in detail with reference to accompanying drawings in this specification.

The communication method provided in embodiments of this application is applicable to a wireless local area network (WLAN) that supports related standards defined by the Institute of Electrical and Electronics Engineers (IEEE). The related IEEE standards include the 802.11a/b/g standard, the 802.11n standard, the 802.11ac standard, the 802.11ax standard, the 802.11be standard, the 802.11bn standard/UHR standard/Wi-Fi 8 standard, the 802.11ad standard, the 802.11ay standard, the 802.11bf standard/sensing standard, UWB standard/802.15 standard, and the like. Alternatively, the communication method is applied to a wireless local area network system that supports Wi-Fi AI, or a wireless local area network system that supports millimeter wave (mmWave), or the like. This is not limited.

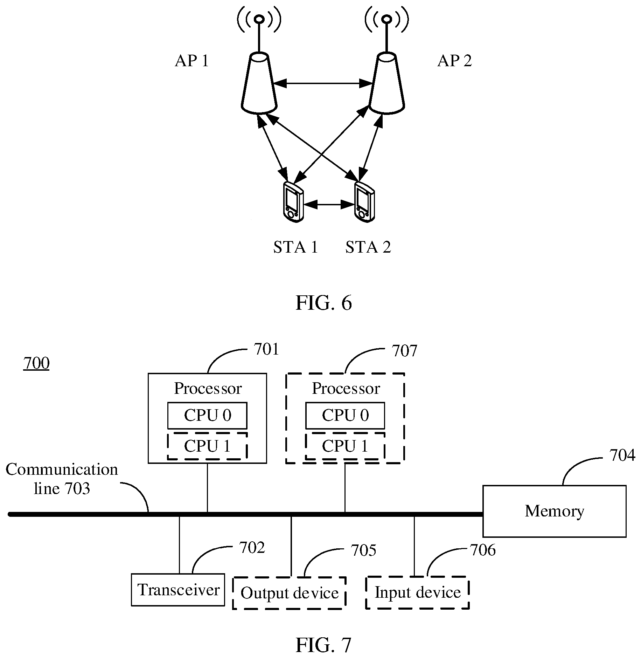

The following uses FIG. 6 as an example to describe a WLAN communication system provided in embodiments of this application.

FIG. 6 is a diagram of a communication system according to an embodiment of this application. As shown in FIG. 6, the communication system may include an access point device and a station device. One or more access point devices may communicate with one or more station devices, the access point device may also communicate with one or more other access point devices, and the station device may also communicate with one or more other station devices.

The access point device may be an AP, and the station device may be a STA.

For example, the AP may be a device that supports a plurality of WLAN standards like the 802.11be standard or future Wi-Fi standards, or may be a device that supports the 802.11a/b/g standard, the 802.11n standard, the 802.11ac standard, the 802.11ax standard, the 802.11be standard, and the 802.11bn standard/UHR standard/Wi-Fi 8 standard. This is not limited.

For example, the AP may be a terminal device, a network device, a communication server, a router, a switch, a bridge, a computer, or the like that has a Wi-Fi chip. The AP may alternatively be an access point for a mobile user to access a wired network, and is mainly deployed in a home, in a building, and in a campus. A typical coverage radius is tens of meters to hundreds of meters. Certainly, the AP may alternatively be deployed outdoors. The AP is equivalent to a bridge that connects a wired network and a wireless network. The AP is mainly used to connect wireless network clients together, and then connect the wireless network to the Ethernet.

For example, the STA may be a device that supports a plurality of WLAN standards like the 802.11be standard or future Wi-Fi standards, or may be a device that supports the 802.11a/b/g standard, the 802.11n standard, the 802.11ac standard, the 802.11ax standard, the 802.11be standard, and the 802.11bn standard/UHR standard/Wi-Fi 8 standard. This is not limited.

For example, the STA may be a wireless communication chip, a wireless sensor, a wireless communication terminal, a communication server, a router, a switch, a bridge, or a computer. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, or the like. This is not limited.

During specific implementation, as shown in FIG. 6, for example, each access point device and each station device may use a composition structure shown in FIG. 7 or include components shown in FIG. 7. FIG. 7 is a diagram of composition of a communication apparatus 700 according to an embodiment of this application. The communication apparatus 700 may be an access point device, or a chip or a system-on-chip in an access point device; or may be a station device, or a chip or a system-on-chip in a station device. As shown in FIG. 7, the communication apparatus 700 includes a processor 701, a transceiver 702, and a communication line 703.

Further, the communication apparatus 700 may further include a memory 704. The processor 701, the memory 704, and the transceiver 702 may be connected through the communication line 703.

The processor 701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 701 may alternatively be another apparatus having a processing function, for example, a circuit, a component, or a software module. This is not limited.

The transceiver 702 is configured to communicate with another device or another communication network. The another communication network may be the Ethernet, a radio access network (radio access network, RAN), or the like. The transceiver 702 may be a module, a circuit, a transceiver, or any apparatus that can implement communication.

The communication line 703 is configured to transfer information between the components included in the communication apparatus 700.

The memory 704 is configured to store instructions. The instructions may be computer programs.

The memory 704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 704 may exist independently of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement a communication method provided in the following embodiments of this application.

In an example, the processor 701 may include one or more CPUs, for example, a CPU 0 and a CPU 1 in FIG. 7.

In an optional implementation, the communication apparatus 700 includes a plurality of processors. For example, the communication apparatus 700 may further include a processor 707 in addition to the processor 701 in FIG. 7.

In an optional implementation, the communication apparatus 700 further includes an output device 705 and an input device 706. For example, the input device 706 is a device like a keyboard, a mouse, a microphone, or a joystick, and the output device 705 is a device like a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to that in FIG. 7. In addition, the composition structure shown in FIG. 7 does not constitute a limitation on the communication apparatus. In addition to the components shown in FIG. 7, the communication apparatus may include more or fewer components than those shown in the figure, a combination of some components, or a different component layout.

In embodiments of this application, the chip system may include a chip, or may include a chip and another distributed device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

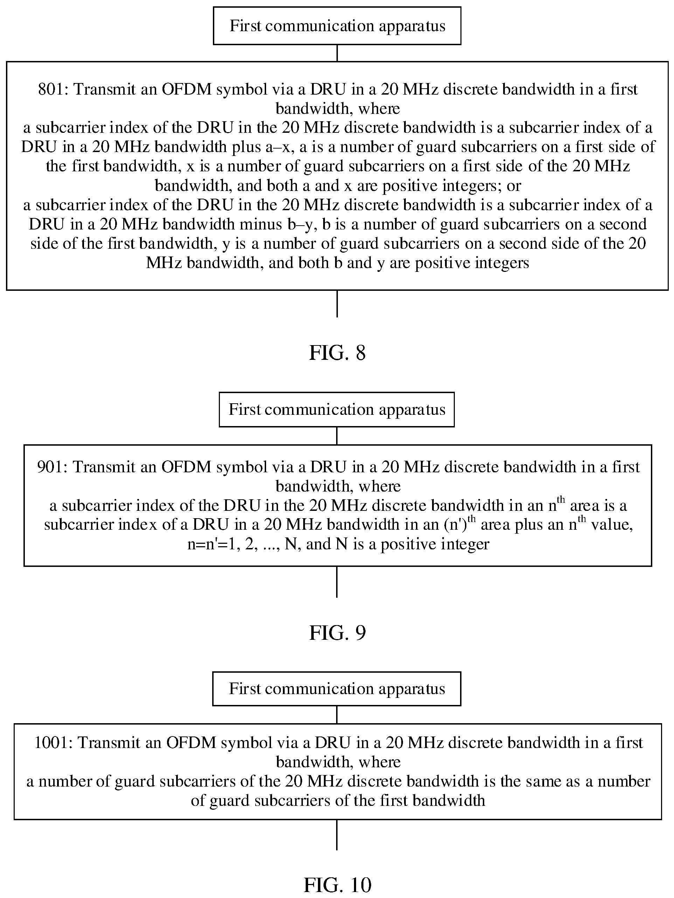

With reference to the communication system shown in FIG. 6, the following describes a communication method provided in embodiments of this application with reference to FIG. 8. A first communication apparatus may be any access point device or station device in the communication system shown in FIG. 6. The first communication apparatus described in the following embodiments may have components shown in FIG. 7.

FIG. 8 is a flowchart of a communication method according to an embodiment of this application. As shown in FIG. 8, the method may include the following steps.

Step 801: A first communication apparatus transmits an OFDM symbol via a DRU in a 20 MHz distributed bandwidth in a first bandwidth.

The first bandwidth may be a bandwidth greater than 20 MHz, for example, may be a 40 MHz/80 MHz/160 MHz/320 MHz bandwidth.

Specifically, when DRU scheduling and transmission are performed in the first bandwidth based on the 20 MHz distributed bandwidth, useful subcarriers in a 20 MHz bandwidth may be shifted (for example, shifted leftward in the following first possible design or shifted rightward in the following second possible design) on a spectrum, to obtain useful subcarriers in the 20 MHz distributed bandwidth. A number of guard subcarriers can be increased through shifting, so that a number of guard subcarriers on a first side of the 20 MHz distributed bandwidth is the same as a number of guard subcarriers on a first side of the first bandwidth, or a number of guard subcarriers on a second side of the 20 MHz distributed bandwidth is the same as a number of guard subcarriers on a second side of the first bandwidth. Therefore, a tone plan of the 20 MHz distributed bandwidth complies with a spectrum mask of the first bandwidth, an adjacent channel interference requirement, and a transmit/receive filter design, which facilitates development and testing. When the first communication apparatus performs DRU scheduling and transmission in the first bandwidth based on the 20 MHz distributed bandwidth, communication performance can be improved.

The distributed bandwidth means a distributed range of subcarriers included in each DRU, and the 20 MHz distributed bandwidth means that a distributed range of subcarriers in each DRU is 20 MHz. The bandwidth is a channel bandwidth, or may also be referred to as a signal bandwidth. The 20 MHz bandwidth may also be referred to as a 20 MHz channel bandwidth, a 20 MHz signal bandwidth, or the like. This is not limited.

The useful subcarriers may also be described as occupied subcarriers (occupied tones). For 256 subcarriers in the 20 MHz bandwidth or the 20 MHz distributed bandwidth, all subcarriers between a 1^{st} active subcarrier and a last active subcarrier are useful subcarriers. The active subcarrier is a subcarrier allocated to a DRU for data or pilot transmission. The useful subcarriers may include data or pilot subcarriers and direct current subcarriers that are allocated to a DRU, and null subcarriers, between the 1^{st} active subcarrier and the last active subcarrier, that are not allocated to any DRU. Alternatively, the useful subcarriers are subcarriers in the 256 subcarriers other than the guard subcarriers on the first side and the guard subcarriers on the second side.

The first side of the first bandwidth may be a leftmost side of the first bandwidth when being arranged in an ascending frequency domain sequence, or may be a side on which subcarriers at lower frequencies are located when the first bandwidth is arranged in a frequency domain sequence. The second side of the first bandwidth may be a rightmost side of the first bandwidth when being arranged in an ascending frequency domain sequence, or may be a side on which subcarriers at higher frequencies are located when the first bandwidth is arranged in a frequency domain sequence. Similarly, the first side of the 20 MHz distributed bandwidth may be a leftmost side of the 20 MHz distributed bandwidth when being arranged in an ascending frequency domain sequence, or may be a side on which subcarriers at lower frequencies are located when the 20 MHz distributed bandwidth is arranged in an ascending frequency domain sequence. The second side of the 20 MHz distributed bandwidth may be a rightmost side of the 20 MHz distributed bandwidth when being arranged in an ascending frequency domain sequence, or may be a side on which subcarriers at higher frequencies are located when the 20 MHz distributed bandwidth is arranged in a frequency domain sequence.

In a first possible design, for example, the number of guard subcarriers on the first side of the first bandwidth is a, the number of guard subcarriers on the second side of the first bandwidth is b, the number of guard subcarriers on the first side of the 20 MHz bandwidth is x, and the number of guard subcarriers on the second side of the 20 MHz bandwidth is y. In this case, a subcarrier index of a DRU in the 20 MHz distributed bandwidth may be a subcarrier index of a DRU in the 20 MHz bandwidth plus a-x, where a, b, x, and y are all positive integers.

The first side of the 20 MHz bandwidth may be a leftmost side of the 20 MHz bandwidth when being arranged in an ascending frequency domain sequence, or may be a side on which subcarriers at lower frequencies are located when the 20 MHz bandwidth is arranged in an ascending frequency domain sequence. The second side of the 20 MHz bandwidth may be a rightmost side of the 20 MHz bandwidth when being arranged in an ascending frequency domain sequence, or may be a side on which subcarriers at higher frequencies are located when the 20 MHz bandwidth is arranged in an ascending frequency domain sequence.

The useful subcarriers in the 20 MHz bandwidth may be an (x+1)^{th} subcarrier to a (256-y)^{th} subcarrier, and subcarrier indices corresponding to the subcarriers are [(x+1):(256-y)] - 129 = [(x-128):(127-y)]. The useful subcarriers in the 20 MHz bandwidth may be shifted rightward by a-x subcarriers, to obtain the useful subcarriers in the 20 MHz distributed bandwidth, that is, the useful subcarriers in the 20 MHz distributed bandwidth are an (a+1)^{th} subcarrier to a (256-y+a-x)^{th} subcarrier. Therefore, the number of guard subcarriers on the first side of the 20 MHz distributed bandwidth is a, and is the same as the number of guard subcarriers on the first side of the first bandwidth, which meets a spectrum mask of the first bandwidth.

It may be understood that, because communication is performed based on the DRU, the foregoing descriptions may alternatively be replaced with: shifting the DRU in the 20 MHz bandwidth rightward by a-x subcarriers on a spectrum, to obtain the DRU in the 20 MHz distributed bandwidth, that is, the subcarrier index of the DRU in the 20 MHz distributed bandwidth is the subcarrier index of the DRU in the 20 MHz bandwidth plus a-x. Alternatively, the foregoing descriptions may be: The DRU in the 20 MHz distributed bandwidth is obtained by shifting the DRU in the 20 MHz bandwidth by a-x subcarriers on a spectrum; or the DRU in the 20 MHz distributed bandwidth is obtained by shifting the DRU in the 20 MHz bandwidth rightward by a-x subcarriers on a spectrum. This is not limited.

Specifically, a subcarrier index of a DRU in the 20 MHz distributed bandwidth is a subcarrier index of a DRU, in the 20 MHz bandwidth, whose sequential number is the same as that of the DRU in the 20 MHz distributed bandwidth plus a-x.

In other words, a subcarrier index of a 1^{st} DRU (or described as a DRU 1) in the 20 MHz distributed bandwidth is a subcarrier index of a 1^{st} DRU in the 20 MHz bandwidth plus a-x; a subcarrier index of a 2^{nd} DRU (or described as a DRU 2) in the 20 MHz distributed bandwidth is a subcarrier index of a 2^{nd} DRU in the 20 MHz bandwidth plus a-x; ...; a subcarrier index of an i^{th} DRU (or described as a DRU i) in the 20 MHz distributed bandwidth is a subcarrier index of an i^{th} DRU in the 20 MHz bandwidth plus a-x; ...; and a subcarrier index of an I^{th} DRU (or described as a DRU I) in the 20 MHz distributed bandwidth is a subcarrier index of an I^{th} DRU in the 20 MHz bandwidth plus a-x, where i=1, 2, ..., I, and I is a positive integer.

For example, 256 subcarriers, at a lowest frequency, of the first bandwidth may be used as the 20 MHz distributed bandwidth for DRU scheduling and transmission. The 256 subcarriers, at the lowest frequency, of the first bandwidth may also be referred to as 256 leftmost subcarriers arranged in an ascending frequency domain sequence in the first bandwidth, or first 256 subcarriers on the first side of the first bandwidth.

In the first possible design, compared with a subcarrier of the DRU in the 20 MHz bandwidth, a subcarrier of the DRU in the 20 MHz distributed bandwidth is shifted rightward by a-x subcarriers, the a-x subcarriers on the left may be used as guard subcarriers, that is, a number of guard subcarriers on a first side of the 20 MHz distributed bandwidth is a (including x guard subcarriers and the a-x guard subcarriers), and is the same as the number of guard subcarriers on the first side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved.

In a second possible design, for example, the number of guard subcarriers on the first side of the first bandwidth is a, the number of guard subcarriers on the second side of the first bandwidth is b, the number of guard subcarriers on the first side of the 20 MHz bandwidth is x, and the number of guard subcarriers on the second side of the 20 MHz bandwidth is y. In this case, a subcarrier index of a DRU in the 20 MHz distributed bandwidth may be a subcarrier index of a DRU in the 20 MHz bandwidth minus b-y, where a, b, x, and y are all positive integers.

The useful subcarriers in the 20 MHz bandwidth may be an (x+1)^{th} subcarrier to a (256-y)^{th} subcarrier, and subcarrier indices corresponding to the subcarriers are [(x+1):(256-y)] - 129 = [(x-128):(127-y)]. The useful subcarriers in the 20 MHz bandwidth may be shifted leftward by b-y subcarriers, to obtain the useful subcarriers in the 20 MHz distributed bandwidth, that is, the useful subcarriers in the 20 MHz distributed bandwidth are an (x+1-b+y)^{th} subcarrier to a (256-b)^{th} subcarrier. Therefore, the number of guard subcarriers on the second side of the 20 MHz distributed bandwidth is b, and is the same as the number of guard subcarriers on the second side of the first bandwidth, which meets a spectrum mask of the first bandwidth.

It may be understood that, because communication is performed based on the DRU, the foregoing descriptions may alternatively be replaced with: shifting the DRU in the 20 MHz bandwidth leftward by b-y subcarriers on a spectrum, to obtain the DRU in the 20 MHz distributed bandwidth, that is, the subcarrier index of the DRU in the 20 MHz distributed bandwidth is the subcarrier index of the DRU in the 20 MHz bandwidth minus b-y. Alternatively, the foregoing descriptions may be: The DRU in the 20 MHz distributed bandwidth is obtained by shifting the DRU in the 20 MHz bandwidth by b-y subcarriers on a spectrum; or the DRU in the 20 MHz distributed bandwidth is obtained by shifting the DRU in the 20 MHz bandwidth leftward by b-y subcarriers on a spectrum. This is not limited.

Specifically, a subcarrier index of a DRU in the 20 MHz distributed bandwidth is a subcarrier index of a DRU, in the 20 MHz bandwidth, whose sequential number is the same as that of the DRU in the 20 MHz distributed bandwidth minus b-y.

In other words, a subcarrier index of a 1^{st} DRU (or described as a DRU 1) in the 20 MHz distributed bandwidth is a subcarrier index of a 1^{st} DRU in the 20 MHz bandwidth minus by; a subcarrier index of a 2^{nd} DRU (or described as a DRU 2) in the 20 MHz distributed bandwidth is a subcarrier index of a 2^{nd} DRU in the 20 MHz bandwidth minus b-y; ...; a subcarrier index of an i^{th} DRU (or described as a DRU i) in the 20 MHz distributed bandwidth is a subcarrier index of an i^{th} DRU in the 20 MHz bandwidth minus b-y; ...; and a subcarrier index of an I^{th} DRU (or described as a DRU I) in the 20 MHz distributed bandwidth is a subcarrier index of an I^{th} DRU in the 20 MHz bandwidth minus b-y, where i=1, 2, ..., I, and I is a positive integer.

For example, 256 subcarriers, at a highest frequency, of the first bandwidth may be used as the 20 MHz distributed bandwidth for DRU scheduling and transmission. The 256 subcarriers, at the highest frequency, of the first bandwidth may also be referred to as 256 rightmost subcarriers arranged in an ascending frequency domain sequence in the first bandwidth, or last 256 subcarriers on the second side of the first bandwidth.

In the second possible design, compared with a subcarrier of the DRU in the 20 MHz bandwidth, a subcarrier of the DRU in the 20 MHz distributed bandwidth is shifted leftward by by subcarriers, the b-y subcarriers on the right may be used as guard subcarriers, that is, a number of guard subcarriers on a second side of the 20 MHz distributed bandwidth is b (including y guard subcarriers and the b-y guard subcarriers), and is the same as the number of guard subcarriers on the second side of the first bandwidth, and a tone plan of the 20 MHz distributed bandwidth complies with a spectrum mask of the first bandwidth. When the first communication apparatus performs DRU scheduling and transmission in the first bandwidth based on the 20 MHz distributed bandwidth, communication performance can be improved.

Based on the foregoing two possible designs, the following uses an example in which Table 3 shows a tone plan of the DRU in the 20 MHz bandwidth. It may be determined that the number x of guard subcarriers on the first side of the 20 MHz bandwidth is 8, and the number y of guard subcarriers on the second side of the 20 MHz bandwidth is 7. For example, the number a of guard subcarriers on the first side of the first bandwidth is 12, and the number b of guard subcarriers on the second side of the first bandwidth is 11. Based on the foregoing first possible design, the DRU in the 20 MHz bandwidth may be shifted rightward by a - x = 4 subcarriers, to obtain the tone plan (or may be described as Shifted 20 MHz Tone Plan-1) of the DRU in the 20 MHz distributed bandwidth shown in Table 4. Alternatively, based on the foregoing second possible design, the DRU in the 20 MHz bandwidth may be shifted leftward by b - y = 4 subcarriers, to obtain the tone plan (or may be described as Shifted 20 MHz Tone Plan-2) of the DRU in the 20 MHz distributed bandwidth shown in Table 5.

**Table 3 Tone plan of a DRU in a 20 MHz bandwidth**

| DRU type | DRU index and subcarrier range | | | | |
|---|---|---|---|---|---|
| 26-tone DRU i=1:9 | DRU 1 [-120:9:-12, 6:9:114] | DRU 2 [-116:9:-8, 10:9:118] | DRU 3 [-118:9:-10, 8:9:116] | DRU 4 [-114:9:-6, 12:9:120] | DRU 5 [-112:9:-4, 5:9:113] |
| | DRU 6 [-119:9:-11, 7:9:115] | DRU 7 [-115:9:-7, 11:9:119] | DRU 8 [-117:9:-9, 9:9:117] | DRU 9 [-113:9:-5, 4:9:112] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [-3, 3] | | DRU 2 26-tone [DRU 6 to 9], [-2, 2] | | |

**Table 4 Tone plan of a DRU in a 20 MHz distributed bandwidth**

| DRU type | DRU index and subcarrier range | | | | |
|---|---|---|---|---|---|
| 26-tone DRU i=1:9 | DRU 1 [-116:9:-8, 10:9:118] | DRU 2 [-112:9:-4, 14:9:122] | DRU 3 [-114:9:-6, 12:9:120] | DRU 4 [-110:9:-2, 16:9:124] | DRU 5 [-108:9:0, 9:9:117] |
| | DRU 6 [-115:9:-7, 11:9:119] | DRU 7 [-111:9:-3, 15:9:123] | DRU 8 [-113:9:-5, 13:9:121] | DRU 9 [-109:9:-1, 8:9:116] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [1, 7] | | DRU 2 26-tone [DRU 6 to 9], [2, 6] | | |

**Table 5 Tone plan of a DRU in a 20 MHz distributed bandwidth**

| DRU type | DRU index and subcarrier range | | | | |
|---|---|---|---|---|---|
| 26-tone DRU i=1:9 | DRU 1 [-124:9:-16, 2:9:110] | DRU 2 [-120:9:-12, 6:9:114] | DRU 3 [-122:9:-14, 4:9:112] | DRU 4 [-118:9:-10, 8:9:116] | DRU 5 [-116:9:-8, 1:9:109] |
| | DRU 6 [-123:9:-15, 3:9:111] | DRU 7 [-119:9:-11, 7:9:115] | DRU 8 [-121:9:-13, 5:9:113] | DRU 9 [-117:9:-9, 0:9:108] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [-7, -1] | | DRU 2 26-tone [DRU 6 to 9], [-6, -2] | | |

The following uses an example in which Table 3 shows the tone plan of the DRU in the 20 MHz bandwidth. Refer to the following eight possible examples. The DRU in the first bandwidth is described in detail when the first bandwidth is a 40 MHz bandwidth, an 80 MHz bandwidth, a 160 MHz bandwidth, or a 320 MHz bandwidth. When the first bandwidth is a 40 MHz bandwidth, an 80 MHz bandwidth, a 160 MHz bandwidth, or a 320 MHz bandwidth, the number of guard subcarriers on the first side of the first bandwidth is 12, and the number of guard subcarriers on the second side of the first bandwidth is 11.

In a first possible example, the first bandwidth is a 40 MHz bandwidth, and DRU scheduling and transmission may be performed via 256 subcarriers, at a lowest frequency, of the 40 MHz bandwidth based on the 20 MHz distributed bandwidth. A 9^{th} subcarrier to a 249^{th} subcarrier in a 20 MHz bandwidth may be shifted rightward, to obtain a 13^{th} subcarrier to a 253^{rd} subcarrier in the 20 MHz distributed bandwidth. Alternatively, it is described as that a DRU in the 20 MHz bandwidth is shifted rightward by 4 subcarriers, to obtain a DRU in the 20 MHz distributed bandwidth. This can ensure that a number of guard subcarriers on the first side of the 20 MHz distributed bandwidth is the same as a number of guard subcarriers on a first side of the 40 MHz bandwidth, and both are 12. After shifting, when the 256 subcarriers, at the lowest frequency, of the 40 MHz bandwidth are used as the 20 MHz distributed bandwidth, a tone plan of the DRU in the 20 MHz distributed bandwidth may be shown in Table 6. Table 6 may be obtained by subtracting 128 from the subcarrier index of each DRU in Table 4, or may be obtained by subtracting 124 from the subcarrier index of each DRU in Table 3.

**Table 6**

| DRU type | DRU index and subcarrier range | | | | |
|---|---|---|---|---|---|
| 26-tone DRU i=1:9 | DRU 1 [-244:9:-136, - 118:9:-10] | DRU 2 [-240:9:-132, - 114:9:-6] | DRU 3 [-242:9:-134, -116:9:-8] | DRU 4 [-238:9:-130, -112:9:-4] | DRU 5 [-236:9:-128, -119:9:-11] |
| | DRU 6 [-243:9:-135, - 117:9:-9] | DRU 7 [-239:9:-131, - 113:9:-5] | DRU 8 [-241:9:-133, -115:9:-7] | DRU 9 [-237:9:-129, -120:9:-12] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [-127, - 121] | | DRU 2 26-tone [DRU 6 to 9], [-126, - 122] | | |

In a second possible example, the first bandwidth is a 40 MHz bandwidth, and DRU scheduling and transmission may be performed via 256 subcarriers, at a highest frequency, of the 40 MHz bandwidth based on the 20 MHz distributed bandwidth. A 9^{th} subcarrier to a 249^{th} subcarrier in a 20 MHz bandwidth may be shifted leftward, to obtain a 5^{th} subcarrier to a 245^{th} subcarrier in the 20 MHz distributed bandwidth. Alternatively, it is described as that a DRU in the 20 MHz bandwidth is shifted leftward by 4 subcarriers, to obtain a DRU in the 20 MHz distributed bandwidth. This can ensure that a number of guard subcarriers on the second side of the 20 MHz distributed bandwidth is the same as a number of guard subcarriers on a second side of the 40 MHz bandwidth, and both are 11. After shifting, when the 256 subcarriers, at the highest frequency, of the 40 MHz bandwidth are used as the 20 MHz distributed bandwidth, a tone plan of the DRU in the 20 MHz distributed bandwidth may be shown in Table 7. Table 7 may be obtained by adding 128 to the subcarrier index of each DRU in Table 5, or may be obtained by adding 124 to the subcarrier index of each DRU in Table 3.

**Table 7**

| DRU type | DRU index and subcarrier range | | | | |
|---|---|---|---|---|---|
| 26-tone DRU i=1:9 | DRU 1 [4:9:112, 130:9:238] | DRU 2 [8:9:116, 134:9:242] | DRU 3 [6:9:114, 132:9:240] | DRU 4 [10:9:118, 136:9:244] | DRU 5 [12:9:120, 129:9:237] |
| | DRU 6 [5:9:113, 131:9:239] | DRU 7 [9:9:117, 135:9:243] | DRU 8 [7:9:115, 133:9:241] | DRU 9 [11:9:119, 128:9:236] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [121, 127] | | DRU 2 26-tone [DRU 6 to 9], [122, 126] | | |

In a third possible example, the first bandwidth is an 80 MHz bandwidth, and DRU scheduling and transmission may be performed via 256 subcarriers, at a lowest frequency, of the 80 MHz bandwidth based on the 20 MHz distributed bandwidth. A 9^{th} subcarrier to a 249^{th} subcarrier in a 20 MHz bandwidth may be shifted rightward, to obtain a 13^{th} subcarrier to a 253^{rd} subcarrier in the 20 MHz distributed bandwidth. Alternatively, it is described as that a DRU in the 20 MHz bandwidth is shifted rightward by 4 subcarriers, to obtain a DRU in the 20 MHz distributed bandwidth. This can ensure that a number of guard subcarriers on the first side of the 20 MHz distributed bandwidth is the same as a number of guard subcarriers on a first side of the 80 MHz bandwidth, and both are 12. After shifting, when the 256 subcarriers, at the lowest frequency, of the 80 MHz bandwidth are used as the 20 MHz distributed bandwidth, a tone plan of the DRU in the 20 MHz distributed bandwidth may be shown in Table 8. Table 8 may be obtained by subtracting 384 from the subcarrier index of each DRU in Table 4, or may be obtained by subtracting 380 from the subcarrier index of each DRU in Table 3.

**Table 8**

| DRU type | DRU index and subcarrier range | | | | |
|---|---|---|---|---|---|
| 26-tone DRU i=1:9 | DRU 1 [-500:9:-392, -374:9:-266] | DRU 2 [-496:9:-388, -370:9:-262] | DRU 3 [-498:9:-390, -372:9:-264] | DRU 4 [-494:9:-386, - 368:9:-260] | DRU 5 [-492:9:-384, - 375:9:-267] |
| | DRU 6 [-499:9:-391, -373:9:-265] | DRU 7 [-495:9:-387, -369:9:-261] | DRU 8 [-497:9:-389, -371:9:-263] | DRU 9 [-493:9:-385, - 376:9:-268] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [-383, - 377] | | DRU 2 26-tone [DRU 6 to 9], [-382, 378] | | |

In a fourth possible example, the first bandwidth is an 80 MHz bandwidth, and DRU scheduling and transmission may be performed via 256 subcarriers, at a highest frequency, of the 80 MHz bandwidth based on the 20 MHz distributed bandwidth. A 9^{th} subcarrier to a 249^{th} subcarrier in a 20 MHz bandwidth may be shifted leftward, to obtain a 5^{th} subcarrier to a 245^{th} subcarrier in the 20 MHz distributed bandwidth. Alternatively, it is described as that a DRU in the 20 MHz bandwidth is shifted leftward by 4 subcarriers, to obtain a DRU in the 20 MHz distributed bandwidth. This can ensure that a number of guard subcarriers on the second side of the 20 MHz distributed bandwidth is the same as a number of guard subcarriers on a second side of the 80 MHz bandwidth, and both are 11. After shifting, when the 256 subcarriers, at the highest frequency, of the 80 MHz bandwidth are used as the 20 MHz distributed bandwidth, a tone plan of the DRU in the 20 MHz distributed bandwidth may be shown in Table 9. Table 9 may be obtained by adding 384 to the subcarrier index of each DRU in Table 5, or may be obtained by adding 380 to the subcarrier index of each DRU in Table 3.

**Table 9**

| DRU type | DRU index and subcarrier range | | | | |
|---|---|---|---|---|---|
| 26-tone DRU i=1:9 | DRU 1 [260:9:368, 386:9:494] | DRU 2 [264:9:372, 390:9:498] | DRU 3 [262:9:370, 388:9:496] | DRU 4 [266:9:374, 92:9:500] | DRU 5 [268:9:376, 385:9:493] |
| | DRU 6 [261:9:369, 387:9:495] | DRU 7 [265:9:373, 391:9:499] | DRU 8 [263:9:371, 389:9:497] | DRU 9 [267:9:375, 384:9:492] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [377, 383] | | 26-tone [DRU 6 to 9], [378, 382] | | |

In a fifth possible example, the first bandwidth is a 160 MHz bandwidth, and DRU scheduling and transmission may be performed via 256 subcarriers, at a lowest frequency, of the 160 MHz bandwidth based on the 20 MHz distributed bandwidth. A 9^{th} subcarrier to a 249^{th} subcarrier in a 20 MHz bandwidth may be shifted rightward, to obtain a 13^{th} subcarrier to a 253^{rd} subcarrier in the 20 MHz distributed bandwidth. Alternatively, it is described as that a DRU in the 20 MHz bandwidth is shifted rightward by 4 subcarriers, to obtain a DRU in the 20 MHz distributed bandwidth. This can ensure that a number of guard subcarriers on the first side of the 20 MHz distributed bandwidth is the same as a number of guard subcarriers on a first side of the 160 MHz bandwidth, and both are 12. After shifting, when the 256 subcarriers, at the lowest frequency, of the 160 MHz bandwidth are used as the 20 MHz distributed bandwidth, a tone plan of the DRU in the 20 MHz distributed bandwidth may be shown in Table 10. Table 10 may be obtained by subtracting 896 from the subcarrier index of each DRU in Table 4, or may be obtained by subtracting 892 from the subcarrier index of each DRU in Table 3.

**Table 10**

| DRU type | DRU index and subcarrier range | | | | |
|---|---|---|---|---|---|
| 26-tone DRU i=1:9 | DRU 1 [-1012:9:-904, - 886:9:-778] | DRU 2 [-1008:9:-900, -882:9:-774] | DRU 3 [-1010:9:-902, - 884:9:-776] | DRU 4 [-1006:9:-898, -880:9:-772] | DRU 5 [-1004:9:-896, - 887:9:-779] |
| | DRU 6 [-1011:9:-903, - 885:9:-777] | DRU 7 [-1007:9:-899, -881:9:-773] | DRU 8 [-1009:9:-901, - 883:9:-775] | DRU 9 [-1005:9:-897, -888:9:-780] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-895, -889] | | 26-tone [DRU 6 to 9], [-894, -890] | | |

In a sixth possible example, the first bandwidth is a 160 MHz bandwidth, and DRU scheduling and transmission may be performed via 256 subcarriers, at a highest frequency, of the 160 MHz bandwidth based on the 20 MHz distributed bandwidth. A 9^{th} subcarrier to a 249^{th} subcarrier in a 20 MHz bandwidth may be shifted leftward, to obtain a 5^{th} subcarrier to a 245^{th} subcarrier in the 20 MHz distributed bandwidth. Alternatively, it is described as that a DRU in the 20 MHz bandwidth is shifted leftward by 4 subcarriers, to obtain a DRU in the 20 MHz distributed bandwidth. This can ensure that a number of guard subcarriers on the second side of the 20 MHz distributed bandwidth is the same as a number of guard subcarriers on a second side of the 160 MHz bandwidth, and both are 11. After shifting, when the 256 subcarriers, at the highest frequency, of the 160 MHz bandwidth are used as the 20 MHz distributed bandwidth, a tone plan of the DRU in the 20 MHz distributed bandwidth may be shown in Table 11. Table 11 may be obtained by adding 896 to the subcarrier index of each DRU in Table 5, or may be obtained by adding 892 to the subcarrier index of each DRU in Table 3.

**Table 11**

| DRU type | DRU index and subcarrier range | | | | |
|---|---|---|---|---|---|
| 26-tone DRU i=1:9 | DRU 1 [772:9:880, 898:9:1006] | DRU 2 [776:9:884, 902:9:1010] | DRU 3 [774:9:882, 900:9:1008] | DRU 4 [778:9:886, 904:9:1012] | DRU 5 [780:9:888, 897:9:1005] |
| | DRU 6 [773:9:881, 899:9:1007] | DRU 7 [777:9:885, 903:9:1011] | DRU 8 [775:9:883, 901:9:1009] | DRU 9 [779:9:887, 896:9:1004] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [889, 895] | | 26-tone [DRU 6 to 9], [890, 894] | | |

In a seventh possible example, the first bandwidth is a 320 MHz bandwidth, and DRU scheduling and transmission may be performed via 256 subcarriers, at a lowest frequency, of the 320 MHz bandwidth based on the 20 MHz distributed bandwidth. A 9^{th} subcarrier to a 249^{th} subcarrier in a 20 MHz bandwidth may be shifted rightward, to obtain a 13^{th} subcarrier to a 253^{rd} subcarrier in the 20 MHz distributed bandwidth. Alternatively, it is described as that a DRU in the 20 MHz bandwidth is shifted rightward by 4 subcarriers, to obtain a DRU in the 20 MHz distributed bandwidth. This can ensure that a number of guard subcarriers on the first side of the 20 MHz distributed bandwidth is the same as a number of guard subcarriers on a first side of the 40 MHz bandwidth, and both are 12. After shifting, when the 256 subcarriers, at the lowest frequency, of the 40 MHz bandwidth are used as the 20 MHz distributed bandwidth, a tone plan of the DRU in the 20 MHz distributed bandwidth may be shown in Table 12. Table 12 may be obtained by subtracting 1920 from the subcarrier index of each DRU in Table 4, or may be obtained by subtracting 1916 from the subcarrier index of each DRU in Table 3.

**Table 12**

| DRU type | DRU index and subcarrier range | | | | |
|---|---|---|---|---|---|
| 26-tone DRU i=1:9 | DRU 1 [-2036:9:-1928, - 1910:9:-1802] | DRU 2 [-2032:9:-1924, - 1906:9:-1798] | DRU 3 [-2034:9:-1926, -1908:9:-1800] | DRU 4 [-2030:9:-1922, - 1904:9:-1796] | DRU 5 [-2028:9:-1920, - 1911:9:-1803] |
| | DRU 6 [-2035:9:-1927, - 1909:9:-1801] | DRU 7 [-2031:9:-1923, - 1905:9:-1797] | DRU 8 [-2033:9:-1925, - 1907:9:-1799] | DRU 9 [-2029:9:-1921, - 1912:9:-1804] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-1919, - 1913] | | 26-tone [DRU 6 to 9], [-1918, -1914] | | |

In an eighth possible example, the first bandwidth is a 320 MHz bandwidth, and DRU scheduling and transmission may be performed via 256 subcarriers, at a highest frequency, of the 320 MHz bandwidth based on the 20 MHz distributed bandwidth. A 9^{th} subcarrier to a 249^{th} subcarrier in a 20 MHz bandwidth may be shifted leftward, to obtain a 5^{th} subcarrier to a 245^{th} subcarrier in the 20 MHz distributed bandwidth. Alternatively, it is described as that a DRU in the 20 MHz bandwidth is shifted leftward by 4 subcarriers, to obtain a DRU in the 20 MHz distributed bandwidth. This can ensure that a number of guard subcarriers on the second side of the 20 MHz distributed bandwidth is the same as a number of guard subcarriers on a second side of the 40 MHz bandwidth, and both are 11. After shifting, when the 256 subcarriers, at the highest frequency, of the 40 MHz bandwidth are used as the 20 MHz distributed bandwidth, a tone plan of the DRU in the 20 MHz distributed bandwidth may be shown in Table 13. Table 13 may be obtained by adding 1920 to the subcarrier index of each DRU in Table 5, or may be obtained by adding 1916 to the subcarrier index of each DRU in Table 3.

**Table 13**

| DRU type | DRU index and subcarrier range | | | | |
|---|---|---|---|---|---|
| 26-tone DRU | DRU 1 [1796:9:1904, | DRU 2 [1800:9:1908, | DRU 3 [1798:9:1906, | DRU 4 [1802:9:1910, | DRU 5 [1804:9:1912, |
| i=1:9 | 1922:9:2030] | 1926:9:2034] | 1924:9:2032] | 1928:9:2036] | 1921:9:2029] |
| | DRU 6 [1797:9:1905, 1923:9:2031] | DRU 7 [1801:9:1909, 1927:9:2035] | DRU 8 [1799:9:1907, 1925:9:2033] | DRU 9 [1803:9:1911, 1920:9:2028] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [1913, 1919] | | 26-tone [DRU 6 to 9], [1914, 1918] | | |

It may be understood that, in the foregoing method, when the subcarriers are shifted, locations of direct current subcarriers (for example, a subcarrier whose subcarrier index is -1, 0, or 1) are moved. This is not applicable to a 20 MHz-only station. The following two solutions may be used to resolve this technical problem. One solution is to enable the 20 MHz-only station to generate a carrier at a new frequency. The other solution is to disable, at a protocol layer, the 20 MHz-only station from transmitting via the DRUs, for example, the following first DRU.

The first communication apparatus does not transmit the OFDM symbol via the first DRU in the 20 MHz distributed bandwidth, or does not use the first DRU to transmit the OFDM symbol. The first DRU includes one or more of the following subcarriers: a subcarrier whose index is -1, a subcarrier whose index is 0, or a subcarrier whose index is 1. It may alternatively be described as: The OFDM symbol is transmitted via a DRU, in the 20 MHz distributed bandwidth, that does not include one or more of the following subcarriers: a subcarrier whose index is -1, a subcarrier whose index is 0, or a subcarrier whose index is 1.

In other words, for the first bandwidth, when the 256 subcarriers, at the lowest frequency, of the first bandwidth are used as the 20 MHz distributed bandwidth, DRU scheduling and transmission are performed based on Table 4, and the 20 MHz-only station needs to be disabled from sending a DRU whose subcarrier indices include [-1, 0, 1], that is, disabling sending of a 26-tone DRU 5, a 26-tone DRU 9, a 52-tone DRU 4, a 106-tone DRU 1, and a 106-tone DRU 2.

Alternatively, for the first bandwidth, when the 256 subcarriers, at the highest frequency, of the first bandwidth are used as the 20 MHz distributed bandwidth, DRU scheduling and transmission are performed based on Table 5, and the 20 MHz-only station needs to be disabled from sending a DRU whose subcarrier indices include [-1, 0, 1], that is, disabling sending of a 26-tone DRU 5, a 26-tone DRU 9, a 52-tone DRU 4, a 106-tone DRU 1, and a 106-tone DRU 2.

It should be noted that, in the method shown in FIG. 8, in the 40 MHz/80 MHz/160 MHz/320 MHz bandwidth, the 256 subcarriers at the lowest frequency and the 256 subcarriers at the highest frequency are shifted, to obtain the useful subcarriers in the 20 MHz distributed bandwidth. It may be understood that, in this embodiment of this application, the distributed bandwidth may be further split at a granularity of 80 MHz, and a PPDU is received at the granularity of 80 MHz.

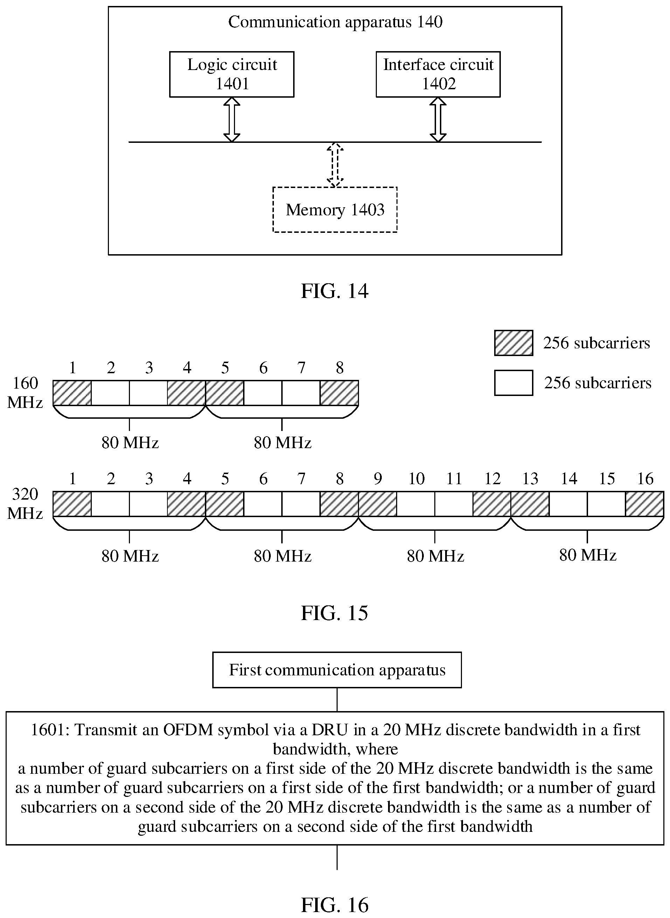

For example, as shown in FIG. 15, the 160 MHz bandwidth may be considered as two 80 MHz bandwidths. Refer to the method shown in FIG. 8. In each of the two 80 MHz bandwidths, the 256 subcarriers at the lowest frequency and the 256 subcarriers at the highest frequency may be shifted, to obtain the useful subcarriers in the 20 MHz distributed bandwidth. Refer to the method shown in FIG. 8. It may alternatively be described as: In the 160 MHz bandwidth, a 1^{st} group of 256 subcarriers at a lowest frequency are shifted (for example, shifted rightward), a 4^{th} group of 256 subcarriers at a lower frequency are shifted (for example, shifted leftward), a 5^{th} group of 256 subcarriers at a higher frequency are shifted (for example, shifted rightward), and an 8^{th} group of 256 subcarriers at a highest frequency are shifted (for example, shifted leftward), to obtain the useful subcarriers in the 20 MHz distributed bandwidth.

For another example, as shown in FIG. 15, the 320 MHz bandwidth may be considered as four 80 MHz bandwidths. Refer to the method shown in FIG. 8. In each of the four 80 MHz bandwidths, the 256 subcarriers at the lowest frequency and the 256 subcarriers at the highest frequency may be shifted, to obtain the useful subcarriers in the 20 MHz distributed bandwidth. Refer to the method shown in FIG. 8. It may alternatively be described as: In the 320 MHz bandwidth, a 1^{st} group of 256 subcarriers at a lowest frequency are shifted (for example, shifted rightward), a 4^{th} group of 256 subcarriers at a lower frequency are shifted (for example, shifted leftward), a 5^{th} group of 256 subcarriers at a lower frequency are shifted (for example, shifted rightward), an 8^{th} group of 256 subcarriers at a lower frequency are shifted (for example, shifted leftward), a 9^{th} group of 256 subcarriers at a higher frequency are shifted (for example, shifted rightward), a 12^{th} group of 256 subcarriers at a higher frequency are shifted (for example, shifted leftward), a 13^{th} group of 256 subcarriers at a higher frequency are shifted (for example, shifted rightward), and a 16^{th} group of 256 subcarriers at a highest frequency are shifted (for example, shifted leftward), to obtain the useful subcarriers in the 20 MHz distributed bandwidth.

Refer to the method shown in FIG. 9 that is different from the foregoing method in which the useful subcarriers in the 20 MHz bandwidth are completely shifted to obtain the useful subcarriers in the 20 MHz distributed bandwidth. The useful subcarriers in the 20 MHz bandwidth are grouped into N areas, and subcarriers in each area are shifted, to increase a number of guard subcarriers through shifting. Therefore, a number of guard subcarriers on a first side of the 20 MHz distributed bandwidth is the same as a number of guard subcarriers on a first side of the first bandwidth, or a number of guard subcarriers on a second side of the 20 MHz distributed bandwidth is the same as a number of guard subcarriers on a second side of the first bandwidth, and locations of direct current subcarriers are not changed, which is applicable to the 20 MHz-only station.

FIG. 9 is a diagram of a communication method according to an embodiment of this application. As shown in FIG. 9, the method may include the following steps.

Step 901: A first communication apparatus transmits an OFDM symbol via a DRU in a 20 MHz distributed bandwidth in a first bandwidth.

A subcarrier index of the DRU in the 20 MHz distributed bandwidth in an n^{th} area is a subcarrier index of a DRU in a 20 MHz bandwidth in an (n')^{th} area plus an n^{th} numerical value, n=n'=1, 2, ..., N, and N is a positive integer.

Specifically, N areas of the 20 MHz bandwidth may be determined based on locations of direct current subcarriers. For example, subcarriers (namely, useful subcarriers whose subcarrier indices are smaller than indices of the direct current subcarriers), located on the left of the direct current subcarriers, in the useful subcarriers may be grouped into one or more areas, and subcarriers (namely, useful subcarriers whose subcarrier indices are greater than the indices of the direct current subcarrier), located on the right of the direct current subcarriers, in the useful subcarriers may be grouped into one or more areas.

When DRU scheduling and transmission are performed in the first bandwidth based on the 20 MHz distributed bandwidth, useful subcarriers, of the 20 MHz bandwidth, in the N areas may be shifted (for example, shifted leftward in the following first possible design or shifted rightward in the following second possible design) on a spectrum of the 20 MHz bandwidth, to obtain useful subcarriers in the 20 MHz distributed bandwidth. The number of guard subcarriers can be increased through shifting, so that a tone plan of the 20 MHz distributed bandwidth complies with a spectrum mask of the first bandwidth, an adjacent channel interference requirement, and a transmit/receive filter design, which facilitates development and testing. In addition, locations of the direct current subcarriers are not changed. This is applicable to a 20 MHz-only station, and improves communication performance.

For example, a number of direct current subcarriers in the 20 MHz bandwidth is K. For the 20 MHz bandwidth, the direct current subcarriers are a (129-(K-1)/2)^{th} subcarrier to a (129+(K-1)/2)^{th} subcarrier, and subcarrier indices of the direct current subcarriers are [-(K-1)/2:(K-1)/2]. Subcarrier indices of useful subcarriers after the direct current subcarriers are removed are [(x-128):-(K-1)/2-1, (K-1)/2+1:(127-y)], that is, an (x+1)^{th} subcarrier to a (128-(K-1)/2)^{th} subcarrier and a (130+(K-1)/2)^{th} subcarrier to a (256-y)^{th} subcarrier are non-direct current parts of the useful subcarriers, and the non-direct current parts may be grouped into N areas.

In a first possible design, for example, a number of guard subcarriers on a first side of the first bandwidth is a, a number of guard subcarriers on a second side of the first bandwidth is b, a number of guard subcarriers on a first side of the 20 MHz bandwidth is x, a number of guard subcarriers on a second side of the 20 MHz bandwidth is y, and the number of direct current subcarriers in the 20 MHz bandwidth is K. Based on the locations of the direct current subcarriers in the 20 MHz bandwidth, the non-direct current parts of the useful subcarriers in the 20 MHz bandwidth may be grouped into three areas: a (1')^{st} area, a (2')^{nd} area, and a (3')^{rd} area in the following.

The (1')^{st} area includes an (x+1)^{th} subcarrier to a T^{th} subcarrier that are arranged in a frequency domain sequence in the 20 MHz bandwidth, the (2')^{nd} area includes a (T+1)^{th} subcarrier to a (128-(K-1)/2)^{th} subcarrier that are arranged in a frequency domain sequence in the 20 MHz bandwidth, and the (3')^{rd} area includes a (130+(K-1)/2)^{th} subcarrier to a (256-y)^{th} subcarrier that are arranged in a frequency domain sequence in the 20 MHz bandwidth, where both K and T are positive integers.

Based on the three areas of the 20 MHz bandwidth, on the spectrum of the 20 MHz bandwidth, the subcarriers in the (1')^{st} area may be shifted rightward by a-x subcarriers (that is, a 1^{st} numerical value is a-x), the subcarriers in the (2')^{nd} area may be shifted rightward by P subcarriers (that is, a 2^{nd} numerical value is P), and the subcarriers in the (3')^{rd} area may be shifted rightward by Q subcarriers (that is, a 3^{rd} numerical value is Q), to obtain subcarriers, in three areas (namely, a 1^{st} area, a 2^{nd} area, and a 3^{rd} area in the following), of the 20 MHz distributed bandwidth. In other words, an index of the subcarrier of the 20 MHz distributed bandwidth in the 1^{st} area is an index of the subcarrier of the 20 MHz bandwidth in the (1')^{st} area plus a-x; an index of the subcarrier of the 20 MHz distributed bandwidth in the 2^{nd} area is an index of the subcarrier of the 20 MHz bandwidth in the (2')^{nd} area plus P; and an index of the subcarrier of the 20 MHz distributed bandwidth in the 3^{rd} area is an index of the subcarrier of the 20 MHz bandwidth in the (3')^{rd} area plus Q, where a, x, P, and Q are all positive integers. Therefore, a number of guard subcarriers on a first side of the 20 MHz distributed bandwidth is a, and is the same as the number of guard subcarriers on the first side of the first bandwidth, which meets the spectrum mask of the first bandwidth. In addition, the locations of the direct current subcarriers are not changed.

The 1^{st} area includes an (a+1)^{th} subcarrier to a (T+a-x)^{th} subcarrier that are arranged in a frequency domain sequence in the 20 MHz distributed bandwidth, the 2^{nd} area includes a (T+1+P)^{th} subcarrier to a (128-(K-1)/2+P)^{th} subcarrier that are arranged in a frequency domain sequence in the 20 MHz distributed bandwidth, and the 3^{rd} area includes a (130+(K-1)/2+Q)^{th} subcarrier to a (256-y+Q)^{th} subcarrier that are arranged in a frequency domain sequence in the 20 MHz distributed bandwidth.

It may be understood that, because communication is performed based on the DRU, the foregoing descriptions may alternatively be replaced with: on the spectrum of the 20 MHz bandwidth, shifting a DRU in the 20 MHz bandwidth in the (1')^{st} area rightward by a-x subcarriers, shifting a DRU in the 20 MHz bandwidth in the (2')^{nd} area rightward by P subcarriers, and shifting a DRU in the 20 MHz bandwidth in the (3')^{rd} area rightward by Q subcarriers, to obtain the DRU in the 20 MHz distributed bandwidth. In other words, a subcarrier index of the DRU in the 20 MHz distributed bandwidth in the 1^{st} area is a subcarrier index of the DRU in the 20 MHz bandwidth in the (1')^{st} area plus a-x, a subcarrier index of the DRU in the 20 MHz distributed bandwidth in the 2^{nd} area is a subcarrier index of the DRU in the 20 MHz bandwidth in the (2')^{nd} area plus P, and a subcarrier index of the DRU in the 20 MHz distributed bandwidth in the 3^{rd} area is a subcarrier index of the DRU in the 20 MHz bandwidth in the (3')^{rd} area plus Q.

Alternatively, the foregoing descriptions may be replaced with: The DRU in the 20 MHz distributed bandwidth in the 1^{st} area is obtained by shifting (or shifting rightward) the DRU in the 20 MHz bandwidth in the (1')^{st} area by a-x subcarriers, the DRU in the 20 MHz distributed bandwidth in the 2^{nd} area is obtained by shifting (or shifting rightward) the DRU in the 20 MHz bandwidth in the (2')^{nd} area by P subcarriers, and the DRU in the 20 MHz distributed bandwidth in the 3^{rd} area is obtained by shifting (or shifting rightward) the DRU in the 20 MHz bandwidth in the (3')^{rd} area by Q subcarriers.

Specifically, a subcarrier index of the DRU in the 20 MHz distributed bandwidth in the 1^{st} area is a subcarrier index of the DRU, whose sequential number is the same as that of the DRU in the 20 MHz distributed bandwidth, in the 20 MHz bandwidth in the (1')^{st} area plus a-x; a subcarrier index of the DRU in the 20 MHz distributed bandwidth in the 2^{nd} area is a subcarrier index of the DRU, whose sequential number is the same as that of the DRU in the 20 MHz distributed bandwidth, in the 20 MHz bandwidth in the (2')^{nd} area plus P; and a subcarrier index of the DRU in the 20 MHz distributed bandwidth in the 3^{rd} area is a subcarrier index of the DRU, whose sequential number is the same as that of the DRU in the 20 MHz distributed bandwidth, in the 20 MHz bandwidth in the (3')^{rd} area plus Q.

For example, 256 subcarriers, at a lowest frequency, of the first bandwidth may be used as the 20 MHz distributed bandwidth for DRU scheduling and transmission.

In the first possible design, compared with the subcarrier of the DRU in the 20 MHz bandwidth, the subcarrier, in the 1^{st} area, of the DRU in the 20 MHz distributed bandwidth is shifted rightward by a-x subcarriers, the a-x subcarriers on the left may be used as guard subcarriers, that is, the number of guard subcarriers on the first side of the 20 MHz distributed bandwidth is a (including x guard subcarriers and the a-x guard subcarriers), and is the same as the number of guard subcarriers on the first side of the first bandwidth, and a tone plan of the 20 MHz distributed bandwidth complies with the spectrum mask of the first bandwidth. When the first communication apparatus performs DRU scheduling and transmission in the first bandwidth based on the 20 MHz distributed bandwidth, communication performance can be improved. In addition, the locations of the direct current subcarriers are not changed, which is applicable to the 20 MHz-only station.

In a second possible design, for example, a number of guard subcarriers on a first side of the first bandwidth is a, a number of guard subcarriers on a second side of the first bandwidth is b, a number of guard subcarriers on a first side of the 20 MHz bandwidth is x, a number of guard subcarriers on a second side of the 20 MHz bandwidth is y, and the number of direct current subcarriers in the 20 MHz bandwidth is K. Based on the locations of the direct current subcarriers in the 20 MHz bandwidth, the non-direct current parts of the useful subcarriers in the 20 MHz bandwidth may be grouped into three areas: a (1')^{st} area, a (2')^{nd} area, and a (3')^{rd} area in the following.

The (1')^{st} area includes an (x+1)^{th} subcarrier to a (128-(K-1)/2)^{th} subcarrier that are arranged in a frequency domain sequence in the 20 MHz bandwidth, the (2')^{nd} area includes a (130+(K-1)/2)^{th} subcarrier to an S^{th} subcarrier that are arranged in a frequency domain sequence in the 20 MHz bandwidth, and the (3')^{rd} area includes an (S+1)^{th} subcarrier to a (256-y)^{th} subcarrier that are arranged in a frequency domain sequence in the 20 MHz bandwidth, where both K and S are positive integers.

Based on the three areas of the 20 MHz bandwidth, on the spectrum of the 20 MHz bandwidth, the subcarriers in the (1')^{st} area may be shifted leftward by Q subcarriers (that is, a 1^{st} numerical value is -Q), the subcarriers in the (2')^{nd} area may be shifted leftward by P subcarriers (that is, a 2^{nd} numerical value is -P), and the subcarriers in the (3')^{rd} area may be shifted leftward by b-y subcarriers (that is, a 3^{rd} numerical value is -(b-y)), to obtain subcarriers, in three areas (namely, a 1^{st} area, a 2^{nd} area, and a 3^{rd} area in the following), of the 20 MHz distributed bandwidth. In other words, an index of the subcarrier of the 20 MHz distributed bandwidth in the 1^{st} area is an index of the subcarrier of the 20 MHz bandwidth in the (1')^{st} area plus -Q (or minus Q); an index of the subcarrier of the 20 MHz distributed bandwidth in the 2^{nd} area is an index of the subcarrier of the 20 MHz bandwidth in the (2')^{nd} area plus -P (or minus P); and an index of the subcarrier of the 20 MHz distributed bandwidth in the 3^{rd} area is an index of the subcarrier of the 20 MHz bandwidth in the (3')^{rd} area plus -(b-y) (or minus b-y), where b, y, P, and Q are all positive integers. Therefore, a number of guard subcarriers on a second side of the 20 MHz distributed bandwidth is b, and is the same as the number of guard subcarriers on the second side of the first bandwidth, which meets the spectrum mask of the first bandwidth. In addition, the locations of the direct current subcarriers are not changed.

The 1^{st} area includes an (x+1-Q)^{th} subcarrier to a (128-(K-1)/2-Q)^{th} subcarrier that are arranged in a frequency domain sequence in the 20 MHz distributed bandwidth, the 2^{nd} area includes a (130+(K-1)/2-P)^{th} subcarrier to an (S-P)^{th} subcarrier that are arranged in a frequency domain sequence in the 20 MHz distributed bandwidth, and the 3^{rd} area includes an (S+1-b+y)^{th} subcarrier to a (256-b)^{th} subcarrier that are arranged in a frequency domain sequence in the 20 MHz distributed bandwidth.

It may be understood that, because communication is performed based on the DRU, the foregoing descriptions may alternatively be replaced with: on the spectrum of the 20 MHz bandwidth, shifting a DRU in the 20 MHz bandwidth in the (1')^{st} area leftward by Q subcarriers, shifting a DRU in the 20 MHz bandwidth in the (2')^{nd} area leftward by P subcarriers, and shifting a DRU in the 20 MHz bandwidth in the (3')^{rd} area leftward by b-y subcarriers, to obtain the DRU in the 20 MHz distributed bandwidth. In other words, a subcarrier index of the DRU in the 20 MHz distributed bandwidth in the 1^{st} area is a subcarrier index of the DRU in the 20 MHz bandwidth in the (1')^{st} area plus -Q, a subcarrier index of the DRU in the 20 MHz distributed bandwidth in the 2^{nd} area is a subcarrier index of the DRU in the 20 MHz bandwidth in the (2')^{nd} area plus -P, and a subcarrier index of the DRU in the 20 MHz distributed bandwidth in the 3^{rd} area is a subcarrier index of the DRU in the 20 MHz bandwidth in the (3')^{rd} area plus -(b-y).

Alternatively, the foregoing descriptions may be replaced with: The DRU in the 20 MHz distributed bandwidth in the 1^{st} area is obtained by shifting (or shifting leftward) the DRU in the 20 MHz bandwidth in the (1')^{st} area by Q subcarriers, the DRU in the 20 MHz distributed bandwidth in the 2^{nd} area is obtained by shifting (or shifting leftward) the DRU in the 20 MHz bandwidth in the (2')^{nd} area by P subcarriers, and the DRU in the 20 MHz distributed bandwidth in the 3^{rd} area is obtained by shifting (or shifting leftward) the DRU in the 20 MHz bandwidth in the (3')^{rd} area by b-y subcarriers.

Specifically, a subcarrier index of the DRU in the 20 MHz distributed bandwidth in the 1^{st} area is a subcarrier index of the DRU, whose sequential number is the same as that of the DRU in the 20 MHz distributed bandwidth, in the 20 MHz bandwidth in the (1')^{st} area plus -Q; a subcarrier index of the DRU in the 20 MHz distributed bandwidth in the 2^{nd} area is a subcarrier index of the DRU, whose sequential number is the same as that of the DRU in the 20 MHz distributed bandwidth, in the 20 MHz bandwidth in the (2')^{nd} area plus -P; and a subcarrier index of the DRU in the 20 MHz distributed bandwidth in the 3^{rd} area is a subcarrier index of the DRU, whose sequential number is the same as that of the DRU in the 20 MHz distributed bandwidth, in the 20 MHz bandwidth in the (3')^{rd} area plus -(b-y).

For example, 256 subcarriers, at a highest frequency, of the first bandwidth may be used as the 20 MHz distributed bandwidth for DRU scheduling and transmission.

In the second possible design, compared with the subcarrier of the DRU in the 20 MHz bandwidth, the subcarrier, in the 3^{rd} area, of the DRU in the 20 MHz distributed bandwidth is shifted leftward by b-y subcarriers, the b-y subcarriers on the right may be used as guard subcarriers, that is, the number of guard subcarriers on the second side of the 20 MHz distributed bandwidth is b (including y guard subcarriers and the b-y guard subcarriers), and is the same as the number of guard subcarriers on the second side of the first bandwidth, and a tone plan of the 20 MHz distributed bandwidth complies with the spectrum mask of the first bandwidth. When the first communication apparatus performs DRU scheduling and transmission in the first bandwidth based on the 20 MHz distributed bandwidth, communication performance can be improved. In addition, the locations of the direct current subcarriers are not changed, which is applicable to the 20 MHz-only station.

The following uses an example in which Table 14 shows a tone plan of the DRU in the 20 MHz bandwidth. It may be determined that the number x of guard subcarriers on the first side of the 20 MHz bandwidth is 8, the number y of guard subcarriers on the second side is 7, and the number K of direct current subcarriers included in the 20 MHz bandwidth is 3, that is, subcarriers whose subcarrier indices are -1, 0, and 1 are direct current subcarriers. For example, the number a of guard subcarriers on the first side of the first bandwidth is 12, and the number b of guard subcarriers on the second side is 11. Based on the first possible design, for example, T is 123, P is 7, and Q is 5. Therefore, a maximum power amplification multiple may still be ensured for each DRU in the 20 MHz distributed bandwidth after shifting. An index of a subcarrier in the (1')^{st} area may be added by 4, an index of a subcarrier in the (2')^{nd} area may be added by 7, and an index of a subcarrier in the (3')^{rd} area may be added by 5, to obtain the tone plan (or may be described as Shifted 20 MHz Tone Plan-1) of the DRU in the 20 MHz distributed bandwidth shown in Table 15. In Table 14, parts that are not underlined are subcarrier indices of the DRU in the 20 MHz bandwidth in the (1')^{st} area, parts that are underlined with " " are subcarrier indices of the DRU in the 20 MHz bandwidth in the (2')^{nd} area, and parts that are underlined with " " are subcarrier indices of the DRU in the 20 MHz bandwidth in the (3')^{rd} area. In Table 15, parts that are not underlined are subcarrier indices of the DRU in the 20 MHz distributed bandwidth in the (1')^{st} area, parts that are underlined with " " are subcarrier indices of the DRU in the 20 MHz distributed bandwidth in the (2')^{nd} area, and parts that are underlined with " " are subcarrier indices of the DRU in the 20 MHz distributed bandwidth in the 3^{rd} area.

**Table 14**

| DRU type | DRU index and subcarrier range | | | | |
|---|---|---|---|---|---|
| 26-tone DRU i=1:9 | DRU 1 [-120:9:-12, **6:9:114**] | DRU 2 [-116:9:-8, **10:9:118**] | DRU 3 [-118:9:-10, **8:9:116**] | DRU 4 [-114:9:-6, **12:9:120**] | DRU 5 [-112:9:-13,-**4**, **5:9:113**] |
| | DRU 6 [-119:9:-11, **7:9:115**] | DRU 7 [-115:9:-7, **11:9:119**] | DRU 8 [-117:9:-9, **9:9:117**] | DRU 9 [-113:9:-14, **-5**, **4:9:112**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [**-3**, **3**] | | 26-tone [DRU 6 to 9], [**-2**, **2**] | | |

**Table 15**

| DRU type | DRU index and subcarrier range | | | | |
|---|---|---|---|---|---|
| 26-tone DRU i=1:9 | DRU 1 [-116:9:-8, **11:9:119**] | DRU 2 [-112:9:-4, **15:9:123**] | DRU 3 [-114:9:-6, **13:9:121**] | DRU 4 [-110:9:-2, **17:9:125**] | DRU 5 [-108:9:-9, **3**, **10:9:118**] |
| | DRU 6 [-115:9:-7, **12:9:120**] | DRU 7 [-111:9:-3, **16:9:124**] | DRU 8 [-113:9:-5, **14:9:122**] | DRU 9 [-109:9:-10, **2**, **9:9:117**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [**4**, **8**] | | 26-tone [DRU 6 to 9], [**5**, **7**] | | |

Alternatively, the following uses an example in which Table 16 shows a tone plan of the DRU in the 20 MHz bandwidth. It may be determined that the number x of guard subcarriers on the first side of the 20 MHz bandwidth is 8, the number y of guard subcarriers on the second side is 7, and the number K of direct current subcarriers included in the 20 MHz bandwidth is 3, that is, subcarriers whose subcarrier indices are -1, 0, and 1 are direct current subcarriers. For example, the number a of guard subcarriers on the first side of the first bandwidth is 12, and the number b of guard subcarriers on the second side is 11. Alternatively, based on the second possible design, for example, S is 134, P is 7, and Q is 5. Therefore, a maximum power amplification multiple may still be ensured for each DRU in the 20 MHz distributed bandwidth after shifting. An index of a subcarrier in the (1')^{st} area may be subtracted by 5, an index of a subcarrier in the (2')^{nd} area may be subtracted by 7, and an index of a subcarrier in the (3')^{rd} area may be subtracted by 4, to obtain the tone plan (or may be described as Shifted 20 MHz Tone Plan-2) of the DRU in the 20 MHz distributed bandwidth shown in Table 17. In Table 16, parts that are not underlined are subcarrier indices of the DRU in the 20 MHz bandwidth in the (1')^{st} area, parts that are underlined with " " are subcarrier indices of the DRU in the 20 MHz bandwidth in the (2')^{nd} area, and parts that are underlined with " " are subcarrier indices of the DRU in the 20 MHz bandwidth in the (3')^{rd} area. In Table 17, parts that are not underlined are subcarrier indices of the DRU in the 20 MHz distributed bandwidth in the (1')^{st} area, parts that are underlined with " " are subcarrier indices of the DRU in the 20 MHz distributed bandwidth in the (2')^{nd} area, and parts that are underlined with " " are subcarrier indices of the DRU in the 20 MHz distributed bandwidth in the 3^{rd} area.

**Table 16**

| DRU type | DRU index and subcarrier range | | | | |
|---|---|---|---|---|---|
| 26-tone DRU i=1:9 | DRU 1 [-120:9:-12, **6:9:114**] | DRU 2 [-116:9:-8, **10:9:118**] | DRU 3 [-118:9:-10, **8:9:116**] | DRU 4 [-114:9:-6, **12:9:120**] | DRU 5 [-112:9:-4, **5**, **14:9:113**] |
| | DRU 6 [-119:9:-11, **7:9:115**] | DRU 7 [-115:9:-7, **11:9:119**] | DRU 8 [-117:9:-9, **9:9:117**] | DRU 9 [-113:9:-5, **4**, **13:9:112**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-3, **3**] | | 26-tone [DRU 6 to 9], [-2, **2**] | | |

**Table 17**

| DRU type | DRU index and subcarrier range | | | | |
|---|---|---|---|---|---|
| 26-tone DRU i=1:9 | DRU 1 [-125:9:-17, **2:9:110**] | DRU 2 [-121:9:-13, **6:9:114**] | DRU 3 [-123:9:-15, **4:9:112**] | DRU 4 [-119:9:-11, **8:9:116**] | DRU 5 [-117:9:-9,-**2**, **10:9:109**] |
| | DRU 6 [-124:9:-16, **3:9:111**] | DRU 7 [-120:9:-12, **7:9:115**] | DRU 8 [-122:9:-14, **5:9:113**] | DRU 9 [-118:9:-10,-**3**, **9:9:108**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-8, **-4**] | | 26-tone [DRU 6 to 9], [-7, **-5**] | | |

The following uses an example in which Table 14 or Table 16 shows the tone plan of the DRU in the 20 MHz bandwidth. Refer to the following eight possible examples. The DRU in the first bandwidth is described in detail when the first bandwidth is a 40 MHz bandwidth, an 80 MHz bandwidth, a 160 MHz bandwidth, or a 320 MHz bandwidth. When the first bandwidth is a 40 MHz bandwidth, an 80 MHz bandwidth, a 160 MHz bandwidth, or a 320 MHz bandwidth, the number of guard subcarriers on the first side of the first bandwidth is 12, and the number of guard subcarriers on the second side of the first bandwidth is 11.

In a first possible example, the first bandwidth is a 40 MHz bandwidth, and DRU scheduling and transmission may be performed via 256 subcarriers, at a lowest frequency, of the 40 MHz bandwidth based on the 20 MHz distributed bandwidth. The tone plan of the DRU in the 20 MHz distributed bandwidth may be obtained by shifting the subcarrier indices based on Table 14. A specific shifting manner is: subtracting 124 from an index of the subcarrier in the (1')^{st} area in Table 14, subtracting 121 from an index of the subcarrier in the (2')^{nd} area, and subtracting 123 from an index of the subcarrier in the (3')^{rd} area, to obtain the tone plan of the DRU in the 20 MHz distributed bandwidth shown in Table 18. Alternatively, Table 18 may be obtained by subtracting 128 from the subcarrier index of each DRU in Table 15.

**Table 18**

| DRU type | DRU index and subcarrier range | | | | |
|---|---|---|---|---|---|
| 26-tone DRU i=1:9 | DRU 1 [-244:9:-136, -**117:9:-9**] | DRU 2 [-240:9:-132, -**113:9:-5**] | DRU 3 [-242:9:-134, -**115:9:-7**] | DRU 4 [-238:9:-130,-**111:9:-3**] | DRU 5 [-236:9: -137, **-125**,-**118:9:-10**] |
| | DRU 6 [-243:9:-135, -**116:9:-8**] | DRU 7 [-239:9:-131, -**112:9:-4**] | DRU 8 [-241:9:-133, -**114:9:-6**] | DRU 9 [-237:9: -138,-**126**, **-119:9:-11**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [**-124**, **-120**] | | 26-tone [DRU 6 to 9], [**-123**,-**121**] | | |

In a second possible example, the first bandwidth is a 40 MHz bandwidth, and DRU scheduling and transmission may be performed via 256 subcarriers, at a highest frequency, of the 40 MHz bandwidth based on the 20 MHz distributed bandwidth. The tone plan of the DRU in the 20 MHz distributed bandwidth may be obtained by shifting the subcarrier indices based on Table 16. A specific shifting manner is: adding 123 to an index of the subcarrier in the (1')^{st} area in Table 16, adding 121 to an index of the subcarrier in the (2')^{nd} area, and adding 124 to an index of the subcarrier in the (3')^{rd} area, to obtain the tone plan of the DRU in the 20 MHz distributed bandwidth shown in Table 19. Alternatively, Table 19 may be obtained by adding 128 to the subcarrier index of each DRU in Table 17.

**Table 19**

| DRU type | DRU index and subcarrier range | | | | |
|---|---|---|---|---|---|
| 26-tone DRU i=1:9 | DRU 1 [3:9:111, **130:9:238**] | DRU 2 [7:9:115, **134:9:242**] | DRU 3 [5:9:113, **132:9:240**] | DRU 4 [9:9:117, **136:9:244**] | DRU 5 [11:9:119, **126**, **138:9:237**] |
| | DRU 6 [4:9:112, **131:9:239**] | DRU 7 [8:9:116, **135:9:243**] | DRU 8 [6:9:114, **133:9:241**] | DRU 9 [10:9:118, **125**, **137:9:236**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [120, **124**] | | 26-tone [DRU 6 to 9], [121, **123**] | | |

In a third possible example, the first bandwidth is an 80 MHz bandwidth, and DRU scheduling and transmission may be performed via 256 subcarriers, at a lowest frequency, of the 80 MHz bandwidth based on the 20 MHz distributed bandwidth. The tone plan of the DRU in the 20 MHz distributed bandwidth may be obtained by shifting the subcarrier indices based on Table 14. A specific shifting manner is: subtracting 380 from an index of the subcarrier in the (1')^{st} area in Table 14, subtracting 377 from an index of the subcarrier in the (2')^{nd} area, and subtracting 379 from an index of the subcarrier in the (3')^{rd} area, to obtain the tone plan of the DRU in the 20 MHz distributed bandwidth shown in Table 20. Alternatively, Table 20 may be obtained by subtracting 384 from the subcarrier index of each DRU in Table 15.

**Table 20**

| DRU type | DRU index and subcarrier range | | | | |
|---|---|---|---|---|---|
| 26-tone DRU i=1:9 | DRU 1 [-500:9:-392, -**373:9:-265**] | DRU 2 [-496:9:-388, -**369:9:-261**] | DRU 3 [-498:9:-390, -**371:9:-263**] | DRU 4 [-494:9:-386,-**367:9:-259**] | DRU 5 [-492:9:-393, **-381**,-**374:9:-266**] |
| | DRU 6 [-499:9:-391, -**372:9:-264**] | DRU 7 [-495:9:-387, -**368:9:-260**] | DRU 8 [-497:9:-389, -**370:9:-262**] | DRU 9 [-493:9:-394,-**382**, **-375:9:-267**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-**380**, **-376**] | | 26-tone [DRU 6 to 9], [**-379**,-**377**] | | |

In a fourth possible example, the first bandwidth is an 80 MHz bandwidth, and DRU scheduling and transmission may be performed via 256 subcarriers, at a highest frequency, of the 80 MHz bandwidth based on the 20 MHz distributed bandwidth. The tone plan of the DRU in the 20 MHz distributed bandwidth may be obtained by shifting the subcarrier indices based on Table 16. A specific shifting manner is: adding 379 to an index of the subcarrier in the (1')^{st} area in Table 16, adding 377 to an index of the subcarrier in the (2')^{nd} area, and adding 380 to an index of the subcarrier in the (3')^{rd} area, to obtain the tone plan of the DRU in the 20 MHz distributed bandwidth shown in Table 21. Alternatively, Table 21 may be obtained by adding 384 to the subcarrier index of each DRU in Table 17.

**Table 21**

| DRU type | DRU index and subcarrier range | | | | |
|---|---|---|---|---|---|
| 26-tone DRU i=1:9 | DRU 1 [259:9:367, **386:9:494**] | DRU 2 [263:9:371, **390:9:498**] | DRU 3 [261:9:369, **388:9:496**] | DRU 4 [265:9:373, **392:9:500**] | DRU 5 [267:9:375, **382**, **394:9:493**] |
| | DRU 6 [260:9:368, **387:9:495**] | DRU 7 [264:9:372, **391:9:499**] | DRU 8 [262:9:370, **389:9:497**] | DRU 9 [266:9:374, **381**, **393:9:492**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [376, **380**] | | 26-tone [DRU 6 to 9], [377, **379**] | | |

In a fifth possible example, the first bandwidth is a 160 MHz bandwidth, and DRU scheduling and transmission may be performed via 256 subcarriers, at a lowest frequency, of the 160 MHz bandwidth based on the 20 MHz distributed bandwidth. The tone plan of the DRU in the 20 MHz distributed bandwidth may be obtained by shifting the subcarrier indices based on Table 14. A specific shifting manner is: subtracting 892 from an index of the subcarrier in the (1')^{st} area in Table 14, subtracting 889 from an index of the subcarrier in the (2')^{nd} area, and subtracting 891 from an index of the subcarrier in the (3')^{rd} area, to obtain the tone plan of the DRU in the 20 MHz distributed bandwidth shown in Table 22. Alternatively, Table 22 may be obtained by subtracting 896 from the subcarrier index of each DRU in Table 15.

**Table 22**

| DRU type | DRU index and subcarrier range | | | | |
|---|---|---|---|---|---|
| 26-tone DRU i=1:9 | DRU 1 [-1012:9:-904, -**885:9:-777**] | DRU 2 [-1008:9:-900, -**881:9:-773**] | DRU 3 [-1010:9:-902, **-883:9:-775**] | DRU 4 [-1006:9:-898,-**879:9:-771**] | DRU 5 [-1004:9:-905, **-893**,-**886:9:-778**] |
| | DRU 6 [-1011:9:-903, -**884:9:-776**] | DRU 7 [-1007:9:-899, -**880:9:-772**] | DRU 8 [-1009:9:-901, **-882:9:-774**] | DRU 9 [-1005:9: -906, **-894**, **-887:9:-779**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-**892**, **-888**] | | 26-tone [DRU 6 to 9], [**-891**,-**889**] | | |

In a sixth possible example, the first bandwidth is a 160 MHz bandwidth, and DRU scheduling and transmission may be performed via 256 subcarriers, at a highest frequency, of the 160 MHz bandwidth based on the 20 MHz distributed bandwidth. The tone plan of the DRU in the 20 MHz distributed bandwidth may be obtained by shifting the subcarrier indices based on Table 16. A specific shifting manner is: adding 891 to an index of the subcarrier in the (1')^{st} area in Table 16, adding 889 to an index of the subcarrier in the (2')^{nd} area, and adding 892 to an index of the subcarrier in the (3')^{rd} area, to obtain the tone plan of the DRU in the 20 MHz distributed bandwidth shown in Table 23. Alternatively, Table 23 may be obtained by adding 896 to the subcarrier index of each DRU in Table 17.

**Table 23**

| DRU type | DRU index and subcarrier range | | | | |
|---|---|---|---|---|---|
| 26-tone DRU i=1:9 | DRU 1 [771:9:879, **898:9:1006**] | DRU 2 [775:9:883, **902:9:1010**] | DRU 3 [773:9:881, **900:9:1008**] | DRU 4 [777:9:885, **904:9:1012**] | DRU 5 [779:9:887, **894**, **906:9:1005**] |
| | DRU 6 [772:9:880, **899:9:1007**] | DRU 7 [776:9:884, **903:9:1011**] | DRU 8 [774:9:882, **901:9:1009**] | DRU 9 [778:9:886, **893**, **905:9:1004**] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [888, **892**] | | 26-tone [DRU 6 to 9], [889, **891**] | | |

In a seventh possible example, the first bandwidth is a 320 MHz bandwidth, and DRU scheduling and transmission may be performed via 256 subcarriers, at a lowest frequency, of the 320 MHz bandwidth based on the 20 MHz distributed bandwidth. The tone plan of the DRU in the 20 MHz distributed bandwidth may be obtained by shifting the subcarrier indices based on Table 14. A specific shifting manner is: subtracting 1916 from an index of the subcarrier in the (1')^{st} area in Table 14, subtracting 1913 from an index of the subcarrier in the (2')^{nd} area, and subtracting 1915 from an index of the subcarrier in the (3')^{rd} area, to obtain the tone plan of the DRU in the 20 MHz distributed bandwidth shown in Table 24. Alternatively, Table 24 may be obtained by subtracting 1920 from the subcarrier index of each DRU in Table 15.

**Table 24**

| DRU type | DRU index and subcarrier range | | | | |
|---|---|---|---|---|---|
| 26-tone DRU i=1:9 | DRU 1 [-2036:9:-1928, **- 1909:9:-1801**] | DRU 2 [-2032:9:-1924, **- 1905:9:-1797**] | DRU 3 [-2034:9:-1926, **- 1907:9:-1799**] | DRU 4 [-2030:9:-1922, **-1903:9:-1795**] | DRU 5 [-2028:9: - 1929, **-1917**, **- 1910:9:-1802**] |
| | DRU 6 [-2035:9:-1927, **- 1908:9:-1800**] | DRU 7 [-2031:9:-1923, **- 1904:9:-1796**] | DRU 8 [-2033:9:-1925, **- 1906:9:-1798**] | DRU 9 [-2029:9: - 1930, **-1918**, **- 1911:9:-1803**] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [**-1916**, **-1912**] | | DRU 2 26-tone [DRU 6 to 9], [**-1915, - 1913**] | | |

In an eighth possible example, the first bandwidth is a 320 MHz bandwidth, and DRU scheduling and transmission may be performed via 256 subcarriers, at a highest frequency, of the 320 MHz bandwidth based on the 20 MHz distributed bandwidth. The tone plan of the DRU in the 20 MHz distributed bandwidth may be obtained by shifting the subcarrier indices based on Table 16. A specific shifting manner is: adding 1915 to an index of the subcarrier in the (1')^{st} area in Table 16, adding 1913 to an index of the subcarrier in the (2')^{nd} area, and adding 1916 to an index of the subcarrier in the (3')^{rd} area, to obtain the tone plan of the DRU in the 20 MHz distributed bandwidth shown in Table 25. Alternatively, Table 25 may be obtained by adding 1920 to the subcarrier index of each DRU in Table 17.

**Table 25**

| DRU type | DRU index and subcarrier range | | | | |
|---|---|---|---|---|---|
| 26-tone DRU i=1:9 | DRU 1 [1795:9:1903, **1922:9:2030**] | DRU 2 [1799:9:1907, **1926:9:2034**] | DRU 3 [1797:9:1905, **1924:9:2032**] | DRU 4 [1801:9:1909, **1928:9:2036**] | DRU 5 [1803:9:1911, **1918**, **1930:9:2029**] |
| | DRU 6 [1796:9:1904, **1923:9:2031**] | DRU 7 [1800:9:1908, **1927:9:2035**] | DRU 8 [1798:9:1906, **1925:9:2033**] | DRU 9 [1802:9:1910, **1917**, **1929:9:2028**] | |
| 52-tone DRU | DRU 1 26-tone [DRU 1, DRU 2] | | DRU 2 26-tone [DRU 3, DRU 4] | | |
| i=1:4 | DRU 3 26-tone [DRU 6, DRU 7] | | DRU 4 26-tone [DRU 8, DRU 9] | | |
| 106-tone DRU i=1:2 | DRU 1 26-tone [DRU 1 to 4], [1912, **1916**] | | DRU 2 26-tone [DRU 6 to 9], [1913, **1915**] | | |

In the method shown in FIG. 8 or FIG. 9, for various examples shown in Table 4 to Table 23, the 20 MHz bandwidth shown in Table 3 is used as an example for description. The number x of guard subcarriers on the first side of the 20 MHz bandwidth shown in Table 3 is 8, and the number y of guard subcarriers on the second side is 7. The subcarriers in the 20 MHz bandwidth shown in Table 3 may be shifted rightward by 4 subcarriers, so that the number of guard subcarriers on the first side of the 20 MHz distributed bandwidth is the same as the number of guard subcarriers on the first side of the first bandwidth, and both are 12. Alternatively, the subcarriers may be shifted leftward by 5 subcarriers, so that the number of guard subcarriers on the second side of the 20 MHz distributed bandwidth is the same as the number of guard subcarriers on the second side of the first bandwidth, and both are 11.

However, for the 20 MHz bandwidth shown in FIG. 5, the number x of guard subcarriers on the first side of the 20 MHz bandwidth is 6, the number y of guard subcarriers on the second side is 5, and there are 11 guard subcarriers in total. The 11 guard subcarriers cannot be aligned with the 12 guard subcarriers on the first side of the first bandwidth by shifting rightward. For the 11 guard subcarriers on the second side of the first bandwidth, although the 11 guard subcarriers may be aligned with the 11 guard subcarriers on the second side of the first bandwidth by shifting leftward by 6 subcarriers, interference is easily caused to 256 subcarriers at the second highest frequency (for example, a 3^{rd} group of 256 subcarrier sorted from left to right in FIG. 5).

In addition, in the method shown in FIG. 9, when the useful subcarriers in the 20 MHz distributed bandwidth are determined, a peak to average power ratio (peak to average power ratio, PAPR) is not optimized.

In view of this, an embodiment of this application further provides a communication method. As shown in FIG. 16, the method includes the following steps.

Step 1601: A first communication apparatus transmits an OFDM symbol via a DRU in a 20 MHz distributed bandwidth in a first bandwidth.

A number of guard subcarriers on a first side of the 20 MHz distributed bandwidth is the same as a number of guard subcarriers on a first side of the first bandwidth; or a number of guard subcarriers on a second side of the 20 MHz distributed bandwidth is the same as a number of guard subcarriers on a second side of the first bandwidth.

For example, in a tone plan of a DRU in the 20 MHz distributed bandwidth shown in Table 28, the number of guard subcarriers on the first side of the 20 MHz distributed bandwidth is the same as the number of guard subcarriers on the first side of the first bandwidth; or in a tone plan of a DRU in the 20 MHz distributed bandwidth shown in Table 29, the number of guard subcarriers on the second side of the 20 MHz distributed bandwidth is the same as the number of guard subcarriers on the second side of the first bandwidth.

As shown in Table 28, for 256 subcarriers at a lowest frequency in a bandwidth at a granularity of 80 MHz, indices of the 256 subcarriers are [-128:127], 12 subcarriers on a first side of the 80 MHz bandwidth are guard subcarriers, and indices of the guard subcarriers are [-128:-117]; 1 subcarrier on a second side is a guard subcarrier, and an index of the guard subcarrier is 127; and there are 3 direct current subcarriers in the middle, and indices of the direct current subcarriers are [-1, 0, 1].

**Table 28 Tone plan of a DRU in a 20 MHz distributed bandwidth**

| DRU type | DRU index and subcarrier range | | | | |
|---|---|---|---|---|---|
| 26-tone DRU i=1:9 | DRU 1 [-116:9:-8, 10:9:118] | DRU 2 [-112:9:-4, 5:9:113] | DRU 3 [-114:9:-6, 3:9:111] | DRU 4 [-110:9:-2, 7:9:115] | DRU 5 [-108:9:-9, 9:9:126] |
| | DRU 6 [-115:9:-7, 2:9:110] | DRU 7 [-111:9:-3, 6:9:114] | DRU 8 [-113:9:-5, 4:9:112] | DRU 9 [-109:9:-10, 8:9:125] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone DRU 1 to 26-tone DRU 4, [119, 122] | | DRU 2 26-tone DRU 1 to 26-tone DRU 4, [120, 121] | | |

Based on the tone plan of the DRU in the 20 MHz distributed bandwidth shown in Table 28, it can be ensured that the number of guard subcarriers on the first side of the 20 MHz distributed bandwidth is the same as the number of guard subcarriers on the first side of the first bandwidth, while a maximum power amplification multiple may be ensured for each DRU. In addition, the direct current subcarriers are not occupied by any DRU, to avoid interference to 256 subcarriers at the second lowest frequency. In addition, a spacing between a last subcarrier of an upper half of the 26-tone DRU and a 1^{st} subcarrier of a lower half of the 26-tone DRU is an integer multiple of a spacing between two adjacent subcarriers of the 26-tone DRU, to ensure a low PAPR of the DRU. In addition, for a 20 MHz-only station, the 20 MHz-only station performs filtering based on 6 guard subcarriers on the left and 5 guard subcarriers on the right. The tone plan in Table 28 can ensure that only a 26-tone DRU 5, a 26-tone DRU 9, a 52-tone DRU 4, and a 106-tone DRU 2 are affected by a filter, so that a number of affected subcarriers and DRUs is the smallest.

As shown in Table 29, for 256 subcarriers at a highest frequency in a bandwidth at a granularity of 80 MHz, indices of the 256 subcarriers are [-128:127], 11 subcarriers on a second side of the 80 MHz bandwidth are guard subcarriers, and indices of the guard subcarriers are [117:127]; 2 subcarriers on a first side are guard subcarriers, and indices of the guard subcarrier are -128 and -127; and there are 3 direct current subcarriers in the middle, and indices of the direct current subcarriers are [-1, 0, 1].

**Table 29 Tone plan of a DRU in a 20 MHz distributed bandwidth**

| DRU type | DRU index and subcarrier range | | | | |
|---|---|---|---|---|---|
| 26-tone DRU i=1:9 | DRU 1 [-118:9:-10, 8:9:116] | DRU 2 [-113:9:-5, 4:9:112] | DRU 3 [-111:9:-3, 6:9:114] | DRU 4 [-115:9:-7, 2:9:110] | DRU 5 [-126:9:-9, 9:9:108] |
| | DRU 6 [-110:9:-2, 7:9:115] | DRU 7 [-114:9:-6, 3:9:111] | DRU 8 [-112:9:-4, 5:9:113] | DRU 9 [-125:9:-8, 10:9:109] | |
| 52-tone DRU i=1:4 | DRU 1 26-tone [DRU 1, DRU 2] | | DRU 2 26-tone [DRU 3, DRU 4] | | |
| | DRU 3 26-tone [DRU 6, DRU 7] | | DRU 4 26-tone [DRU 8, DRU 9] | | |
| 106-tone DRU i=1:2 | DRU 1 26-tone DRU 1 to 26-tone DRU 4, [-119, -122] | | DRU 2 26-tone DRU 1 to 26-tone DRU 4, [-120, -121] | | |

Based on the tone plan of the DRU in the 20 MHz distributed bandwidth shown in Table 29, it can be ensured that the number of guard subcarriers on the second side of the 20 MHz distributed bandwidth is the same as the number of guard subcarriers on the second side of the first bandwidth, while a maximum power amplification multiple may be ensured for each DRU. In addition, the direct current subcarriers are not occupied by any DRU, to avoid interference to 256 subcarriers at the second highest frequency. In addition, a spacing between a last subcarrier of an upper half of the 26-tone DRU and a 1^{st} subcarrier of a lower half of the 26-tone DRU is an integer multiple of a spacing between two adjacent subcarriers of the 26-tone DRU, to ensure a low PAPR of the DRU. In addition, for the 20 MHz-only station, the 20 MHz-only station performs filtering based on 6 guard subcarriers on the left and 5 guard subcarriers on the right. The tone plan in Table 29 can ensure that only a 26-tone DRU 5, a 26-tone DRU 9, a 52-tone DRU 4, and a 106-tone DRU 2 are affected by a filter, so that a number of affected subcarriers and DRUs is the smallest.

When DRU scheduling and transmission are performed based on the 20 MHz distributed bandwidth, the direct current subcarriers may not be sent, which is different from the foregoing method in which the locations of the direct current subcarriers are not changed when the subcarriers are shifted. In other words, when useful subcarriers in a 20 MHz bandwidth are shifted, to obtain the useful subcarriers in the 20 MHz distributed bandwidth, locations of the direct current subcarriers may be occupied.

Specifically, N areas of the 20 MHz bandwidth may be determined based on the locations of the direct current subcarriers. For example, subcarriers (namely, useful subcarriers whose subcarrier indices are smaller than indices of the direct current subcarriers), located on the left of the direct current subcarriers, in the useful subcarriers may be grouped into one or more areas, and subcarriers (namely, useful subcarriers whose subcarrier indices are greater than the indices of the direct current subcarrier), located on the right of the direct current subcarriers, in the useful subcarriers may be grouped into one or more areas.

When DRU scheduling and transmission are performed in the first bandwidth based on the 20 MHz distributed bandwidth, useful subcarriers, of the 20 MHz bandwidth, in the N areas may be shifted (for example, shifted leftward in the following first possible design or shifted rightward in the following second possible design) on a spectrum of the 20 MHz bandwidth, to obtain useful subcarriers in the 20 MHz distributed bandwidth. The number of guard subcarriers can be increased through shifting, so that a tone plan of the 20 MHz distributed bandwidth complies with a spectrum mask of the first bandwidth, an adjacent channel interference requirement, and a transmit/receive filter design, which facilitates development and testing. In addition, the direct current subcarriers are not sent.

For example, a number of direct current subcarriers in the 20 MHz bandwidth is K. For the 20 MHz bandwidth, the direct current subcarriers are a (129-(K-1)/2)^{th} subcarrier to a (129+(K-1)/2)^{th} subcarrier, and subcarrier indices of the direct current subcarriers are [-(K-1)/2:(K-1)/2]. Subcarrier indices of useful subcarriers after the direct current subcarriers are removed are [(x-128):-(K-1)/2-1, (K-1)/2+1: (127-y)], that is, an (x+1)^{th} subcarrier to a (128-(K-1)/2)^{th} subcarrier and a (130+(K-1)/2)^{th} subcarrier to a (256-y)^{th} subcarrier are non-direct current parts of the useful subcarriers, and the non-direct current parts may be grouped into N areas.

In a first possible design, for example, the number of guard subcarriers on the first side of the first bandwidth is a, the number of guard subcarriers on the second side of the first bandwidth is b, a number of guard subcarriers on a first side of the 20 MHz bandwidth is x, a number of guard subcarriers on a second side of the 20 MHz bandwidth is y, and the number of direct current subcarriers in the 20 MHz bandwidth is K. Based on the locations of the direct current subcarriers in the 20 MHz bandwidth, the non-direct current parts of the useful subcarriers in the 20 MHz bandwidth may be grouped into two areas: a (1')^{st} area and a (2')^{nd} area in the following.

The (1')^{st} area includes an (x+1)^{th} subcarrier to a (128-(K-1)/2)^{th} subcarrier that are arranged in a frequency domain sequence in the 20 MHz bandwidth, and the (2')^{nd} area includes a (130+(K-1)/2)^{th} subcarrier to a (256-y)^{th} subcarrier that are arranged in a frequency domain sequence in the 20 MHz bandwidth, where K is a positive integer.

Based on the two areas of the 20 MHz bandwidth, on the spectrum of the 20 MHz bandwidth, the subcarriers in the (1')^{st} area may be shifted rightward by a-x subcarriers (that is, a 1^{st} numerical value is a-x), and the subcarriers in the (2')^{nd} area may be shifted rightward by a-x-K subcarriers (that is, a 2^{nd} numerical value is a-x-K), to obtain subcarriers, in two areas (namely, a 1^{st} area and a 2^{nd} area in the following), of the 20 MHz distributed bandwidth. In other words, an index of the subcarrier of the 20 MHz distributed bandwidth in the 1^{st} area is an index of the subcarrier of the 20 MHz bandwidth in the (1')^{st} area plus a-x; and an index of the subcarrier of the 20 MHz distributed bandwidth in the 2^{nd} area is an index of the subcarrier of the 20 MHz bandwidth in the (2')^{nd} area plus a-x-K, where both a and x are positive integers. Therefore, the number of guard subcarriers on the first side of the 20 MHz distributed bandwidth is a, and is the same as the number of guard subcarriers on the first side of the first bandwidth, which meets the spectrum mask of the first bandwidth. In addition, the locations of the direct current subcarriers are not changed.

The 1^{st} area includes an (a+1)^{th} subcarrier to a (128-(K-1)/2+a-x)^{th} subcarrier that are arranged in a frequency domain sequence in the 20 MHz distributed bandwidth, and the 2^{nd} area includes a (130+(K-1)/2+a-x-K)^{th} subcarrier to a (256-y+a-x-K)^{th} subcarrier that are arranged in a frequency domain sequence in the 20 MHz distributed bandwidth.

It may be understood that, because communication is performed based on the DRU, the foregoing descriptions may alternatively be replaced with: on the spectrum of the 20 MHz bandwidth, shifting a DRU in the 20 MHz bandwidth in the (1')^{st} area rightward by a-x subcarriers, and shifting a DRU in the 20 MHz bandwidth in the (2')^{nd} area rightward by a-x-K subcarriers, to obtain the DRU in the 20 MHz distributed bandwidth. In other words, a subcarrier index of the DRU in the 20 MHz distributed bandwidth in the 1^{st} area is a subcarrier index of the DRU in the 20 MHz bandwidth in the (1')^{st} area plus a-x, and a subcarrier index of the DRU in the 20 MHz distributed bandwidth in the 2^{nd} area is a subcarrier index of the DRU in the 20 MHz bandwidth in the (2')^{nd} area plus a-x-K.

Alternatively, the foregoing descriptions may be replaced with: The DRU in the 20 MHz distributed bandwidth in the 1^{st} area is obtained by shifting (or shifting rightward) the DRU in the 20 MHz bandwidth in the (1')^{st} area by a-x subcarriers, and the DRU in the 20 MHz distributed bandwidth in the 2^{nd} area is obtained by shifting (or shifting rightward) the DRU in the 20 MHz bandwidth in the (2')^{nd} area by a-x-K subcarriers.

Specifically, a subcarrier index of the DRU in the 20 MHz distributed bandwidth in the 1^{st} area is a subcarrier index of the DRU, whose sequential number is the same as that of the DRU in the 20 MHz distributed bandwidth, in the 20 MHz bandwidth in the (1')^{st} area plus a-x; and a subcarrier index of the DRU in the 20 MHz distributed bandwidth in the 2^{nd} area is a subcarrier index of the DRU, whose sequential number is the same as that of the DRU in the 20 MHz distributed bandwidth, in the 20 MHz bandwidth in the (2')^{nd} area plus a-x-K.

For example, 256 subcarriers, at a lowest frequency, of the first bandwidth may be used as the 20 MHz distributed bandwidth for DRU scheduling and transmission.

In the first possible design, compared with the subcarrier of the DRU in the 20 MHz bandwidth, the subcarrier, in the 1^{st} area, of the DRU in the 20 MHz distributed bandwidth is shifted rightward by a-x subcarriers, the a-x subcarriers on the left may be used as guard subcarriers, that is, the number of guard subcarriers on the first side of the 20 MHz distributed bandwidth is a (including x guard subcarriers and the a-x guard subcarriers), and is the same as the number of guard subcarriers on the first side of the first bandwidth, and a tone plan of the 20 MHz distributed bandwidth complies with the spectrum mask of the first bandwidth. When the first communication apparatus performs DRU scheduling and transmission in the first bandwidth based on the 20 MHz distributed bandwidth, communication performance can be improved. In addition, no direct current subcarrier needs to be sent.

In a second possible design, for example, the number of guard subcarriers on the first side of the first bandwidth is a, the number of guard subcarriers on the second side of the first bandwidth is b, a number of guard subcarriers on a first side of the 20 MHz bandwidth is x, a number of guard subcarriers on a second side of the 20 MHz bandwidth is y, and the number of direct current subcarriers in the 20 MHz bandwidth is K. Based on the locations of the direct current subcarriers in the 20 MHz bandwidth, the non-direct current parts of the useful subcarriers in the 20 MHz bandwidth may be grouped into two areas: a (1')^{st} area and a (2')^{nd} area in the following.

The (1')^{st} area includes an (x+1)^{th} subcarrier to a (128-(K-1)/2)^{th} subcarrier that are arranged in a frequency domain sequence in the 20 MHz bandwidth, and the (2')^{nd} area includes a (130+(K-1)/2)^{th} subcarrier to a (256-y)^{th} subcarrier that are arranged in a frequency domain sequence in the 20 MHz bandwidth, where K is a positive integer.

Based on the two areas of the 20 MHz bandwidth, on the spectrum of the 20 MHz bandwidth, the subcarriers in the (1')^{st} area may be shifted leftward by b-y-K subcarriers (that is, a 1^{st} numerical value is -(b-y-K)), and the subcarriers in the (2')^{nd} area may be shifted leftward by b-y subcarriers (that is, a 2^{nd} numerical value is -(b-y)), to obtain subcarriers, in two areas (namely, a 1^{st} area and a 2^{nd} area in the following), of the 20 MHz distributed bandwidth. In other words, an index of the subcarrier of the 20 MHz distributed bandwidth in the 1^{st} area is an index of the subcarrier of the 20 MHz bandwidth in the (1')^{st} area plus -(b-y-K) (or minus b-y-K); and an index of the subcarrier of the 20 MHz distributed bandwidth in the 2^{nd} area is an index of the subcarrier of the 20 MHz bandwidth in the (2')^{nd} area plus -(b-y) (or minus b-y), where both b and y are positive integers. Therefore, the number of guard subcarriers on the second side of the 20 MHz distributed bandwidth is b, and is the same as the number of guard subcarriers on the second side of the first bandwidth, which meets the spectrum mask of the first bandwidth. In addition, the locations of the direct current subcarriers are not changed.

The 1^{st} area includes an (x+1-b+y+K)^{th} subcarrier to a (128-(K-1)/2-b+y+K)^{th} subcarrier that are arranged in a frequency domain sequence in the 20 MHz distributed bandwidth, and the 2^{nd} area includes a (130+(K-1)/2-b+y)^{th} subcarrier to a (256-b)^{th} subcarrier that are arranged in a frequency domain sequence in the 20 MHz distributed bandwidth.

It may be understood that, because communication is performed based on the DRU, the foregoing descriptions may alternatively be replaced with: on the spectrum of the 20 MHz bandwidth, shifting a DRU in the 20 MHz bandwidth in the (1')^{st} area leftward by b-y-K subcarriers, and shifting a DRU in the 20 MHz bandwidth in the (2')^{nd} area leftward by b-y subcarriers, to obtain the DRU in the 20 MHz distributed bandwidth. In other words, a subcarrier index of the DRU in the 20 MHz distributed bandwidth in the 1^{st} area is a subcarrier index of the DRU in the 20 MHz bandwidth in the (1')^{st} area plus -(b-y-K), and a subcarrier index of the DRU in the 20 MHz distributed bandwidth in the 2^{nd} area is a subcarrier index of the DRU in the 20 MHz bandwidth in the (2')^{nd} area plus -(b-y).

Alternatively, the foregoing descriptions may be replaced with: The DRU in the 20 MHz distributed bandwidth in the 1^{st} area is obtained by shifting (or shifting leftward) the DRU in the 20 MHz bandwidth in the (1')^{st} area by b-y-K subcarriers, and the DRU in the 20 MHz distributed bandwidth in the 2^{nd} area is obtained by shifting (or shifting leftward) the DRU in the 20 MHz bandwidth in the (2')^{nd} area by b-y subcarriers.

Specifically, a subcarrier index of the DRU in the 20 MHz distributed bandwidth in the 1^{st} area is a subcarrier index of the DRU, whose sequential number is the same as that of the DRU in the 20 MHz distributed bandwidth, in the 20 MHz bandwidth in the (1')^{st} area plus -(b-y-K); and a subcarrier index of the DRU in the 20 MHz distributed bandwidth in the 2^{nd} area is a subcarrier index of the DRU, whose sequential number is the same as that of the DRU in the 20 MHz distributed bandwidth, in the 20 MHz bandwidth in the (2')^{nd} area plus -(b-y).

For example, 256 subcarriers, at a highest frequency, of the first bandwidth may be used as the 20 MHz distributed bandwidth for DRU scheduling and transmission.

In the second possible design, compared with the subcarrier of the DRU in the 20 MHz bandwidth, the subcarrier, in the 2^{nd} area, of the DRU in the 20 MHz distributed bandwidth is shifted leftward by b-y subcarriers, the b-y subcarriers on the right may be used as guard subcarriers, that is, the number of guard subcarriers on the second side of the 20 MHz distributed bandwidth is b (including y guard subcarriers and the b-y guard subcarriers), and is the same as the number of guard subcarriers on the second side of the first bandwidth, and a tone plan of the 20 MHz distributed bandwidth complies with the spectrum mask of the first bandwidth. When the first communication apparatus performs DRU scheduling and transmission in the first bandwidth based on the 20 MHz distributed bandwidth, communication performance can be improved. In addition, the direct current subcarriers may not need to be sent.

It may be understood that, in the foregoing method, when the subcarriers are shifted, locations of direct current subcarriers (for example, a subcarrier whose subcarrier index is -1, 0, or 1) are occupied. This is not applicable to a 20 MHz-only station. The following two solutions may be used to resolve this technical problem. One solution is to enable the 20 MHz-only station to generate a carrier at a new frequency. The other solution is to disable, at a protocol layer, the 20 MHz-only station from transmitting via the DRUs, for example, the following first DRU.

The first communication apparatus does not transmit the OFDM symbol via the first DRU in the 20 MHz distributed bandwidth, or does not use the first DRU to transmit the OFDM symbol. The first DRU includes one or more of the following subcarriers: a subcarrier whose index is -1, a subcarrier whose index is 0, or a subcarrier whose index is 1. It may alternatively be described as: The OFDM symbol is transmitted via a DRU, in the 20 MHz distributed bandwidth, that does not include one or more of the following subcarriers: a subcarrier whose index is -1, a subcarrier whose index is 0, or a subcarrier whose index is 1.

In other words, for the first bandwidth, when the 256 subcarriers, at the lowest frequency, of the first bandwidth are used as the 20 MHz distributed bandwidth, DRU scheduling and transmission are performed based on Table 4, and the 20 MHz-only station needs to be disabled from sending a DRU whose subcarrier indices include [-1, 0, 1], that is, disabling sending of a 26-tone DRU 5, a 26-tone DRU 9, a 52-tone DRU 4, a 106-tone DRU 1, and a 106-tone DRU 2.

Alternatively, for the first bandwidth, when the 256 subcarriers, at the highest frequency, of the first bandwidth are used as the 20 MHz distributed bandwidth, DRU scheduling and transmission are performed based on Table 5, and the 20 MHz-only station needs to be disabled from sending a DRU whose subcarrier indices include [-1, 0, 1], that is, disabling sending of a 26-tone DRU 5, a 26-tone DRU 9, a 52-tone DRU 4, a 106-tone DRU 1, and a 106-tone DRU 2.

An embodiment of this application further provides a communication method. As shown in FIG. 10, the method includes the following steps.

Step 1001: A first communication apparatus transmits an OFDM symbol via a DRU in a 20 MHz distributed bandwidth in a first bandwidth.

A number of guard subcarriers in the 20 MHz distributed bandwidth is the same as a number of guard subcarriers in the first bandwidth.

Specifically, a number of guard subcarriers on a first side of the 20 MHz distributed bandwidth is the same as a number of guard subcarriers on a first side of the first bandwidth; or a number of guard subcarriers on a second side of the 20 MHz distributed bandwidth is the same as a number of guard subcarriers on a second side of the first bandwidth.

According to method shown in FIG. 8 or FIG. 9, the number of guard subcarriers in the 20 MHz distributed bandwidth may be the same as the number of guard subcarriers in the first bandwidth. Details are not described herein again.

The DRU described in the methods in FIG. 8 to FIG. 10 may be used for downlink OFDMA PPDU transmission. For example, an AP sends a downlink OFDMA PPDU via the DRU described in the methods in FIG. 8 to FIG. 10. Correspondingly, a STA receives the downlink OFDMA PPDU via the DRU described in the methods in FIG. 8 to FIG. 10.

The DRU described in the methods in FIG. 8 to FIG. 10 may also be used for uplink OFDMA PPDU/TB PPDU transmission. For example, the AP sends a trigger frame, and the STA sends a TB PPDU via the DRU described in the methods in FIG. 8 to FIG. 10 and resources allocated based on a trigger frame. Correspondingly, the AP receives the TB PPDU via the DRU described in the methods in FIG. 8 to FIG. 10.

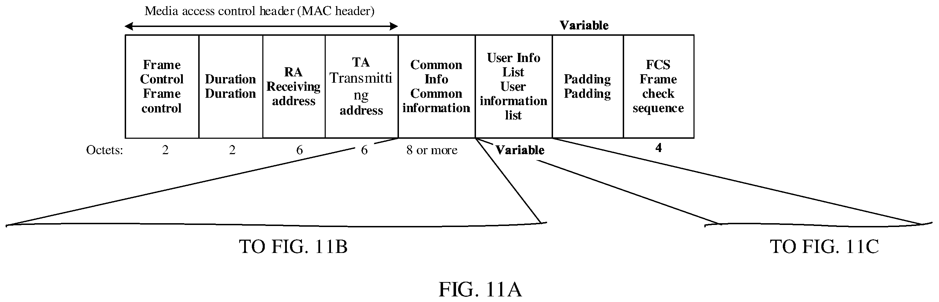

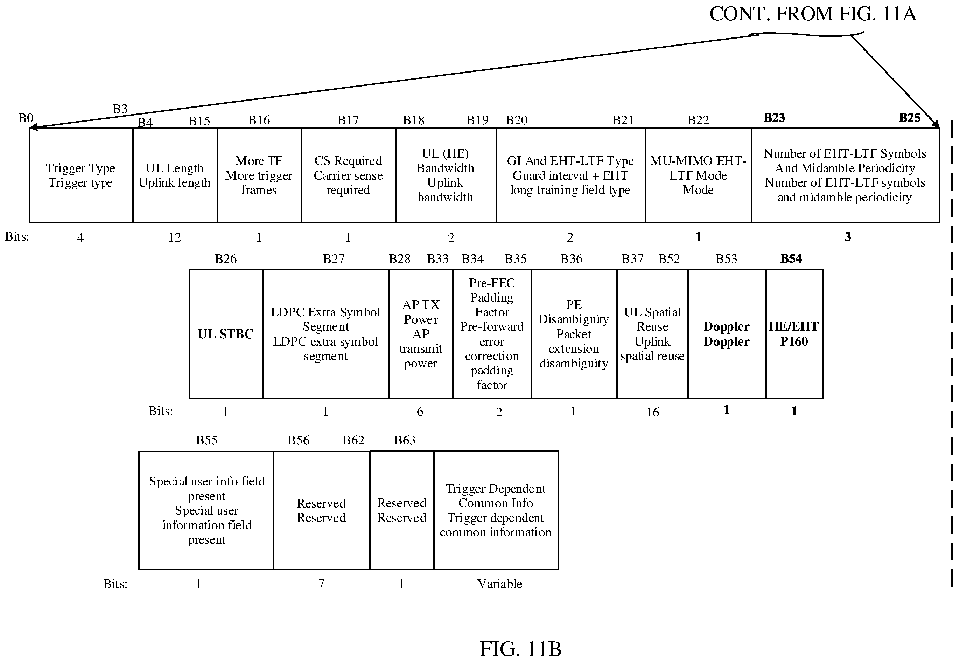

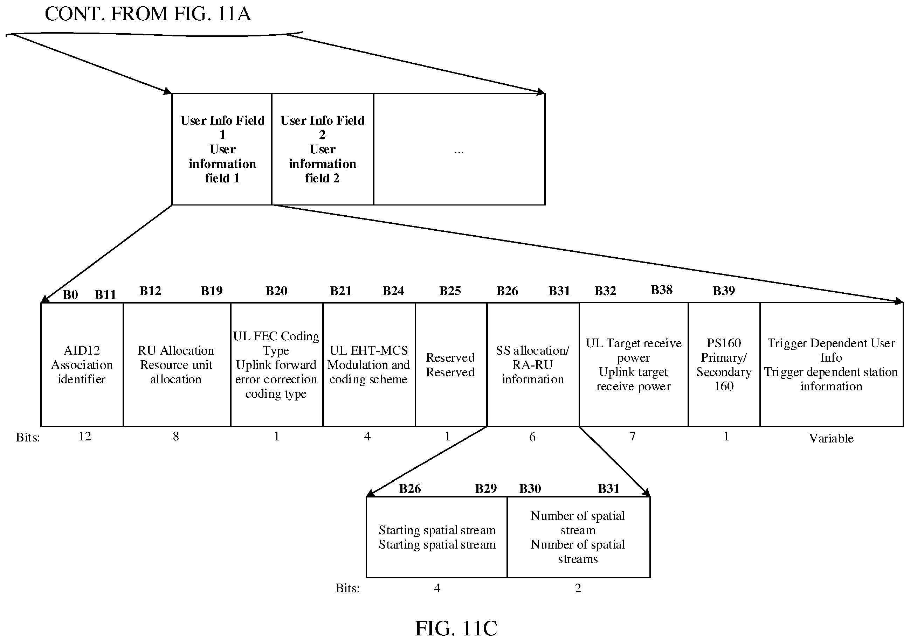

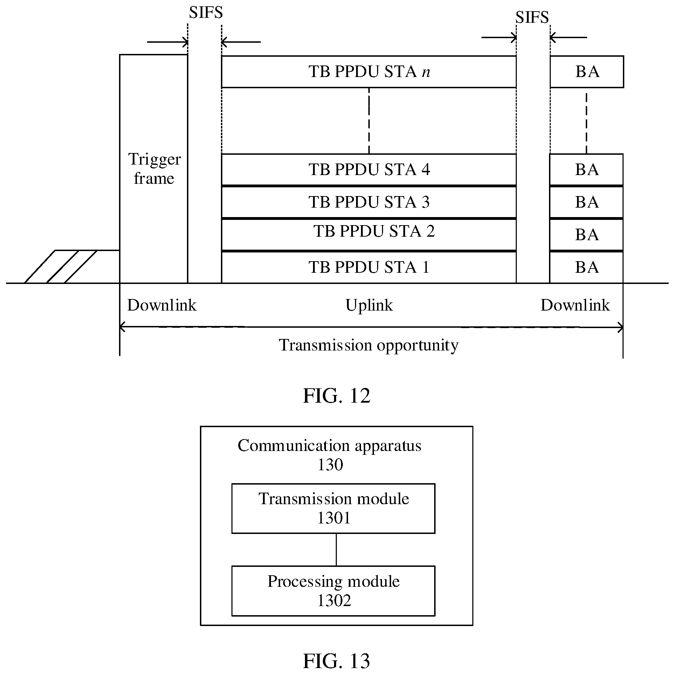

For example, as shown in FIG. 11A, FIG. 11B, and FIG. 11C, in an uplink multi-user transmission scenario, the AP may send a trigger frame shown in FIG. 12 to the STA. The trigger frame carries identifier information and resource allocation information of the STA. A user information list (User Info List) field includes indication information sent to different users, and each STA processes information that is for the STA. After receiving the trigger frame, the STA may send an uplink data frame via a corresponding resource unit based on the TB PPDU, and receive, after an SIFS, a BA frame sent by the AP. A plurality of users send distributed RUs in an interleaved mode, to improve a transmit power of each user under a specific bandwidth.

Specifically, the trigger frame may include a resource scheduling parameter and another parameter that are used by one or more first communication apparatuses to send the PPDU. As shown in FIG. 12, the trigger frame may include a frame control (frame control) field, a duration (duration) field, a receiving address (receiving address, RA) field, a sending address (sending address, SA) field, a common information (common information) field, a user information list (user information list) field, a padding (padding) field, a frame check sequence (frame check sequence, FCS) field, and the like. For specific descriptions of the fields in the trigger frame, refer to corresponding descriptions of those in the 802.11ax standard or the 802.11be standard. Details are not described herein.

The common information field may include common information that needs to be read by each first communication apparatus. The user information list field may include one or more user information fields, and each user information field includes information that needs to be read by each first communication apparatus. The user information field may include fields such as an association identifier (association identifier 12, AID 12) field and a resource unit allocation (resource unit allocation, RU allocation) subfield. The association identifier field may indicate an association identifier of a specific receive end communication apparatus, and the resource unit allocation subfield may indicate a location of a resource unit allocated to the first communication apparatus (namely, the first communication apparatus indicated by the AID 12).

The 802.11be standard is used as an example. In a user information field in an EHT form, a resource unit (including an RU, a DRU, or a multiple resource unit (multiple resource unit, MRU) including a plurality of resource units) allocated to the first communication apparatus may be indicated by the following subfields: a resource unit allocation subfield (RU Allocation subfield), an uplink bandwidth subfield (UL BW subfield) in a common information field, an uplink bandwidth extension subfield (UL BW Extension subfield) in a special user information field, and a primary/secondary 160 subfield (PS160 subfield).

In the common information field, B55 indicates whether a special user information field is present in the user information list field. For the EHT TB PPDU, a bandwidth of the EHT TB PPDU is jointly determined based on the uplink bandwidth extension subfield in the special user information field and the uplink bandwidth subfield. A mapping relationship between B0 in the resource unit allocation subfield, B7 to B1 in the resource unit allocation subfield, and PS160 may be shown in Table 26.

The bandwidth (band width) may be jointly determined based on the uplink bandwidth subfield and the uplink bandwidth extension subfield. N may be obtained according to a formula: N = 2 × X1 + X0. For values of X1 and X0, refer to Table 27. Table 27 describes conversion from logic parameters PS160 and B0 to physical parameters X1 and X0. A frequency band configuration in Table 27 means an order of P80, S80, and S160 at an absolute frequency, and the order from left to right indicates an order from a lower frequency to a higher frequency, where P80 indicates a primary 80 MHz channel, S80 indicates a secondary 80 MHz channel, and S160 indicates a secondary 160 MHz channel.

**Table 26**

| PS160 subfield | Resource unit allocation subfield (B0) | Resource unit allocation subfield (B7 to B1) | Bandwidth (MHz) | RU or MRU size | RU or MRU index | Physical RU or MRU index |
|---|---|---|---|---|---|---|
| 0 to 3: indicating 80 MHz where the RU is located | | 0 to 8 | 20, 40, 80, 160, or 320 | 26 | RU 1 to RU 9, respectively | 37×N+RU index |
| | | 9 to 17 | 40, 80, 160, or 320 | | RU 10 to RU 18, respectively | |
| | | 18 | 80, 160, or 320 | | Reserved | |
| | | 19 to 36 | 80, 160, or 320 | | RU 20 to RU 37, respectively | |
| | | 37 to 40 | 20, 40, 80, 160, or 320 | 52 | RU 1 to RU 4, respectively | 16×N+RU index |
| | | 41 to 44 | 40, 80, 160, or 320 | | RU 5 to RU 8, respectively | |
| | | 45 to 52 | 80, 160, or 320 | | RU 9 to RU 16, respectively | |
| | | 53 and 54 | 20, 40, 80, 160, or 320 | 106 | RU 1 and RU 2, respectively | 8×N+RU index |
| | | 55 and 56 | 40, 80, 160, or 320 | | RU 3 and RU 4, respectively | |
| | | 57 to 60 | 80, 160, or 320 | | RU 5 to RU 8, respectively | |
| | | 61 | 20, 40, 80, 160, or 320 | 242 | RU 1 | 4×N+RU index |
| | | 62 | 40, 80, 160, or 320 | | RU 2 | |
| | | 63 and 64 | 80, 160, or 320 | | RU 3 and RU 4, respectively | |
| | | 65 | 40, 80, 160, or 320 | 484 | RU 1 | 2×N+RU index |
| | | 66 | 80, 160, or 320 | | RU 2 | |
| | | 67 | 80, 160, or 320 | 996 | RU 1 | N+RU index |
| 0 and 1: indicating 160 MHz where the RU is located | 0 | 68 | Reserved | | | Reserved |
| | 1 | | 160 or 320 | 2×996 | RU 1 | X1+RU index |
| 0 | 0 | 69 | Reserved | | | Reserved |
| 0 | 1 | | | | | |
| 1 | 0 | | | | | |
| 1 | 1 | | 320 | 4×996 | RU 1 | RU 1 |
| 0 to 3: indicating 80 MHz where the MRU is located | | 70 to 72 | 20, 40, 80, 160, or 320 | 52+26 | MRU 1 to MRU 3, respectively | 12×N+MR U index |
| | | 73 to 75 | 40, 80, 160, or 320 | 52+26 | MRU 4 to MRU 6, respectively | |
| | | 76 to 81 | 80, 160, or 320 | 52+26 | MRU 7 to MRU 12, respectively | |
| | | 82 and 83 | 20, 40, 80, 160, or 320 | 106+26 | MRU 1 and MRU 2, respectively | 8×N+MRU index |
| | | 84 and 85 | 40, 80, 160, or 320 | 106+26 | MRU 3 and MRU 4, respectively | |
| | | 86 to 89 | 80, 160, or 320 | 106+26 | MRU 5 to MRU 8, respectively | |
| | | 90 to 93 | 80, 160, or 320 | 484+242 | MRU 1 to MRU 4, respectively | 4×N+MRU index |
| 0 and 1: indicating 160 MHz where the MRU is located | 0 | 94 and 95 | 160 or 320 | 996+484 | MRU 1 and MRU 2, respectively | 4×X1+MR U index |
| | 1 | | | | MRU 3 and MRU 4, respectively | |
| 0 and 1: indicating 160 MHz where the MRU is located | 0 | 96 to 99 | 160 or 320 | 996+484 +242 | MRU 1 to MRU 4, respectively | 8×X1+MR U index |
| | 1 | | | | MRU 5 to MRU 8, respectively | |
| 0 | 0 | 100 to 103 | 320 | 2×996+4 84 | MRU 1 to MRU 4, respectively | MRU index |
| 0 | 1 | | | | MRU 5 and MRU 6, respectively | |
| 1 | 0 | | | | MRU 7 and MRU 8, respectively | |
| 1 | 1 | | | | MRU 9 to MRU 12, respectively | |
| 0 | 0 | 104 | 320 | 3×996 | MRU 1 | MRU index |
| 0 | 1 | | | | MRU 2 | |
| 1 | 0 | | | | MRU 3 | |
| 1 | 1 | | | | MRU 4 | |
| 0 | 0 | 105 and 106 | 320 | 3×996+484 | MRU 1 and MRU 2, respectively | MRU index |
| 0 | 1 | | | | MRU 3 and MRU 4, respectively | |
| 1 | 0 | | | | MRU 5 and MRU 6, respectively | |
| 1 | 1 | | | | MRU 7 and MRU 8, respectively | |
| Any (Any) | Any (Any) | 107 to 127 | Any (Any) | Reserved | Reserved | Reserved |
| Note: B0 of the resource unit allocation subfield is set to 0 to indicate that RU/MRU allocation applies to primary 80 MHz, and set to 1 to indicate that RU/MRU allocation applies to secondary 80 MHz in primary 160 MHz. B0 of the resource unit allocation subfield is set to 0 to indicate that RU/MRU allocation applies to lower 80 MHz, and set to 1 to indicate that RU/MRU allocation applies to higher 80 MHz in secondary 160 MHz. | | | | | | |

**Table 27**

| Bandwidth (MHz) | Logic inputs | | | Physical outputs | | |
|---|---|---|---|---|---|---|
| | Frequency band configuration | PS160 | B0 | X0 | X1 | N |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

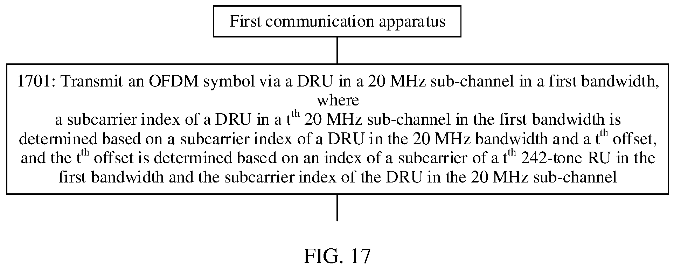

This application further provides a communication method, to determine a subcarrier index of a DRU in a t^{th} 20 MHz sub-channel in a first bandwidth. Details are specifically shown in FIG. 17.

Step 1701: A first communication apparatus transmits an OFDM symbol via a DRU in a 20 MHz sub-channel in a first bandwidth.

A subcarrier index of a DRU in a t^{th} 20 MHz sub-channel in the first bandwidth is determined based on a subcarrier index of a DRU in a 20 MHz bandwidth and a t^{th} offset, where t=1, 2, ..., T, and T is a number of 20 MHz sub-channels included in the first bandwidth.

For example, the first bandwidth is an 80 MHz bandwidth, the 80 MHz bandwidth may include four 20 MHz sub-channels, and T may be 4. Alternatively, the first bandwidth is a 160 MHz bandwidth, the 160 MHz bandwidth may include eight 20 MHz sub-channels, and T may be 8. The first bandwidth is a 320 MHz bandwidth, the 320 MHz bandwidth may include 16 20 MHz sub-channels, and T may be 16.

The t^{th} offset is determined based on a subcarrier index of a t^{th} 242-tone RU in the first bandwidth and a subcarrier index of the DRU in the 20 MHz bandwidth.

The t^{th} 242-tone RU corresponds to the t^{th} 20 MHz sub-channel.

The t^{th} 242-tone RU is a t^{th} 242-tone RU in 242-tone RUs arranged in ascending order in the first bandwidth. Similarly, the t^{th} 20 MHz sub-channel is a t^{th} 20 MHz sub-channel in the 20 MHz sub-channels arranged in ascending order in the first bandwidth.

For the subcarrier index of the DRU in the 20 MHz sub-channel, refer to the tone plan of the DRU in any 20 MHz bandwidth provided in the foregoing content, for example, the tone plan of the DRU in the 20 MHz bandwidth shown in Table 3. Details are not described herein again.

This application provides two possible designs for determining the t^{th} offset. In a first possible design, the t^{th} offset is a difference between a minimum value of subcarrier indices of the t^{th} 242-tone RU in the first bandwidth and a minimum value of subcarrier indices of the DRU in the 20 MHz bandwidth. In a second possible design, the t^{th} offset is a difference between a maximum value of subcarrier indices of the t^{th} 242-tone RU in the first bandwidth and a maximum value of subcarrier indices of the DRU in the 20 MHz bandwidth.

The following describes the first possible design.

The minimum value of the subcarrier indices of the t^{th} 242-tone RU in the first bandwidth may be understood as a 1^{st} subcarrier index of the t^{th} 242-tone RU in the first bandwidth.

For example, the first bandwidth is an 80 MHz bandwidth, and t is 1. The minimum value of the subcarrier indices of the t^{th} 242-tone RU in the first bandwidth may be -500. Alternatively, for example, the first bandwidth is an 80 MHz bandwidth, and t is 2. The minimum value of the subcarrier indices of the t^{th} 242-tone RU in the first bandwidth may be -253. Alternatively, for example, the first bandwidth is an 80 MHz bandwidth, and t is 3. The minimum value of the subcarrier indices of the t^{th} 242-tone RU in the first bandwidth may be 12. Alternatively, for example, the first bandwidth is an 80 MHz bandwidth, and t is 4. The minimum value of the subcarrier indices of the t^{th} 242-tone RU in the first bandwidth may be 259.

A minimum value of subcarrier indices of the DRU in the 20 MHz bandwidth may be understood as a 1^{st} subcarrier index of the DRU in the 20 MHz bandwidth.

For example, the minimum value of the subcarrier indices of the DRU in the 20 MHz bandwidth may be -120.

For example, the first bandwidth is an 80 MHz bandwidth, and the minimum value of the subcarrier indices of the DRU in the 20 MHz bandwidth is -120. It is assumed that t is 1, and the minimum value of the subcarrier indices of the t^{th} 242-tone RU in the first bandwidth may be -500. In this case, the 1^{st} offset may be -380 (that is, -500-(-120)). Alternatively, it is assumed that t is 2, and the minimum value of the subcarrier indices of the t^{th} 242-tone RU in the first bandwidth may be -253. In this case, the 2^{nd} offset may be -133 (that is, -253-(-120)). Alternatively, it is assumed that t is 3, and the minimum value of the subcarrier indices of the t^{th} 242-tone RU in the first bandwidth may be 12. In this case, the 3^{rd} offset may be 132 (that is, -12-(-120)). Alternatively, it is assumed that t is 4, and the minimum value of the subcarrier indices of the t^{th} 242-tone RU in the first bandwidth may be 259. In this case, the 4^{th} offset may be 379 (that is, 259-(-120)).

Based on the first possible design, because communication is performed based on the DRU, a 1^{st} subcarrier of the DRU in the 20 MHz bandwidth may be aligned with a 1^{st} subcarrier of the t^{th} 242-tone RU in the first bandwidth (or it is understood as that the subcarriers of the DRU in the 20 MHz bandwidth occupy first 241 subcarriers of the t^{th} 242-tone RU in the first bandwidth, or it is understood as that the DRU of the 20 MHz bandwidth is shifted by a-x subcarriers on the spectrum), to obtain the DRU in the 20 MHz distributed bandwidth. The t^{th} 242-tone RU corresponds to a t^{th} sub-channel, and subcarrier indices of a DRU in the t^{th} sub-channel are obtained by numbering subcarriers in the first bandwidth (for example, when the first bandwidth is an 80 MHz bandwidth, the subcarrier indices of the DRU in the t^{th} sub-channel are obtained by numbering 1024 subcarriers; when the first bandwidth is a 160 MHz bandwidth, the subcarrier indices of the DRU in the t^{th} sub-channel are obtained by numbering 2048 subcarriers; when the first bandwidth is a 320 MHz bandwidth, the subcarrier indices of the DRU in the t^{th} sub-channel are obtained by numbering 4096 subcarriers), and the subcarrier indices of the DRU in the 20 M distributed bandwidth are obtained by numbering 256 subcarriers in the 20 MHz bandwidth.

Based on the first possible design, this application provides three possible embodiments. An example in which the first bandwidth is an 80 MHz bandwidth is used.

In a first possible embodiment, for example, t is 2. A 2^{nd} sub-channel in the 80 MHz bandwidth may be considered as an independent 20 MHz bandwidth (256 subcarriers) for subcarrier numbering, and a range of subcarrier indices of the 2^{nd} sub-channel is [-128, 127]. Because a range of subcarrier indices of the 2^{nd} 242-tone RU is [-253, -12], the range of subcarrier indices of the 2^{nd} 242-tone RU may be converted into [-125, 116]. A DRU in the 2^{nd} 20 MHz sub-channel may occupy first 241 subcarriers in the 2^{nd} 242-tone RU, that is, the DRU in the 20 MHz bandwidth is shifted leftward by 5 on a spectrum. A subcarrier index of the shifted DRU in the 20 MHz bandwidth is a subcarrier index of the DRU in the 20 MHz bandwidth minus 5, that is, a range of the subcarrier indices of the shifted DRU in the 20 MHz bandwidth is [-125, 115], to obtain a tone plan of the shifted DRU in the 20 MHz bandwidth shown in Table 30. A range of the subcarrier indices of the shifted DRU in the 20 MHz bandwidth in the 80 MHz bandwidth may be [-253, -13]. Further, it may be determined that the 2^{nd} offset may be a difference between -253 and -120 (that is, the 2^{nd} offset is -133).

**Table 30**

| DRU type | DRU index and subcarrier range | | | | |
|---|---|---|---|---|---|
| 26-tone DRU i=1:9 | DRU 1 [-125:9:-17, 1:9:109] | DRU 2 [-121:9:-13, 5:9:113] | DRU 3 [-123:9:-15, 3:9:111] | DRU 4 [-119:9:-11, 7:9:115] | DRU 5 [-117:9:-9, 0:9:108] |
| | DRU 6 [-124:9:-16, 2:9:110] | DRU 7 [-120:9:-12, 6:9:114] | DRU 8 [-122:9:-14, 4:9:112] | DRU 9 [-118:9:-10, - 1:9:107] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-8, -2] | | 26-tone [DRU 6 to 9], [-7, -3] | | |

It can be learned from Table 30 that, when the 20 MHz-only station participates in communication, the DRU including the direct current subcarriers of the 20 MHz-only station needs to be disabled, that is, the DRU including the subcarriers whose subcarrier indices are -1, 0, and 1, that is, a 26-tone DRU 1, a 26-tone DRU 5, a 26-tone DRU 9, a 52-tone DRU 1, a 52-tone DRU 4, a 106-tone DRU 1, and a 106-tone DRU 2. For details, refer to the underlined part in Table 30.

The shift manner and disabling the DRU of the 20 MHz-only station in the first possible embodiment are applicable to the 2^{nd} 20 MHz sub-channel in the 80 MHz bandwidth, a 2^{nd} 20 MHz sub-channel in a lower-frequency 80 MHz sub-block in the 160 MHz bandwidth, a 2^{nd} 20 MHz sub-channel in a higher-frequency 80 MHz sub-block in the 160 MHz bandwidth, a 2^{nd} 20 MHz sub-channel in a lowest-frequency 80 MHz sub-block in the 320 MHz bandwidth, a 2^{nd} 20 MHz sub-channel in a lower-frequency 80 MHz sub-block in the 320 MHz bandwidth, a 2^{nd} 20 MHz sub-channel in a higher-frequency 80 MHz sub-block in the 320 MHz bandwidth, and a 2^{nd} 20 MHz sub-channel in a highest-frequency 80 MHz sub-block in the 320 MHz bandwidth.

In a second possible embodiment, for example, t is 3. A 3^{rd} sub-channel in the 80 MHz bandwidth may be considered as an independent 20 MHz bandwidth (256 subcarriers) for subcarrier numbering, and a range of subcarrier indices of the 3^{rd} sub-channel is [-128, 127]. Because a range of subcarrier indices of the 3^{rd} 242-tone RU is [12, 253], the range of subcarrier indices of the 3^{rd} 242-tone RU may be converted into [-116, 125]. A DRU in the 3^{rd} 20 MHz sub-channel may occupy first 241 subcarriers in the 3^{rd} 242-tone RU, that is, the DRU in the 20 MHz bandwidth is shifted rightward by 4 on a spectrum. A subcarrier index of the shifted DRU in the 20 MHz bandwidth is a subcarrier index of the DRU in the 20 MHz bandwidth plus 4, that is, a range of the subcarrier indices of the shifted DRU in the 20 MHz bandwidth is [-116, 124], to obtain a tone plan of the shifted DRU in the 20 MHz bandwidth shown in Table 31. A range of the subcarrier indices of the shifted DRU in the 20 MHz bandwidth in the 80 MHz bandwidth may be [12, 252]. Further, it may be determined that the 3^{rd} offset may be a difference between 12 and - 120 (that is, the 3^{rd} offset is 132).

**Table 31**

| DRU type | DRU index and subcarrier range | | | | |
|---|---|---|---|---|---|
| 26-tone DRU i=1:9 | DRU 1 [-116:9:-8, 10:9:118] | DRU 2 [-112:9:-4, 14:9:122] | DRU 3 [-114:9:-6, 12:9:120] | DRU 4 [-110:9:-2, 16:9:124] | DRU 5 [-108:9:0, 9:9:117] |
| | DRU 6 [-115:9:-7, 11:9:119] | DRU 7 [-111:9:-3, 15:9:123] | DRU 8 [-113:9:-5, 13:9:121] | DRU 9 [-109:9:-1, 8:9:116] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [1, 7] | | 26-tone [DRU 6 to 9], [2, 6] | | |

It can be learned from Table 31 that, when the 20 MHz-only station participates in communication, the DRU including the direct current subcarriers of the 20 MHz-only station needs to be disabled, that is, the DRU including the subcarriers whose subcarrier indices are -1, 0, and 1, that is, a 26-tone DRU 5, a 26-tone DRU 9, a 52-tone DRU 4, a 106-tone DRU 1, and a 106-tone DRU 2. For details, refer to the underlined part in Table 31.

The shift manner and disabling the DRU of the 20 MHz-only station in the second possible embodiment are applicable to the 3^{rd} 20 MHz sub-channel in the 80 MHz bandwidth, a 3^{rd} 20 MHz sub-channel in a lower-frequency 80 MHz sub-block in the 160 MHz bandwidth, a 3^{rd} 20 MHz sub-channel in a higher-frequency 80 MHz sub-block in the 160 MHz bandwidth, a 3^{rd} 20 MHz sub-channel in a lowest-frequency 80 MHz sub-block in the 320 MHz bandwidth, a 3^{rd} 20 MHz sub-channel in a lower-frequency 80 MHz sub-block in the 320 MHz bandwidth, a 3^{rd} 20 MHz sub-channel in a higher-frequency 80 MHz sub-block in the 320 MHz bandwidth, and a 3^{rd} 20 MHz sub-channel in a highest-frequency 80 MHz sub-block in the 320 MHz bandwidth.

In a third possible embodiment, for example, t is 4. A 4^{th} sub-channel in the 80 MHz bandwidth may be considered as an independent 20 MHz bandwidth (256 subcarriers) for subcarrier numbering, and a range of subcarrier indices of the 4^{th} sub-channel is [-128, 127]. Because a range of subcarrier indices of the 4^{th} 242-tone RU is [259, 500], the range of subcarrier indices of the 4^{th} 242-tone RU may be converted into [-125, 116]. A DRU in the 4^{th} 20 MHz sub-channel may occupy first 241 subcarriers in the 4^{th} 242-tone RU, that is, the DRU in the 20 MHz bandwidth is shifted leftward by 5 on a spectrum. A subcarrier index of the shifted DRU in the 20 MHz bandwidth is a subcarrier index of the DRU in the 20 MHz bandwidth minus 5, that is, a range of the subcarrier indices of the shifted DRU in the 20 MHz bandwidth is [-125, 115], to obtain a tone plan of the shifted DRU in the 20 MHz bandwidth shown in Table 30. A range of the subcarrier indices of the shifted DRU in the 20 MHz bandwidth in the 80 MHz bandwidth may be [259, 499]. Further, it may be determined that the 4^{th} offset may be a difference between 259 and -120 (that is, the 4^{th} offset is 379).

It can be learned from Table 30 that, when the 20 MHz-only station participates in communication, a 26-tone DRU 1, a 26-tone DRU 5, a 26-tone DRU 9, a 52-tone DRU 1, a 52-tone DRU 4, a 106-tone DRU 1, and a 106-tone DRU 2 need to be disabled. For details, refer to the underlined part in Table 30.

The shift manner and disabling the DRU of the 20 MHz-only station in the third possible embodiment are applicable to the 4^{th} 20 MHz sub-channel in the 80 MHz bandwidth, a 4^{th} 20 MHz sub-channel in a lower-frequency 80 MHz sub-block in the 160 MHz bandwidth, a 4^{th} 20 MHz sub-channel in a higher-frequency 80 MHz sub-block in the 160 MHz bandwidth, a 4^{th} 20 MHz sub-channel in a lowest-frequency 80 MHz sub-block in the 320 MHz bandwidth, a 4^{th} 20 MHz sub-channel in a lower-frequency 80 MHz sub-block in the 320 MHz bandwidth, a 4^{th} 20 MHz sub-channel in a higher-frequency 80 MHz sub-block in the 320 MHz bandwidth, and a 4^{th} 20 MHz sub-channel in a highest-frequency 80 MHz sub-block in the 320 MHz bandwidth.

In a second possible design, the t^{th} offset is a difference between a maximum value of subcarrier indices of the t^{th} 242-tone RU in the first bandwidth and a maximum value of subcarrier indices of the DRU in the 20 MHz bandwidth.

The maximum value of the subcarrier indices of the t^{th} 242-tone RU in the first bandwidth may be understood as a last subcarrier index of the t^{th} 242-tone RU in the first bandwidth.

For example, the first bandwidth is an 80 MHz bandwidth, and t is 1. The maximum value of the subcarrier indices of the t^{th} 242-tone RU in the first bandwidth may be -259. Alternatively, for example, the first bandwidth is an 80 MHz bandwidth, and t is 2. The maximum value of the subcarrier indices of the t^{th} 242-tone RU in the first bandwidth may be -12. Alternatively, for example, the first bandwidth is an 80 MHz bandwidth, and t is 3. The maximum value of the subcarrier indices of the t^{th} 242-tone RU in the first bandwidth may be 253. Alternatively, for example, the first bandwidth is an 80 MHz bandwidth, and t is 4. The maximum value of the subcarrier indices of the t^{th} 242-tone RU in the first bandwidth may be 500.

A maximum value of subcarrier indices of the DRU in the 20 MHz bandwidth may be understood as a last subcarrier index of the DRU in the 20 MHz bandwidth.

For example, the maximum value of the subcarrier indices of the DRU in the 20 MHz bandwidth may be 120.

For example, the first bandwidth is an 80 MHz bandwidth, and the maximum value of the subcarrier indices of the DRU in the 20 MHz bandwidth is 120. It is assumed that t is 1, and the maximum value of the subcarrier indices of the t^{th} 242-tone RU in the first bandwidth may be -259. In this case, the 1^{st} offset may be -379. Alternatively, it is assumed that t is 2, and the maximum value of the subcarrier indices of the t^{th} 242-tone RU in the first bandwidth may be -12. In this case, the 2^{nd} offset may be -132. Alternatively, it is assumed that t is 3, and the maximum value of the subcarrier indices of the t^{th} 242-tone RU in the first bandwidth may be 253. In this case, the 3^{rd} offset may be 133. Alternatively, it is assumed that t is 4, and the maximum value of the subcarrier indices of the t^{th} 242-tone RU in the first bandwidth may be 500. In this case, the 4^{th} offset may be 380.

Based on the second possible design, because communication is performed based on the DRU, a last subcarrier of the DRU in the 20 MHz bandwidth may be aligned with a last subcarrier of the t^{th} 242-tone RU in the first bandwidth (or it is understood as that the subcarriers of the DRU in the 20 MHz bandwidth occupy last 241 subcarriers of the t^{th} 242-tone RU in the first bandwidth, or it is understood as that the DRU of the 20 MHz bandwidth is shifted by b-y subcarriers on the spectrum), to obtain the DRU in the 20 MHz distributed bandwidth.

Based on the second possible design, this application provides three possible embodiments. An example in which the first bandwidth is an 80 MHz bandwidth is used.

In a first possible embodiment, for example, t is 2. A 2^{nd} sub-channel in the 80 MHz bandwidth may be considered as an independent 20 MHz bandwidth (256 subcarriers) for subcarrier numbering, and a range of subcarrier indices of the 2^{nd} sub-channel is [-128, 127]. Because a range of subcarrier indices of the 2^{nd} 242-tone RU is [-253, -12], the range of subcarrier indices of the 2^{nd} 242-tone RU may be converted into [-125, 116]. A DRU in the 2^{nd} 20 MHz sub-channel may occupy last 241 subcarriers in the 2^{nd} 242-tone RU, that is, the DRU in the 20 MHz bandwidth is shifted leftward by 4 on a spectrum. A subcarrier index of the shifted DRU in the 20 MHz bandwidth is a subcarrier index of the DRU in the 20 MHz bandwidth minus 4, that is, a range of the subcarrier indices of the shifted DRU in the 20 MHz bandwidth is [-124, 116], to obtain a tone plan of the shifted DRU in the 20 MHz bandwidth shown in Table 32. A range of the subcarrier indices of the shifted DRU in the 20 MHz bandwidth in the 80 MHz bandwidth may be [-252, -12]. Further, it may be determined that the 2^{nd} offset may be a difference between -12 and 120 (that is, the 2^{nd} offset is -132).

**Table 32**

| DRU type | DRU index and subcarrier range | | | | |
|---|---|---|---|---|---|
| 26-tone DRU i=1:9 | DRU 1 [-124:9:-16, 2:9:110] | DRU 2 [-120:9:-12, 6:9:114] | DRU 3 [-122:9:-14, 4:9:112] | DRU 4 [-118:9:-10, 8:9:116] | DRU 5 [-116:9:-8, 1:9:109] |
| | DRU 6 [-123:9:-15, 3:9:111] | DRU 7 [-119:9:-11, 7:9:115] | DRU 8 [-121:9:-13, 5:9:113] | DRU 9 [-117:9:-9, 0:9:108] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [-7, -1] | | 26-tone [DRU 6 to 9], [-6, -2] | | |

When the 20 MHz-only station participates in communication, the DRU including the direct current subcarriers of the 20 MHz-only station needs to be disabled, that is, the DRU including the subcarriers whose subcarrier indices are -1, 0, and 1, that is, a 26-tone DRU 5, a 26-tone DRU 9, a 52-tone DRU 4, a 106-tone DRU 1, and a 106-tone DRU 2. For details, refer to the underlined part in Table 32.

The shift manner and disabling the DRU of the 20 MHz-only station in the first possible embodiment are applicable to the 2^{nd} 20 MHz sub-channel in the 80 MHz bandwidth, a 2^{nd} 20 MHz sub-channel in a lower-frequency 80 MHz sub-block in the 160 MHz bandwidth, a 2^{nd} 20 MHz sub-channel in a higher-frequency 80 MHz sub-block in the 160 MHz bandwidth, a 2^{nd} 20 MHz sub-channel in a lowest-frequency 80 MHz sub-block in the 320 MHz bandwidth, a 2^{nd} 20 MHz sub-channel in a lower-frequency 80 MHz sub-block in the 320 MHz bandwidth, a 2^{nd} 20 MHz sub-channel in a higher-frequency 80 MHz sub-block in the 320 MHz bandwidth, and a 2^{nd} 20 MHz sub-channel in a highest-frequency 80 MHz sub-block in the 320 MHz bandwidth.

In a second possible embodiment, for example, t is 3. A 3^{rd} sub-channel in the 80 MHz bandwidth may be considered as an independent 20 MHz bandwidth (256 subcarriers) for subcarrier numbering, and a range of subcarrier indices of the 3^{rd} sub-channel is [-128, 127]. Because a range of subcarrier indices of the 3^{rd} 242-tone RU is [12, 253], the range of subcarrier indices of the 3^{rd} 242-tone RU may be converted into [-116, 125]. A DRU in the 3^{rd} 20 MHz sub-channel may occupy last 241 subcarriers in the 3^{rd} 242-tone RU, that is, the DRU in the 20 MHz bandwidth is shifted rightward by 5 on a spectrum. A subcarrier index of the shifted DRU in the 20 MHz bandwidth is a subcarrier index of the DRU in the 20 MHz bandwidth plus 5, that is, a range of the subcarrier indices of the shifted DRU in the 20 MHz bandwidth is [-115, 125], to obtain a tone plan of the shifted DRU in the 20 MHz bandwidth shown in Table 33. A range of the subcarrier indices of the shifted DRU in the 20 MHz bandwidth in the 80 MHz bandwidth may be [13, 253]. Further, it may be determined that the 3^{rd} offset may be a difference between 253 and 120 (that is, the 3^{rd} offset is 133).

**Table 33**

| DRU type | DRU index and subcarrier range | | | | |
|---|---|---|---|---|---|
| 26-tone DRU i=1:9 | DRU 1 [-115:9:-7, 11:9:119] | DRU 2 [-111:9:-3, 15:9:123] | DRU 3 [-113:9:-5, 13:9:121] | DRU 4 [-109:9:-1, 17:9:125] | DRU 5 [-107:9:1, 10:9:118] |
| | DRU 6 [-114:9:-6, 12:9:120] | DRU 7 [-110:9:-2, 16:9:124] | DRU 8 [-112:9:-4, 14:9:122] | DRU 9 [-108:9:0, 9:9:117] | |
| 52-tone DRU i=1:4 | DRU 1 | | DRU 2 | | |
| | 26-tone [DRU 1, DRU 2] | | 26-tone [DRU 3, DRU 4] | | |
| | DRU 3 | | DRU 4 | | |
| | 26-tone [DRU 6, DRU 7] | | 26-tone [DRU 8, DRU 9] | | |
| 106-tone DRU i=1:2 | DRU 1 | | DRU 2 | | |
| | 26-tone [DRU 1 to 4], [2, 8] | | 26-tone [DRU 6 to 9], [3, 7] | | |

When the 20 MHz-only station participates in communication, the DRU including the direct current subcarriers of the 20 MHz-only station needs to be disabled, that is, the DRU including the subcarriers whose subcarrier indices are -1, 0, and 1, that is, a 26-tone DRU 4, a 26-tone DRU 5, a 26-tone DRU 9, a 52-tone DRU 2, a 52-tone DRU 4, a 106-tone DRU 1, and a 106-tone DRU 2 are disabled. For details, refer to the underlined part in Table 33.

The shift manner and disabling the DRU of the 20 MHz-only station in the second possible embodiment are applicable to the 3^{rd} 20 MHz sub-channel in the 80 MHz bandwidth, a 3^{rd} 20 MHz sub-channel in a lower-frequency 80 MHz sub-block in the 160 MHz bandwidth, a 3^{rd} 20 MHz sub-channel in a higher-frequency 80 MHz sub-block in the 160 MHz bandwidth, a 3^{rd} 20 MHz sub-channel in a lowest-frequency 80 MHz sub-block in the 320 MHz bandwidth, a 3^{rd} 20 MHz sub-channel in a lower-frequency 80 MHz sub-block in the 320 MHz bandwidth, a 3^{rd} 20 MHz sub-channel in a higher-frequency 80 MHz sub-block in the 320 MHz bandwidth, and a 3^{rd} 20 MHz sub-channel in a highest-frequency 80 MHz sub-block in the 320 MHz bandwidth.

In a third possible embodiment, for example, t is 4. A 4^{th} sub-channel in the 80 MHz bandwidth may be considered as an independent 20 MHz bandwidth (256 subcarriers) for subcarrier numbering, and a range of subcarrier indices of the 4^{th} sub-channel is [-128, 127]. Because a range of subcarrier indices of the 4^{th} 242-tone RU is [259, 500], the range of subcarrier indices of the 4^{th} 242-tone RU may be converted into [-125, 116]. A DRU in the 4^{th} 20 MHz sub-channel may occupy last 241 subcarriers in the 4^{th} 242-tone RU, that is, the DRU in the 20 MHz bandwidth is shifted leftward by 4 on a spectrum. A subcarrier index of the shifted DRU in the 20 MHz bandwidth is a subcarrier index of the DRU in the 20 MHz bandwidth minus 4, that is, a range of the subcarrier indices of the shifted DRU in the 20 MHz bandwidth is [-124, 116], to obtain a tone plan of the shifted DRU in the 20 MHz bandwidth shown in Table 31. A range of the subcarrier indices of the shifted DRU in the 20 MHz bandwidth in the 80 MHz bandwidth may be [260, 500]. Further, it may be determined that the 4^{th} offset may be a difference between 500 and 120 (that is, the 4^{th} offset is 380).

It can be learned from Table 31 that, when the 20 MHz-only station participates in communication, a 26-tone DRU 5, a 26-tone DRU 9, a 52-tone DRU 4, a 106-tone DRU 1, and a 106-tone DRU 2 need to be disabled. For details, refer to the underlined part in Table 31.

The shift manner and disabling the DRU of the 20 MHz-only station in the third possible embodiment are applicable to the 4^{th} 20 MHz sub-channel in the 80 MHz bandwidth, a 4^{th} 20 MHz sub-channel in a lower-frequency 80 MHz sub-block in the 160 MHz bandwidth, a 4^{th} 20 MHz sub-channel in a higher-frequency 80 MHz sub-block in the 160 MHz bandwidth, a 4^{th} 20 MHz sub-channel in a lowest-frequency 80 MHz sub-block in the 320 MHz bandwidth, a 4^{th} 20 MHz sub-channel in a lower-frequency 80 MHz sub-block in the 320 MHz bandwidth, a 4^{th} 20 MHz sub-channel in a higher-frequency 80 MHz sub-block in the 320 MHz bandwidth, and a 4^{th} 20 MHz sub-channel in a highest-frequency 80 MHz sub-block in the 320 MHz bandwidth.

Based on the descriptions of the first possible design and the second possible design, when the first bandwidth and t are determined, different t^{th} offsets may be determined based on different possible designs. For example, the first bandwidth is 80 MHz. The first possible embodiment in the first possible design is compared with the first possible embodiment in the second possible design. When the 2^{nd} offset is -132, a number of DRUs that need to be disabled is smaller. Therefore, the 2^{nd} offset may be -132, preferably.

Alternatively, the second possible embodiment in the first possible design is compared with the second possible embodiment in the second possible design. When the 3^{rd} offset is 132, a number of DRUs that need to be disabled is smaller. Therefore, the 3^{rd} offset may be 132, preferably.

Alternatively, the third possible embodiment in the first possible design is compared with the third possible embodiment in the second possible design. When the 4^{th} offset is 380, a number of DRUs that need to be disabled is smaller. Therefore, the 4^{th} offset may be 380, preferably.

Similarly, the 1^{st} offset may be -380, preferably.

Based on the foregoing two possible designs, the first communication apparatus may determine the t^{th} offset, and then determine the subcarrier indices of the DRU in the t^{th} 20 MHz sub-channel in the first bandwidth based on the t^{th} offset and the subcarrier indices of the DRU in the 20 MHz bandwidth.

Specifically, the subcarrier index of the DRU in the t^{th} 20 MHz sub-channel in the first bandwidth may be a sum of the subcarrier index of the DRU in the 20 MHz bandwidth and the t^{th} offset. Alternatively, when the t^{th} offset is less than 0, the subcarrier index of the DRU in the t^{th} 20 MHz sub-channel in the first bandwidth may be a difference between the subcarrier index of the DRU in the 20 MHz bandwidth and an absolute value of the t^{th} offset.

For example, a subcarrier index of a DRU in the 20 MHz sub-channel may be a sum of the t^{th} offset and a subcarrier index of a DRU, in the 20 MHz bandwidth, whose sequential number is the same as that of the DRU in the 20 MHz sub-channel.

In other words, a subcarrier index of a 1^{st} DRU (or described as a DRU 1) in the t^{th} 20 MHz sub-channel is a sum of a subcarrier index of a 1^{st} DRU in the 20 MHz bandwidth and the t^{th} offset; a subcarrier index of a 2^{nd} DRU (or described as a DRU 2) in the t^{th} 20 MHz sub-channel is a sum of a subcarrier index of a 2^{nd} DRU in the 20 MHz bandwidth and the t^{th} offset; ...; a subcarrier index of an i^{th} DRU (or described as a DRU i) in the t^{th} 20 MHz sub-channel is a sum of a subcarrier index of an i^{th} DRU in the 20 MHz bandwidth and the t^{th} offset; ...; and a subcarrier index of an I^{th} DRU (or described as a DRU I) in the t^{th} 20 MHz sub-channel is a sum of a subcarrier index of an I^{th} DRU in the 20 MHz bandwidth and the t^{th} offset, where i=1, 2, ..., I, and I is a positive integer.

According to the communication method shown in FIG. 17, the subcarrier index of the DRU in the t^{th} 20 MHz sub-channel in the first bandwidth may be determined based on the t^{th} offset, so that a tone plan of the DRU in the t^{th} 20 MHz sub-channel complies with a spectrum mask of the first bandwidth, and an existing filter may be reused for implementation. This can improve communication performance.

It may be understood that the first communication apparatus may determine the t^{th} offset in the 160 MHz bandwidth based on the first possible design or the second possible design, and then determine the subcarrier index of the DRU in the t^{th} 20 MHz sub-channel in the 160 MHz bandwidth based on the subcarrier index of the DRU in the 20 MHz bandwidth and the t^{th} offset. Alternatively, the first communication apparatus may determine the t^{th} offset in the 320 MHz bandwidth based on the first possible design or the second possible design, and then determine the subcarrier index of the DRU in the t^{th} 20 MHz sub-channel in the 320 MHz bandwidth based on the subcarrier index of the DRU in the 20 MHz bandwidth and the t^{th} offset. Details are not described herein.

According to the communication method shown in FIG. 17, optionally, an absolute value of the t^{th} offset is equal to an absolute value of a (T+1-t)^{th} offset.

The t^{th} offset may be determined based on the first possible design or the second possible design, so that the absolute value of the t^{th} offset is equal to the absolute value of the (T+1-t)^{th} offset.

For example, the first bandwidth is an 80 MHz bandwidth. When t is 1, a 1^{st} offset 1 may be determined as -380 based on the first possible design, and a 1^{st} offset 2 may be determined as -379 based on the second possible design. When t is 2, a 2^{nd} offset 1 may be determined as - 133 based on the first possible design, and a 2^{nd} offset 2 may be determined as -132 based on the second possible design. When t is 3, a 3^{rd} offset 1 may be determined as 132 based on the first possible design, and a 3^{rd} offset 2 may be determined as 133 based on the second possible design. When t is 4, a 4^{th} offset 1 may be determined as 379 based on the first possible design, and a 4^{th} offset 2 may be determined as 380 based on the second possible design. Therefore, an absolute value of the 1^{st} offset may be equal to an absolute value of the 4^{th} offset, and an absolute value of the 2^{nd} offset may be equal to an absolute value of the 3^{rd} offset. For example, the 1^{st} offset may be -380, the 2^{nd} offset may be -132, the 3^{rd} offset may be 132, and the 4^{th} offset may be 380; or the 1^{st} offset may be -380, the 2^{nd} offset may be -133, the 3^{rd} offset may be 133, and the 4^{th} offset may be 380; or the 1^{st} offset may be -379, the 2^{nd} offset may be -132, the 3^{rd} offset may be 132, and the 4^{th} offset may be 379; or the 1^{st} offset may be -379, the 2^{nd} offset may be -133, the 3^{rd} offset may be 133, and the 4^{th} offset may be 379.

Based on the foregoing descriptions of the t^{th} offset, this application provides three possible embodiments.

In a first possible embodiment, for example, the first bandwidth is 80 MHz. The 1^{st} offset may be -380, the 2^{nd} offset may be -132, the 3^{rd} offset may be 132, and the 4^{th} offset may be 380.

In a second possible embodiment, for example, the first bandwidth is 160 MHz. The 1^{st} offset may be -892, the 2^{nd} offset may be -644, the 3^{rd} offset may be -380, the 4^{th} offset may be - 132, a 5^{th} offset may be 132, a 6^{th} offset may be 380, a 7^{th} offset may be 644, and an 8^{th} offset may be 892. When the first bandwidth is 160 MHz, for a manner of determining the offset, refer to the manner of determining the offset in the first bandwidth being 80 MHz. Details are not described herein again.

In a third possible embodiment, for example, the first bandwidth is 320 MHz. The 1^{st} offset may be -1916, the 2^{nd} offset may be -1668, the 3^{rd} offset may be -1404, the 4^{th} offset may be -1156, a 5^{th} offset may be -892, a 6^{th} offset may be -644, a 7^{th} offset may be -380, an 8^{th} offset may be -132, a 9^{th} offset may be 132, a 10^{th} offset may be 380, an 11^{th} offset may be 644, a 12^{th} offset may be 892, a 13^{th} offset may be 1156, a 14^{th} offset may be 1404, a 15^{th} offset may be 1668, and a 16^{th} offset may be 1916. When the first bandwidth is 320 MHz, for a manner of determining the offset, refer to the manner of determining the offset in the first bandwidth being 80 MHz. Details are not described herein again.

Based on the foregoing three possible embodiments, offsets corresponding to different 20 MHz sub-channels in the first bandwidth may be shown in Table 34.

**Table 34**

| First bandwidth (MHz) | t^{th} offset | | | |
|---|---|---|---|---|
| 80 | t=1 | t=2 | t=3 | t=4 |
| | -380 | -132 | 132 | 380 |
| 160 | t=1 | t=2 | t=3 | t=4 |
| | -892 | -644 | -380 | -132 |
| | t=5 | t=6 | t=7 | t=8 |
| | 132 | 380 | 644 | 892 |
| 320 | t=1 | t=2 | t=3 | t=4 |
| | -1916 | -1668 | -1404 | -1156 |
| | t=5 | t=6 | t=7 | t=8 |
| | -892 | -644 | -380 | -132 |
| | t=9 | t=10 | t=11 | t=12 |
| | 132 | 380 | 644 | 892 |
| | t=13 | t=14 | t=15 | t=16 |
| | 1156 | 1404 | 1668 | 1916 |

Optionally, the first communication apparatus may determine, according to the foregoing communication method, the t^{th} offset in the first bandwidth being a 160 MHz bandwidth or a 320 MHz bandwidth, and the first communication apparatus may further determine, based on the t^{th} offset of the first bandwidth being an 80 MHz bandwidth, a (t+q)^{th} offset in the first bandwidth being a 160 MHz bandwidth or a 320 MHz bandwidth.

When the first bandwidth is a 160 MHz bandwidth, q=0, 4. When the first bandwidth is a 320 MHz bandwidth, q=0, 4, 8, 12.

Optionally, the t^{th} offset in the first bandwidth being a 160 MHz bandwidth may be a sum of the t^{th} offset in the first bandwidth being an 80 MHz bandwidth and -512, and t=1, 2, 3, 4.

The t^{th} offset in the first bandwidth being a 160 MHz bandwidth may be understood as a t^{th} offset in a low 80 MHz sub-block in the 160 MHz bandwidth.

For example, the 1^{st} offset in the first bandwidth being an 80 MHz bandwidth is -380. In this case, the 1^{st} offset in the first bandwidth being a 160 MHz bandwidth may be -892. Alternatively, for example, the 2^{nd} offset in the first bandwidth being an 80 MHz bandwidth is - 132. In this case, the 2^{nd} offset in the first bandwidth being a 160 MHz bandwidth may be -644. Alternatively, for example, the 3^{rd} offset in the first bandwidth being an 80 MHz bandwidth is 132. In this case, the 3^{rd} offset in the first bandwidth being a 160 MHz bandwidth may be -380. Alternatively, for example, the 4^{th} offset in the first bandwidth being an 80 MHz bandwidth is 380. In this case, the 4^{th} offset in the first bandwidth being a 160 MHz bandwidth may be -132.

Optionally, a (t+4)^{th} offset in the first bandwidth being a 160 MHz bandwidth may be a sum of the t^{th} offset in the first bandwidth being an 80 MHz bandwidth and 512, and t=1, 2, 3, 4.

The (t+4)^{th} offset in the first bandwidth being a 160 MHz bandwidth may be understood as a t^{th} offset in a high 80 MHz sub-block in the 160 MHz bandwidth.

For example, the 1^{st} offset in the first bandwidth being an 80 MHz bandwidth is -380. In this case, the 5^{th} offset in the first bandwidth being a 160 MHz bandwidth may be 132. Alternatively, for example, the 2^{nd} offset in the first bandwidth being an 80 MHz bandwidth is - 132. In this case, the 6^{th} offset in the first bandwidth being a 160 MHz bandwidth may be 380. Alternatively, for example, the 3^{rd} offset in the first bandwidth being an 80 MHz bandwidth is 132. In this case, the 7^{th} offset in the first bandwidth being a 160 MHz bandwidth may be 644. Alternatively, for example, the 4^{th} offset in the first bandwidth being an 80 MHz bandwidth is 380. In this case, the 8^{th} offset in the first bandwidth being a 160 MHz bandwidth may be -892.

Optionally, the t^{th} offset in the first bandwidth being a 320 MHz bandwidth is a sum of the t^{th} offset in the first bandwidth being an 80 MHz bandwidth and -1536, and t=1, 2, 3, 4.

The t^{th} offset in the first bandwidth being a 320 MHz bandwidth may be understood as a t^{th} offset in a lowest 80 MHz sub-block in the 320 MHz bandwidth.

For example, the 1^{st} offset in the first bandwidth being an 80 MHz bandwidth is -380. In this case, the 1^{st} offset in the first bandwidth being a 320 MHz bandwidth may be -1916. Alternatively, for example, the 2^{nd} offset in the first bandwidth being an 80 MHz bandwidth is - 132. In this case, the 2^{nd} offset in the first bandwidth being a 320 MHz bandwidth may be -1668. Alternatively, for example, the 3^{rd} offset in the first bandwidth being an 80 MHz bandwidth is 132. In this case, the 3^{rd} offset in the first bandwidth being a 320 MHz bandwidth may be -1404. Alternatively, for example, the 4^{th} offset in the first bandwidth being an 80 MHz bandwidth is 380. In this case, the 4^{th} offset in the first bandwidth being a 320 MHz bandwidth may be -1156.

Optionally, a (t+4)^{th} offset in the first bandwidth being a 320 MHz bandwidth is a sum of the t^{th} offset in the first bandwidth being an 80 MHz bandwidth and -512, and t=1, 2, 3, 4.

The (t+4)^{th} offset in the first bandwidth being a 320 MHz bandwidth may be understood as a t^{th} offset in a lower 80 MHz sub-block in the 320 MHz bandwidth.

For example, the 1^{st} offset in the first bandwidth being an 80 MHz bandwidth is -380. In this case, the 5^{th} offset in the first bandwidth being a 320 MHz bandwidth may be -892. Alternatively, for example, the 2^{nd} offset in the first bandwidth being an 80 MHz bandwidth is - 132. In this case, the 6^{th} offset in the first bandwidth being a 320 MHz bandwidth may be -644. Alternatively, for example, the 3^{rd} offset in the first bandwidth being an 80 MHz bandwidth is 132. In this case, the 7^{th} offset in the first bandwidth being a 320 MHz bandwidth may be -380. Alternatively, for example, the 4^{th} offset in the first bandwidth being an 80 MHz bandwidth is 380. In this case, the 8^{th} offset in the first bandwidth being a 320 MHz bandwidth may be -132.

Optionally, a (t+8)^{th} offset in the first bandwidth being a 320 MHz bandwidth is a sum of the t^{th} offset in the first bandwidth being an 80 MHz bandwidth and 512, and t=1, 2, 3, 4.

The (t+8)^{th} offset in the first bandwidth being a 320 MHz bandwidth may be understood as a t^{th} offset in a higher 80 MHz sub-block in the 320 MHz bandwidth.

For example, the 1^{st} offset in the first bandwidth being an 80 MHz bandwidth is -380. In this case, the 9^{th} offset in the first bandwidth being a 320 MHz bandwidth may be 132. Alternatively, for example, the 2^{nd} offset in the first bandwidth being an 80 MHz bandwidth is - 132. In this case, the 10^{th} offset in the first bandwidth being a 320 MHz bandwidth may be 380. Alternatively, for example, the 3^{rd} offset in the first bandwidth being an 80 MHz bandwidth is 132. In this case, the 11^{th} offset in the first bandwidth being a 320 MHz bandwidth may be 644. Alternatively, for example, the 4^{th} offset in the first bandwidth being an 80 MHz bandwidth is 380. In this case, the 12^{th} offset in the first bandwidth being a 320 MHz bandwidth may be -892.

Optionally, a (t+12)^{th} offset in the first bandwidth being a 320 MHz bandwidth is a sum of the t^{th} offset in the first bandwidth being an 80 MHz bandwidth and 1536, and t=1, 2, 3, 4.

The (t+12)^{th} offset in the first bandwidth being a 320 MHz bandwidth may be understood as a t^{th} offset in a highest 80 MHz sub-block in the 320 MHz bandwidth.

For example, the 1^{st} offset in the first bandwidth being an 80 MHz bandwidth is -380. In this case, the 13^{th} offset in the first bandwidth being a 320 MHz bandwidth may be 1156. Alternatively, for example, the 2^{nd} offset in the first bandwidth being an 80 MHz bandwidth is - 132. In this case, the 14^{th} offset in the first bandwidth being a 320 MHz bandwidth may be 1404. Alternatively, for example, the 3^{rd} offset in the first bandwidth being an 80 MHz bandwidth is 132. In this case, the 15^{th} offset in the first bandwidth being a 320 MHz bandwidth may be 1668. Alternatively, for example, the 4^{th} offset in the first bandwidth being an 80 MHz bandwidth is 380. In this case, the 16^{th} offset in the first bandwidth being a 320 MHz bandwidth may be 1916.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that, in embodiments of this application, an execution body may perform all or a part of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is executed by hardware or hardware driven by computer software depends on particular applications and design constraint conditions of the technical solutions. A person skilled in the art may use different methods to implement the described functions for each specific application. However, it should not be considered that the implementation goes beyond the scope of this application.

In embodiments of this application, the devices may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

When each functional module is obtained through division based on each corresponding function, FIG. 13 shows a communication apparatus 130. The communication apparatus 130 may perform actions performed by the first communication apparatus in the methods shown in FIG. 8 to FIG. 12. All related content of steps in the foregoing method embodiments may be referenced in functional descriptions of corresponding functional modules. For technical effect that can be achieved by the communication apparatus 130, refer to the foregoing method embodiments. Details are not described herein again.

The communication apparatus 130 may include a transmission module 1301 and a processing module 1302. For example, the communication apparatus 130 may be a communication device, or may be a chip used in the communication device, or another combined device or component that has a function of a transmit end device.

When the communication apparatus 130 is a communication device, the transmission module 1301 may be a transceiver, and the processing module 1302 may be a processor (or a processing circuit), for example, a baseband processor. The baseband processor may include one or more CPUs.

When the communication apparatus 130 is a component that has a function of the transmit end device, the transmission module 1301 may be a radio frequency unit, and the processing module 1302 may be a processor (or a processing circuit), for example, a baseband processor.

When the communication apparatus 130 is a chip system, the transmission module 1301 may be an input/output interface of a chip (for example, a baseband chip), and the processing module 1302 may be a processor (or a processing circuit) of the chip system and may include one or more central processing units.

It should be understood that the transmission module 1301 in this embodiment of this application may be implemented by a transceiver or a transceiver-related circuit component, and the processing module 1302 may be implemented by a processor or a processor-related circuit component (or referred to as a processing circuit).

For example, the transmission module 1301 may be configured to perform all transmission operations performed by the first communication apparatus in the embodiments shown in FIG. 8 to FIG. 10, and/or configured to support another process of the technology described in this specification. The processing module 1302 is configured to control the transmission module 1301 to perform all transmission operations performed by the first communication apparatus in the embodiments shown in FIG. 8 to FIG. 10, and/or configured to support another process of the technology described in this specification.

In another possible implementation, the transmission module 1301 in FIG. 13 may be replaced with a transceiver, and a function of the transmission module 1301 may be integrated into the transceiver. The processing module 1302 may be replaced with a processor, and a function of the processing module 1302 may be integrated into the processor. Further, the communication apparatus 130 shown in FIG. 13 may further include a memory.

Alternatively, when the processing module 1302 is replaced with a processor, and the transmission module 1301 is replaced with a transceiver, the communication apparatus 130 in this embodiment of this application may alternatively be a communication apparatus 140 shown in FIG. 14. The processor may be a logic circuit 1401, and the transceiver may be an interface circuit 1402. Further, the communication apparatus 140 shown in FIG. 14 may further include a memory 1403.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or an internal memory of the terminal. The foregoing computer-readable storage medium may also be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for a purpose of description, and shall not be understood as an indication or implication of relative importance or implicit indication of a number of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. ''Multiple'' refers to two or more than two. "At least two (items)" means two, three, or more than three. The term "and/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

In this application, "sending information to ... (a terminal device)" may be understood as that a destination end of the information is the terminal device, and may include directly or indirectly sending the information to the terminal device; and "Receiving information from ... (a terminal device)" may be understood as that a source end of the information is the terminal device, and may include directly or indirectly receiving the information from the terminal device. Necessary processing may be performed on the information between the source end for sending the information and the destination end, for example, a format change. However, the destination end may understand valid information from the source end.

The foregoing descriptions about implementations allow a person skilled in the art to understand that, for the purpose of convenient and brief description, division into the foregoing functional modules is taken as an example for illustration. During actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiments are merely examples. For example, division into the modules or the units is merely logical function division and may be other division during actual implementation. For example, a plurality of units or components may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on actual requirements to achieve objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of this application essentially or all or a part of the technical solutions may be implemented in the form of a software product. The software product is stored in a storage medium and includes several instructions for instructing a device (which may be a single-chip microcomputer, a chip or the like) or a processor (processor) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

## Claims

1. A communication method, comprising:
transmitting an orthogonal frequency division multiplexing OFDM symbol via a distributed resource unit DRU in a 20 MHz distributed bandwidth in a first bandwidth, wherein
a subcarrier index of the DRU in the 20 MHz distributed bandwidth is a subcarrier index of a DRU in a 20 MHz bandwidth plus a-x, a is a number of guard subcarriers on a first side of the first bandwidth, x is a number of guard subcarriers on a first side of the 20 MHz bandwidth, and both a and x are positive integers; or
a subcarrier index of the DRU in the 20 MHz distributed bandwidth is a subcarrier index of a DRU in a 20 MHz bandwidth minus b-y, b is a number of guard subcarriers on a second side of the first bandwidth, y is a number of guard subcarriers on a second side of the 20 MHz bandwidth, and both b and y are positive integers.

2. The method according to claim 1, wherein
a is 12, b is 11, x is 8, and y is 7.

3. The method according to claim 1 or 2, wherein the transmitting the OFDM symbol via the DRU in the 20 MHz distributed bandwidth in the first bandwidth comprises:
transmitting the OFDM symbol via a DRU, in the 20 MHz distributed bandwidth, that does not comprise one or more of the following subcarriers: a subcarrier whose index is -1, a subcarrier whose index is 0, or a subcarrier whose index is 1.

4. A communication method, comprising:
transmitting an orthogonal frequency division multiplexing OFDM symbol via a distributed resource unit DRU in a 20 MHz distributed bandwidth in a first bandwidth, wherein
a subcarrier index of the DRU in the 20 MHz distributed bandwidth in an n^{th} area is a subcarrier index of a DRU in a 20 MHz bandwidth in an (n')^{th} area plus an n^{th} numerical value, n=n'=1, 2, ..., N, and N is a positive integer.

5. The method according to claim 4, wherein
a subcarrier index of the DRU in the 20 MHz distributed bandwidth in a 1^{st} area is a subcarrier index of the DRU in the 20 MHz bandwidth in a (1')^{st} area plus a-x;
a subcarrier index of the DRU in the 20 MHz distributed bandwidth in a 2^{nd} area is a subcarrier index of the DRU in the 20 MHz bandwidth in a (2')^{nd} area plus P; and
a subcarrier index of the DRU in the 20 MHz distributed bandwidth in a 3^{rd} area is a subcarrier index of the DRU in the 20 MHz bandwidth in a (3')^{rd} area plus Q, wherein
a is a number of guard subcarriers on a first side of the first bandwidth, x is a number of guard subcarriers on a first side of the 20 MHz bandwidth, and a, x, P, and Q are all positive integers.

6. The method according to claim 5, wherein
a is 12, x is 8, P is 7, and Q is 5.

7. The method according to claim 5 or 6, wherein
the 1^{st} area comprises an (a+1)^{th} subcarrier to a (T+a-x)^{th} subcarrier that are arranged in a frequency domain sequence in the 20 MHz distributed bandwidth, and the (1')^{st} area comprises an (x+1)^{th} subcarrier to a T^{th} subcarrier that are arranged in a frequency domain sequence in the 20 MHz bandwidth;
the 2^{nd} area comprises a (T+1+P)^{th} subcarrier to a (128-(K-1)/2+P)^{th} subcarrier that are arranged in a frequency domain sequence in the 20 MHz distributed bandwidth, and the (2')^{nd} area comprises a (T+1)^{th} subcarrier to a (128-(K-1)/2)^{th} subcarrier that are arranged in a frequency domain sequence in the 20 MHz bandwidth; and
the 3^{rd} area comprises a (130+(K-1)/2+Q)^{th} subcarrier to a (256-y+Q)^{th} subcarrier that are arranged in a frequency domain sequence in the 20 MHz distributed bandwidth, and the (3')^{rd} area comprises a (130+(K-1)/2)^{th} subcarrier to a (256-y)^{th} subcarrier that are arranged in a frequency domain sequence in the 20 MHz bandwidth, wherein
K is a number of direct current subcarriers in the 20 MHz bandwidth, y is a number of guard subcarriers on a second side of the 20 MHz bandwidth, and K, T, and y are all positive integers.

8. The method according to claim 7, wherein
T is 123, K is 3, and y is 7.

9. The method according to claim 4, wherein
a subcarrier index of the DRU in the 20 MHz distributed bandwidth in a 1^{st} area is a subcarrier index of the DRU in the 20 MHz bandwidth in a (1')^{st} area plus -Q;
a subcarrier index of the DRU in the 20 MHz distributed bandwidth in a 2^{nd} area is a subcarrier index of the DRU in the 20 MHz bandwidth in a (2')^{nd} area plus -P; and
a subcarrier index of the DRU in the 20 MHz distributed bandwidth in a 3^{rd} area is a subcarrier index of the DRU in the 20 MHz bandwidth in a (3')^{rd} area plus -(b-y), wherein
b is a number of guard subcarriers on a second side of the first bandwidth, y is a number of guard subcarriers on a second side of the 20 MHz bandwidth, and b, y, P, and Q are all positive integers.

10. The method according to claim 9, wherein
b is 11, y is 7, P is 7, and Q is 5.

11. The method according to claim 9 or 10, wherein
the 1^{st} area comprises an (x+1-Q)^{th} subcarrier to a (128-(K-1)/2-Q)^{th} subcarrier that are arranged in a frequency domain sequence in the 20 MHz distributed bandwidth, and the (1')^{st} area comprises an (x+1)^{th} subcarrier to a (128-(K-1)/2)^{th} subcarrier that are arranged in a frequency domain sequence in the 20 MHz bandwidth;
the 2^{nd} area comprises a (130+(K-1)/2-P)^{th} subcarrier to an (S-P)^{th} subcarrier that are arranged in a frequency domain sequence in the 20 MHz distributed bandwidth, and the (2')^{nd} area comprises a (130+(K-1)/2)^{th} subcarrier to an S^{th} subcarrier that are arranged in a frequency domain sequence in the 20 MHz bandwidth; and
the 3^{rd} area comprises an (S+1-b+y)^{th} subcarrier to a (256-b)^{th} subcarrier that are arranged in a frequency domain sequence in the 20 MHz distributed bandwidth, and the (3')^{rd} area comprises an (S+1)^{th} subcarrier to a (256-y)^{th} subcarrier that are arranged in a frequency domain sequence in the 20 MHz bandwidth, wherein
K is a number of direct current subcarriers in the 20 MHz bandwidth, x is a number of guard subcarriers on a first side of the 20 MHz bandwidth, and K, S, and x are all positive integers.

12. The method according to claim 11, wherein
S is 134, K is 3, and x is 8.

13. The method according to claim 4, wherein
a subcarrier index of the DRU in the 20 MHz distributed bandwidth in a 1^{st} area is a subcarrier index of the DRU in the 20 MHz bandwidth in a (1')^{st} area plus a-x; and
a subcarrier index of the DRU in the 20 MHz distributed bandwidth in a 2^{nd} area is a subcarrier index of the DRU in the 20 MHz bandwidth in a (2')^{nd} area plus a-x-K, wherein
a is a number of guard subcarriers on a first side of the first bandwidth, x is a number of guard subcarriers on a first side of the 20 MHz bandwidth, K is a number of direct current subcarriers in the 20 MHz bandwidth, and a, x, and K are all positive integers.

14. The method according to claim 13, wherein
a is 12, x is 8, and K is 3.

15. The method according to claim 13 or 14, wherein
the 1^{st} area comprises an (a+1)^{th} subcarrier to a (128-(K-1)/2+a-x)^{th} subcarrier that are arranged in a frequency domain sequence in the 20 MHz distributed bandwidth, and the (1')^{st} area comprises an (x+1)^{th} subcarrier to a (128-(K-1)/2)^{th} subcarrier that are arranged in a frequency domain sequence in the 20 MHz bandwidth; and
the 2^{nd} area comprises a (130+(K-1)/2+a-x-K)^{th} subcarrier to a (256-y+a-x-K)^{th} subcarrier that are arranged in a frequency domain sequence in the 20 MHz distributed bandwidth, and the (2')^{nd} area comprises a (130+(K-1)/2)^{th} subcarrier to a (256-y)^{th} subcarrier that are arranged in a frequency domain sequence in the 20 MHz bandwidth, wherein
y is a number of guard subcarriers on a second side of the 20 MHz bandwidth, and y is a positive integer.

16. The method according to claim 15, wherein
y is 7.

17. The method according to claim 4, wherein
a subcarrier index of the DRU in the 20 MHz distributed bandwidth in a 1^{st} area is a subcarrier index of the DRU in the 20 MHz bandwidth in a (1')^{st} area plus -(b-y-K); and
a subcarrier index of the DRU in the 20 MHz distributed bandwidth in a 2^{nd} area is a subcarrier index of the DRU in the 20 MHz bandwidth in a (2')^{nd} area plus -(b-y), wherein
b is a number of guard subcarriers on a second side of the first bandwidth, y is a number of guard subcarriers on a second side of the 20 MHz bandwidth, K is a number of direct current subcarriers in the 20 MHz bandwidth, and b, y, and K are all positive integers.

18. The method according to claim 17, wherein
b is 11, y is 7, and K is 3.

19. The method according to claim 17 or 18, wherein
the 1^{st} area comprises an (x+1-b+y+K)^{th} subcarrier to a (128-(K-1)/2-b+y+K)^{th} subcarrier that are arranged in a frequency domain sequence in the 20 MHz distributed bandwidth, and the (1')^{st} area comprises an (x+1)^{th} subcarrier to a (128-(K-1)/2)^{th} subcarrier that are arranged in a frequency domain sequence in the 20 MHz bandwidth; and
the 2^{nd} area comprises a (130+(K-1)/2-b+y)^{th} subcarrier to a (256-b)^{th} subcarrier that are arranged in a frequency domain sequence in the 20 MHz distributed bandwidth, and the (2')^{nd} area comprises a (130+(K-1)/2)^{th} subcarrier to a (256-y)^{th} subcarrier that are arranged in a frequency domain sequence in the 20 MHz bandwidth, wherein
x is a number of guard subcarriers on a first side of the 20 MHz bandwidth, and x is a positive integer.

20. The method according to claim 19, wherein
x is 8.

21. The method according to any one of claims 13 to 20, wherein
the DRU in the 20 MHz distributed bandwidth does not comprise a direct current subcarrier.

22. The method according to any one of claims 13 to 21, wherein the transmitting the OFDM symbol via the DRU in the 20 MHz distributed bandwidth in the first bandwidth comprises:
transmitting the OFDM symbol via a DRU, in the 20 MHz distributed bandwidth, that does not comprise one or more of the following subcarriers: a subcarrier whose index is -1, a subcarrier whose index is 0, or a subcarrier whose index is 1.

23. A communication method, comprising:
transmitting an orthogonal frequency division multiplexing OFDM symbol via a distributed resource unit DRU in a 20 MHz sub-channel in a first bandwidth, wherein
a subcarrier index of a DRU in a t^{th} 20 MHz sub-channel in the first bandwidth is determined based on a subcarrier index of a DRU in a 20 MHz bandwidth and a t^{th} offset, t=1, 2, ..., T, and T is a number of 20 MHz sub-channels comprised in the first bandwidth; and
the t^{th} offset is determined based on a subcarrier index of a t^{th} 242-tone RU in the first bandwidth and a subcarrier index of the DRU in the 20 MHz bandwidth.

24. The method according to claim 23, wherein
the t^{th} offset is a difference between a minimum value of subcarrier indices of the t^{th} 242-tone RU in the first bandwidth and a minimum value of subcarrier indices of the DRU in the 20 MHz bandwidth; or
the t^{th} offset is a difference between a maximum value of subcarrier indices of the t^{th} 242-tone RU in the first bandwidth and a maximum value of subcarrier indices of the DRU in the 20 MHz bandwidth.

25. The method according to claim 23 or 24, wherein
an absolute value of the t^{th} offset is equal to an absolute value of a (T+1-t)^{th} offset.

26. The method according to any one of claims 23 to 25, wherein the first bandwidth is an 80 MHz bandwidth;
the 2^{nd} offset is -132; and
the 4^{th} offset is 380.

27. The method according to any one of claims 23 to 25, wherein the first bandwidth is a 160 MHz bandwidth;
the 2^{nd} offset is -644;
the 4^{th} offset is -132;
the 6^{th} offset is 380; and
the 8^{th} offset is 892.

28. The method according to any one of claims 23 to 25, wherein the first bandwidth is a 320 MHz bandwidth;
the 2^{nd} offset is -1668;
the 4^{th} offset is -1156;
the 6^{th} offset is -644;
the 8^{th} offset is -132;
the 10^{th} offset is 380;
the 12^{th} offset is 892;
the 14^{th} offset is 1404; and
the 16^{th} offset is 1916.

29. The method according to any one of claims 23 to 25, wherein
the t^{th} offset in the first bandwidth being a 160 MHz bandwidth is a sum of the t^{th} offset in the first bandwidth being an 80 MHz bandwidth and -512, and t=1, 2, 3, 4.

30. The method according to any one of claims 23 to 25 and 29, wherein
a (t+4)^{th} offset in the first bandwidth being the 160 MHz bandwidth is a sum of the t^{th} offset in the first bandwidth being the 80 MHz bandwidth and 512, and t=1, 2, 3, 4.

31. The method according to any one of claims 23 to 25, 29, and 30, wherein
the t^{th} offset in the first bandwidth being a 320 MHz bandwidth is a sum of the t^{th} offset in the first bandwidth being the 80 MHz bandwidth and -1536, and t=1, 2, 3, 4.

32. The method according to any one of claims 23 to 25 and 29 to 31, wherein
the (t+4)^{th} offset in the first bandwidth being the 320 MHz bandwidth is the sum of the t^{th} offset in the first bandwidth being the 80 MHz bandwidth and -512, and t=1, 2, 3, 4.

33. The method according to any one of claims 23 to 25 and 29 to 32, wherein
a (t+8)^{th} offset in the first bandwidth being the 320 MHz bandwidth is the sum of the t^{th} offset in the first bandwidth being the 80 MHz bandwidth and 512, and t=1, 2, 3, 4.

34. The method according to any one of claims 23 to 25 and 29 to 34, wherein
a (t+12)^{th} offset in the first bandwidth being the 320 MHz bandwidth is a sum of the t^{th} offset in the first bandwidth being the 80 MHz bandwidth and 1536, and t=1, 2, 3, 4.

35. A communication apparatus, comprising a module or a unit configured to perform the communication method according to any one of claims 1 to 3, or a module or a unit configured to perform the communication method according to any one of claims 4 to 22, or a module or a unit configured to perform the communication method according to any one of claims 23 to 34.

36. A communication apparatus, wherein the communication apparatus comprises one or more transceivers, and a processor controls the transceiver to perform the communication method according to any one of claims 1 to 3, or the communication method according to any one of claims 4 to 22, or the communication method according to any one of claims 23 to 34.

37. The communication apparatus according to claim 36, wherein
the communication apparatus further comprises a memory, and the memory is configured to store a computer program or instructions.

38. A communication apparatus, wherein the communication apparatus comprises an interface circuit, and a logic circuit controls the interface circuit to perform the communication method according to any one of claims 1 to 3, or the communication method according to any one of claims 4 to 22, or the communication method according to any one of claims 23 to 34.

39. A computer-readable storage medium, wherein the computer-readable storage medium stores computer instructions or a program, and when the computer instructions or the program is run on a computer, the communication method according to any one of claims 1 to 3 is performed, or the communication method according to any one of claims 4 to 22 is performed, or the communication method according to any one of claims 23 to 34 is performed.

40. A computer program product, wherein the computer program product comprises computer instructions, and when all or a part of the computer instructions are run on a computer, the communication method according to any one of claims 1 to 3 is performed, or the communication method according to any one of claims 4 to 22 is performed, or the communication method according to any one of claims 23 to 34 is performed.
